# EUROPEAN PATENT APPLICATION

(11) **EP 1 840 148 A1**
(43) Date of publication of application: **03.10.2007**
(21) Application number: 05811468.7
(22) Date of filing: 29.11.2005
(51) Int. Cl.: C08G 59/24, C09D 11/00, B41J 2/01

(54) **POLYMERIZABLE ACTINIC RADIATION CURABLE COMPOSITION, POLYMERIZATION METHOD, ACTINIC RADIATION CURABLE INK AND IMAGE FORMATION METHOD, AND INK JET RECORDING APPARATUS AND EPOXY COMPOUND**

(30) Priority: 21.01.2005 JP 2005013899; 18.05.2005 JP 2005145224
(71) Applicant: Konica Minolta Medical & Graphic, Inc., Tokyo 163-0512 (JP)
(72) Inventor: SASA, Nobumasa, Konica Minolta Med. & Grap., Inc., Hachioji-shi, Tokyo 192-8505 (JP); OOKUBO, Kimihiko, Konica Minolta Tech. Ctr., Inc, Hachioji-shi, Tokyo 192-8505 (JP); MIURA, Norio, Konica Minolta Tech. Ctr., Inc., Hachioji-shi, Tokyo 192-8505 (JP); KURATA, Takeshi, Konica Minolta Tech. Ctr., Inc., Hachioji-shi, Tokyo 192-8505 (JP)
(74) Representative: McCluskie, Gail Wilson
(86) International application number: PCT/JP2005/021866
(87) International publication number: WO 2006/077693

(57) **Abstract**

A polymerizable actinic radiation curable composition comprising a photo-acid generating compound and an epoxy compound represented by Formula (1): 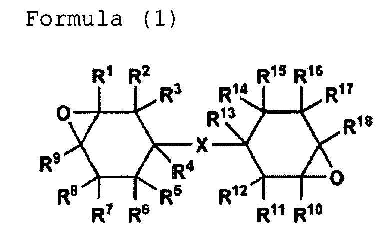 wherein X represents a divalent group selected form the group consisting of -O-, -S-, -SO-, SO₂- -CBr₂-, -C(CBr₃)₂-, and -C(CF₃)₂-; R¹ to R¹⁸ each independently represent a hydrogen atom, a halogen atom, a hydrocarbon group having 1-8 carbon atoms, provided that the hydrocarbon group may contain an oxygen atom or a halogen atom, or a substituted or unsubstituted alkoxy group having 1-8 carbon atoms.

## Description

### TECHNICAL FIELD

The present invention relates to a polymerizable actinic radiation curable composition, an actinic radiation curable ink and an image forming method, and further relates to a polymerizable actinic radiation curable composition which has low viscosity, can be cured with high sensitivity and without influence of environmental humidity, and is excellent in adhesion of a cured film to a substrate material, hardness and flexibility of the film, and light fastness of the film (no significant coloring of the film upon exposure to light and no significant deterioration in mechanical strength of the film), an actinic radiation curable ink containing the composition and an image forming method using the ink.

The invention relates to a polymerizable composition, a polymerization method, a polymerizable ink, an image forming method and image forming apparatus using the ink, and further relates to a polymerizable composition curable by an actinic radiation which has low viscosity and excellent curing ability, despite no significant odor and significant irritation, and is capable of forming a layer having sufficient contacting ability and hardness and holding sufficient hardness and flexibility during a prolonged storage period, a polymerization method and an actinic radiation curable ink using the composition, an image forming method and an ink jet recording apparatus.

### BACKGROUND ART

Hitherto, compositions curable by an actinic energy radiation such as UV rays and electron rays or heat are practically used in various uses such as paints for plastics, paper, wood or inorganic materials, adhesives, printing inks, printed circuit board and electric insulator. Among them, the weather resistivity and the contacting ability to substrate are recently required to be improved in the field of use of the printing ink, the paint and the adhesive. As the actinic radiation curable ink containing such composition, a UV curable ink capable of being cured by UV rays is used. Ink jet systems using such ink is recently noticed because the ink has relatively low odor and fast drying ability, and is capable of recording on media having no ink absorbability and UV curable ink-jet inks are disclosed; for example, cf. Patent Documents 1 and 2. In this field, it is required to the ink that the layer formed by the ink is stronger and flexible additionally to low viscosity. It is disclosed that plasticity can be given to the ink by adding a plasticizer; for example, cf. Patent Document 3. However, such disclosure is as to a melting type ink, and there is no description relating to the UV curable ink-jet ink using a solvent type ink.

A problem is caused that the sensitivity of curing is varied depending on the kind of the recording material and the working environment when such ink is used.

Curing of an ink using a radical polymerizable compound tends to be hindered when the volume of the ink droplet is small because the ink is received hindrance effect of by oxygen. Besides, an ink using a cation polymerizable compound (for example, cf. Patent Documents 4 to 7) has a problem that the ink is easily influenced by water molecules (humidity) though the ink is not receive the hindrance effect of oxygen. Moreover the cured layer is insufficient in the contacting ability of the cured layer to the substrate, hardness and flexibility of the layer. Particularly, it has a shortcoming that the light fastness of the cured layer is low.

Compatibility of the low viscosity and high curing ability is insufficient in usual cation polymerizable UV curable composition, and a cationic polymerizable UV curable ink-jet ink using a cation UV curable composition with relatively high viscosity causes a problem that the quality of formed image is influenced by mist caused by satellite which tends to be increased accompanied with prolongation of the length of the ejected ink droplet.
Patent Document 1: JP-A 6-200204 (Claims and Examples)
Patent Document 2: JP-A 2000-504778 (Claims and Examples)
Patent Document 3: JP-A 8-3493 (Claims and Examples)
Patent Document 4: JP-A 2001-220526 (Claims and Examples)
Patent Document 5: JP-A 2002-188025 (Claims and Examples)
Patent Document 6: JP-A 2002-317139 (Claims and Examples)
Patent Document 7: JP-A 2002-55449 (Claims and Examples)

### DISCLOSURE OF THE INVENTION

### PROBLEMS TO BE SOLVED BY THE INVENTION

The invention is attained on the above problems, and the first object of the invention is to provide an actinic radiation curable composition which is low in the viscosity and curable with high sensitivity and without influence of the environmental humidity, and excellent in the contacting ability of the cured layer to the substrate, the hardness, the flexibility and the light fastness (coloring and deterioration in the mechanical strength of the layer by light irradiation are small), an actinic radiation curable ink, hereinafter simply referred to as an ink, containing the actinic radiation curable composition and an image forming apparatus using the ink. The second object of the invention is to provide a polymerizable composition capable of forming a layer suitable for stably printing images under various conditions, particularly under high humidity atmosphere; the layer is excellent in the storage ability and has high hardness and holds sufficient hardness and flexibility before and after prolonged storage period in spite of the composition is low in the odor and the irritating ability, a polymerizable ink using the composition, an image forming method, an ink-jet recording apparatus and an epoxy compound.

### MEANS TO SOLVE THE PROBLEMS

The above objects of the invention can be attained by the following constitution.
(1) A polymerizable actinic radiation curable composition containing an epoxy compound represented by the following Formula (1) and a photo-acid generating compound. 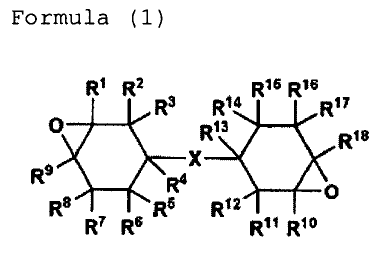 (In the formula, X is a di-valent group selected from the group consisting of an oxygen atom, a sulfur atom an -SO-group, an -SO₂- group, a -CBr₂- group, a -C(CBr₃)₂- group and a -C(CF₃)₂- group. R¹ to R¹⁸ may be the same or different and represent a hydrogen atom, a halogen atom or a hydrocarbon group having 1 to 8 carbon atoms which may have a oxygen atom or a halogen atom, or an alkoxy group having 1 to 8 carbon atoms which may have a substituent.)
(2) The polymerizable actinic radiation curable composition described in the above (1), wherein at least one kind of epoxy compounds represented by the following Formula (2) is contained. 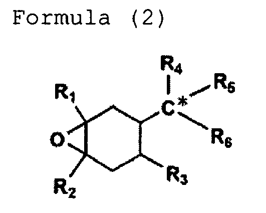 (In the formula, R₁ and R₂ are each a hydrogen atom or an alkyl group which may be the same or different. R₃ is a hydrogen atom, a halogen atom or a substituent. R₄, R₅ and R₆ are each a hydrogen atom, a halogen atom or a substituent bonded to the carbon atom represented by C* through a carbon atom, a nitrogen atom or a sulfur atom. Provided that at least one of R₄, R₅ and R₆ is a hydrogen atom.)
(3) The polymerizable actinic radiation curable composition described in the above (1) or (2), wherein an oxetane compound is contained.
(4) The polymerizable actinic radiation curable composition described in any one of the above (1) to (3), wherein the above photo-acid generating compound is an onium salt compound.
(5) The polymerizable actinic radiation curable composition described in any one of the above (1) to (4), wherein the above photo-acid generating compound is a sulfonium salt compound.
(6) The polymerizable actinic radiation curable composition described in any one of the above (1) to (5),. wherein the above photo-acid generating compound is a sulfonium salt compound represented by the following Formula (I-1). 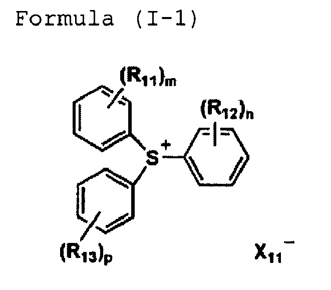 (In the formula, R₁₁, R₁₂ and R₁₃ are each a substituent and m, n and p are each an integer of 0 to 2. X⁻₁₁ is a counter ion.)
(7) An actinic radiation curable ink containing the polymerizable actinic radiation curable composition described in any one of the above (1) to (6).
(8) The actinic radiation curable ink described in the above (7), wherein the viscosity at 25 °C is from 7 to 40 mPa·s.
(9) The actinic radiation curable ink described in the above (7) or (8), wherein a pigment is contained.
(10) An image forming method for printing an image on a recording medium by imagewise ejecting the actinic radiation curable ink described in any one of the above (7) to (9) onto the recording medium from an ink-jet recording head, wherein the actinic radiation curable ink is cured by irradiating actinic radiation at a time within 0.001 to 1.0 seconds after landing the actinic radiation curable ink onto the recording medium.
(11) An image forming method for printing an image on a recording medium by imagewise ejecting the actinic radiation curable ink described in any one of the above (7) to (9) onto the recording medium from an ink-jet recording head, wherein the minimum volume of the ink droplet ejected from each of the nozzles of the ink-jet recording head is from 2 to 15 pl.
   The above second object of the invention is attained by the following constitution.
(12) A polymerizable actinic radiation curable composition containing at least one kind of compound represented by Formula (X). 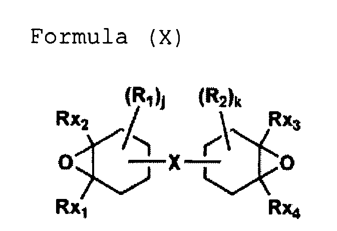 (In the formula, Rx₁, Rx₂, Rx₃ and Rx₄ are each a hydrogen atom or an alkyl group, R₁ and R₂ are each a substituent, X is an oxygen atom, a sulfur atom, a -CR₃(R₄)-group, an -SO- group, an -SO₂- group, a -CO- group, a -CS-group or a linking group constituted by an optional combination of them, R₃ and R₄ are each a hydrogen atom or a substituent, and j and k are each an integer of from 0 to 3. Provided that Rx₁ and Rx₂ are not hydrogen atoms at the same time and Rx₃ and R_{X4} are not hydrogen atoms at the same time.)
(13) The polymerizable actinic radiation curable composition described in the above (12), wherein the viscosity at 25 °C is from 1 to 500 mPa·s.
(14) The polymerizable actinic radiation curable composition described in the above (12) or (13), wherein at least one oxetane compound is contained.
(15) The polymerizable actinic radiation curable composition described in the above (14), wherein the oxetane compound is an oxetane compound having no substituent at the 2-posion of the oxetane ring.
(16) The polymerizable actinic radiation curable composition described in the above (14) or (15), wherein the oxetane compound having no substituent at the 2-posion of the oxetane ring is a multi-functional oxetane compound having two or more oxetane rings.
(17) The polymerizable actinic radiation curable composition described in the above (12) to (16), wherein at least one kind of epoxy compound represented the following Formula (A). 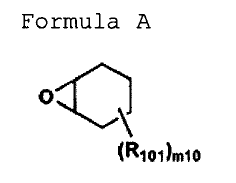 (In the formula R₁₀₁ is a substituent not containing any cationic polymerizable or radical polymerizable functional group and m10 is an integer of 1, 2, 3 or 4.)
(18) The polymerizable actinic radiation curable composition described in the above (12) to (17), wherein a polymerization initiator is contained.
(19) The polymerizable actinic radiation curable composition described in the above (18), wherein the polymerization initiator is a photo-acid generating compound.
(20) The polymerizable actinic radiation curable composition described in the above (19), wherein the photo-acid generating compound is an onium salt compound.
(21) The polymerizable actinic radiation curable composition described in the above (19) or (20), wherein the photo-acid generating compound is a sulfonium salt compound.
(22) A polymerization method wherein the polymerizable actinic radiation curable composition described in any one of the above (12) to (21) is polymerized by heating or actinic radiation.
(23) An actinic radiation curable ink containing the polymerizable actinic radiation curable composition described in any one of the above (12) to (21).
(24) The actinic radiation curable ink described in the above (23), wherein the viscosity at 25 °C is from 7 to 40 mPa·s.
(25) An image forming method for printing an image on a recording medium by imagewise ejecting the actinic radiation curable ink described in any one of the above (23) or (24) onto the recording medium from an ink-jet recording head, wherein the actinic radiation curable ink is cured by irradiating actinic radiation at a time within 0.001 to 1.0 seconds after landing the actinic radiation curable ink onto the recording medium.
(26) An image forming method for printing an image on a recording medium by imagewise ejecting the actinic radiation curable ink described in any one of the above (23) or (24) onto the recording medium from an ink-jet recording head, wherein the minimum volume of the ink droplet ejected from each of the nozzles of the ink-jet recording head is from 2 to 15 pl.
(27) An ink-jet recording apparatus to be used in the image forming method described in the above (25) or (26), wherein the ejection is carried out after heating the actinic radiation curable ink and the recording heat at a temperature of from 35 to 100 °C.
(28) An ink-jet recording apparatus to be used in the image forming method described in the above (25) or (26), wherein the recording medium can be heated at a temperature of from 35 to 60 °C on the occasion of ejection.
(29) An epoxy compound represented by the following Formula (XX). 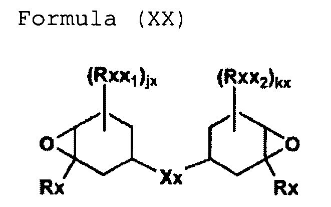 (In the formula, Rx, Rxx₁ and Rxx₂ are each an alkyl group, Xx is an oxygen atom or a -CRxx₃(Rxx₄)- group, Rxx₃ and Rxx₄ are each a hydrogen atom or an alkyl group, and jx and kx are each an integer of from 0 to 3.)
(30) An epoxy compound represented by the following Formula (XX-2). 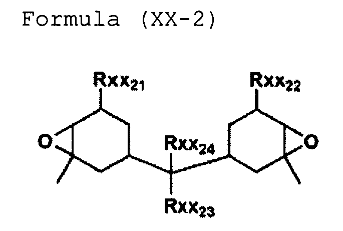 (In the formula, Rxx₂₁ and Rxx₂₂ are each a hydrogen atom or an alkyl group having 1 to 4 carbon atoms, and Rxx₂₃ and Rxx₂₄ are each a hydrogen atom or an alkyl group.)

### EFFECT OF THE INVENTION

The actinic radiation curable composition which is low in the viscosity and curable with high sensitivity and without influence of the environmental humidity, and excellent in the contacting ability of the cured layer to the substrate, the hardness, the flexibility and the light fastness (coloring and deterioration in the mechanical strength of the layer by light irradiation are small), the actinic radiation curable ink, hereinafter simply referred to as an ink, containing the actinic radiation curable composition and the image forming apparatus using the ink as the first object of the invention can be provided by the invention of Claims 1 to 11.

The polymerizable composition capable of forming a layer suitable for stably printing images under various conditions, particularly under high humidity atmosphere, and the layer is excellent in the storage ability and has high hardness and holds sufficient hardness and flexibility before and after prolonged storage period in spite of the composition is low in the odor and the irritating ability, the polymerizable ink using the composition, the image forming method, the ink-jet recording apparatus and the epoxy compound as the second object of the invention can be provided by the invention of Claims 12 to 30.

### BRIEF DESCRIPTION OF THE DRAWINGS

Fig. 1 shows principal portions of an ink-jet recording apparatus to be used in the invention.
Fig. 2 shows principal portions of another ink-jet recording apparatus to be used in the invention.

### DESCRIPTION OF THE DESIGNATIONS

1: Ink-jet recording apparatus
2: Head carriage
3: Recording head
4: Irradiation means
5: Platen
6: Guide
7: Bellows structure
P: Recording medium

### THE PREFERRED EMBODIMENTS TO CARRY OUT THE INVENTION

As a result of investigation by the inventors as to the first object of the invention, it is found that a composition which is low in the viscosity and capable of curing with high sensitivity by a low illuminance radiation source without the influence of the environmental humidity to form a layer having high contacting ability to the substrate, high hardness and high flexibility can be obtained by the use of the actinic radiation curable composition containing an alicyclic epoxy compound represented by Formula (1), and the invention relating to Claims 1 to 11 is attained. In the invention relating to Claims 1 to 11, advantages that the sensitivity is further raised and deterioration of the mechanical strength of the cured layer is made small by using the alicyclic epoxy compound represented by Formula (1) and that represented by Formula (2) in combination. In the invention, the additionally use of the oxetane causes an advantage that influence of the environmental humidity is inhibited and curing can be at high sensitivity.

In the invention relating to Claims 1 to 11, it is preferable to contain the photo-acid generating compound for raising the curing sensitivity, and the photo-acid generating compound is preferably an onium salt compound, particularly a sulfonium salt compound represented by the foregoing Formula (I-1). It is also cleared that the sulfonium salt compound has a superior effect of inhibiting the coloring of the cured layer by light irradiation. The ink of the invention containing the actinic radiation curable composition realizes excellent curing activity in various uses of printing inks, and the ink having a viscosity at 25 °C of from 7 to 40 mPa·s is preferable for stabilizing the ejection of droplets from the head in the ink-jet use. The viscosity is more preferably from 7 to 20 mPa·s.

The invention relating to Claims 1 to 11 is described in detail below. First, the epoxy compound represented by Formula (1) is described in detail.

In Formula (1), X is a di-valent group selected from the group consisting of a oxygen atom, a sulfur atom, an -SO-group, an -SO₂- group, a -CBr₂- group, a -C(CBr₃)- group and a -C(CF₃)₂- group.

R¹ to R¹⁸ may be the same of different, which are each a hydrogen atom, a halogen atom, a hydrocarbon group which may have an oxygen atom or a halogen atom, or an alkoxy group which may have a substituent. R¹ and R⁹ are each not a hydrogen atom at the same time and it is preferable that one of them is a hydrogen atom and the other is an alkyl group, preferably a methyl group, for rising the safeness and the stability of the epoxy compound and the actinic radiation curable composition. Similarly, it is preferable that R¹⁰ and R¹⁸ are each not a hydrogen atom at the same time and one of them is a hydrogen atom and the other is an alkyl, preferably a methyl, group. Such compounds can be synthesized referring the following documents.

JP-A 2004-99467
Neftekhimia; vol. 12, p. 353 Jikken Kagaku Koza 20, Yuuki Gousei II (Experimental Chemistry Course 20, Organic Synthesis II) 4th Edition, p.213-, (1992), Maruzen KK Shuppan Ed. By Alfred Hafsner; The Chemistry of Heterocyclic Compounds, Small Ring Heterocycles part 3, Oxiranes, John & Wiley and Sons, An Interscience Publication, New York, 1985
Yoshimura, Secchaku (Adhesion) Vol. 29, No. 12, 32
Yoshimura, Secchaku (Adhesion) Vol. 30, No. 5, 42
Yoshimura, Secchaku (Adhesion) Vol. 30, No. 7, 42
Concrete examples of the compound represented by Formula (1) are shown below, but the invention is not limited to them.

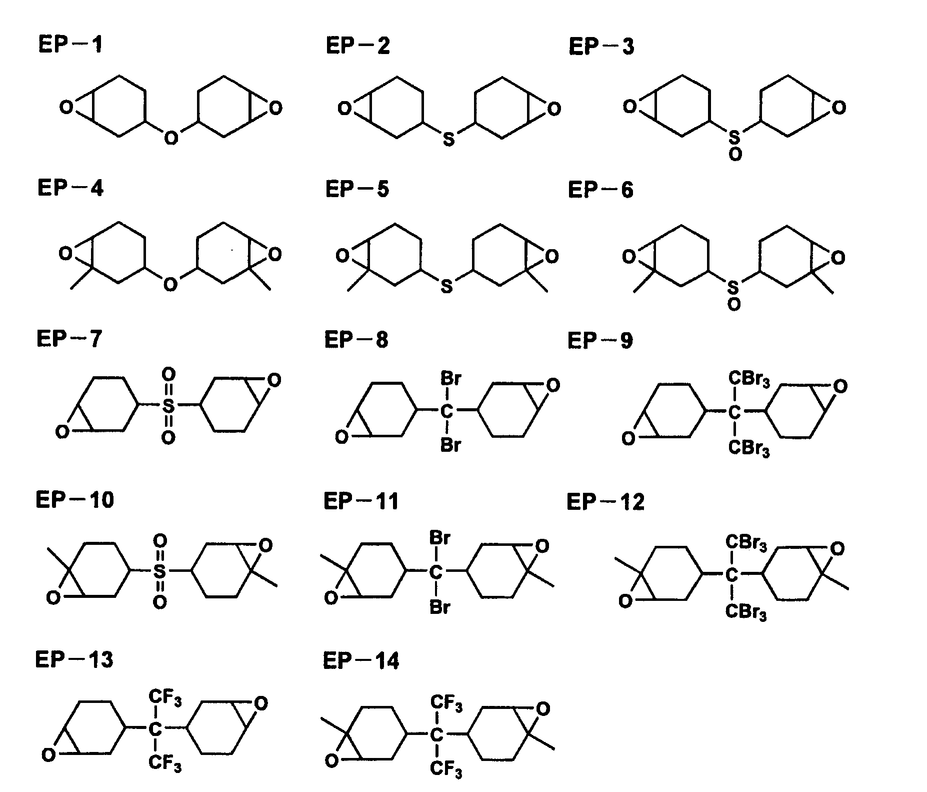

Next, the compounds represented by Formula (2) are described in detail below.

R₁ and R₂ are each a hydrogen atom or an alkyl group, concretely an alkyl group having 1 to 20 carbon atoms such as a methyl group, an ethyl group, a propyl group, an iso-propyl group and a butyl group or a cycloalkyl group having 3 to 6 carbon atoms such as a cyclopropyl group, a cyclobutyl group, a cyclopentyl group and a cyclohexyl group. R₁ and R₂ may be the same or different and preferably each a methyl group. R³ is a hydrogen atom, a halogen atom or a substituent, and the halogen atom is concretely a chlorine atom, a bromine atom or a fluorine atom, and preferably a fluorine atom or a chlorine atom. R³ is particularly preferably a hydrogen atom.

Concrete examples of the substituent include an alkyl group having 1 to 20 carbon atoms such as a methyl group, an ethyl group, a propyl group, an iso-propyl group and a butyl group; a cycloalkyl group having 3 to 6 carbon atoms such as a cyclopropyl group, a cyclobutyl group, a cyclopentyl group and a cyclohexyl group; an alkoxy group having 1 to 20 carbon atoms such as a methoxy group, an ethoxy group, an n-propoxy group, an iso-propoxy group, an n-butoxy group and a tert-butoxy group; an acyl group having 2 to 20 carbon atoms such as an acetyl group, a propionyl group and a trifluoroacetyl group; an acyloxy group having 2 to 20 carbon atoms such as an acetoxy group, a propionyloxy group and trifluoroacetoxy group; an acylthio group having 2 to 20 carbon atoms such as an acetylthio group, a propionylthio group and a trifluoroacetylthio group; an alkoxycarbonyl group having 2 to 20 carbon atoms such as a methoxycarbonyl group, an ethoxycarbonyl group and tert-butoxycarbonyl group; and an alkylthiocarbonyl group having 2 to 20 carbon atoms such as a methylthiocarbonyl group, an ethylthiocarbonyl group and a tert-butylthiocarbonyl group. As the substituent, the halogen atom, the alkoxy group, the acyloxy group and the alkoxycarbonyl group are preferable.

R₄, R₅ and R₆ are each a hydrogen atom, a halogen atom a substituent which is bonded through a carbon atom, an nitrogen atom or a sulfur atom to the carbon atom represented by C*, and the halogen atom is concretely a chlorine atom, a bromine atom and a fluorine atom. Concrete examples of the substituent bonded through a carbon atom, a nitrogen atom or a sulfur atom to the carbon atom represented by C* include an alkyl group such as a methyl group, an ethyl group, a propyl group, a butyl group, a pentyl group, an iso-pentyl group, a 2-ethylhexyl group, an octyl group and a decyl group; an aryl group such as a phenyl group, a naphthyl group and an anthranyl group; a heterocyclic group such as a 2-pyridyl group, a 1-pyroly group, a 2-thiazoyl group and a 3-thienyl group; a cycloalkyl group such as a cyclohexyl group and a cycloheptyl group; an alkenyl group such as an ethenyl-2-propenyl group, a 3-butenyl group, a 1-methyl-3-propenyl group, a 3-pentenyl group and a 1-methyl-3-butenyl group; a cycloalkenyl group such as a 1-cycloalkenyl group and a 2-cycloalkenyl group; an alkynyl group such as an ethynyl group and a 1-porpynyl group; a thio group such as a methylthio group, trifluoromethylthio group and a phenylthio group; a carboxyl group; a carbonylamino group such as an acetylamino group and a benzoylamino group; an ureido group such as a methylaminocarbonylamino group; a sulfonylamino group such as a methanesulfonylamino group and a benzenesulfonylamino group, a sulfonyl group such as a methanesulfonyl group, a trifluoromethanesulfonyl group and a toluenesulfonyl group; a carbamoyl group such as a carbonyl group, an N,N-dimethylcarbonyl group, and an N-morpholinocarbonyl group; a sulfamoyl group such as a sulfamoyl group, an N,N-dimethylsulfamoyl group and a morpholinosulfamoyl group; a nitro group; a cyano group, a sulfonamido group such as a methanesulfonamido group, a butanesulfonamido group and a bebzenesulfonamido group; an amino group such as an amino group, an N,N-dimethylamino group, an N,N-diethylamino group and an anilino group; a sulfo group; a phosphono group; a sulfite group; a sulfino group; a sulfonylaminocarbonyl group such as a methanesulfonyl-aminocarbonyl group, an ethanesulfonylaminocarbonyl group and a benzenesulfonylamino group; a carbonylaminosulfonyl group such as an acetoamidosulfonyl group, a methoxyacetoamido-sulfonyl group and a benzamidosulfonyl group; an aminocarbonyl group such as an acetoamidocarbonyl group, a methoxyacetoamino-carbonyl group and a benzamidocarbonyl group; a sulfinyl-aminocarbonyl group such as a methanesulfinylaminocarbonyl group, an ethanesulfinylaminocarbonyl group and benzenesulfinylaminocarbonyl group; and an alkyl group substituted with a group represented by "*" such as a methoxymethyl group, an ethoxymethyl group, a methoxyethyl group, a phenooxyethyl group, a carboxymethyl group, an aminomethyl group and a sulfonamidomethyl group; an aryl group substituted with a group represented by "*" such as a p-methoxyphenyl group, a p-sulfonamidophenyl group, a 2-chloro-6-pyridyl group and a m-nitrophenyl group. R₄, R₅ and R₆ are each preferably an alkyl group or an alkyl group substituted with a group represented by "*" and more preferably an alkyl group. At least one of R₄, R₅ and R₆ is a hydrogen atom and two of them are each preferably a hydrogen atom, and the other is an alkyl group or an alkyl group substituted with a group represented by "*".

Concrete examples of the group represented by "*" include an alkyl group, a cycloalkyl group, an alkenyl group, a cycloalkenyl group, an alkynyl group, an aryl group, a heterocyclic group, an alkoxy group, an aryloxy group, an acyl group, a carbonyloxy group, a thio group, a carboxyl group, a carbonylamino group, a ureido group, a sulfonylamino group, a sulfonyl group, a carbamoyl group, a sulfamoyl group, a hydroxyl group, a nitro group, a cyano group, a sulfonamido group, an amino group, a sulfo group, a phosphono group, a sulfite group, a sulfino group, a sulfonylaminocarbonyl group, a carbonylaminosulfonyl group, an aminocarbonyl group and a sulfinylaminocarbonyl group.

Preferable concrete examples of the epoxy compound relating to the invention described in Claims 1 to 11 are shown below, but the invention is not limited to them.

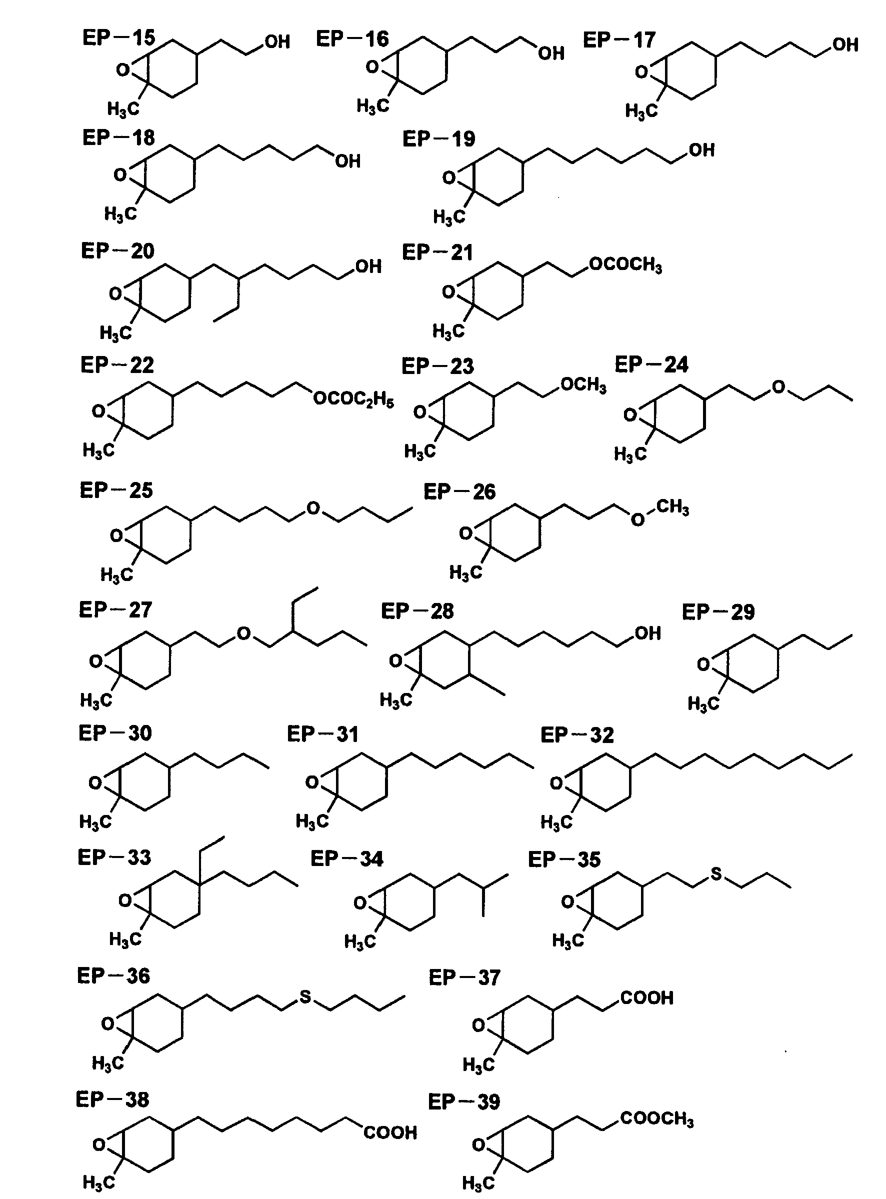

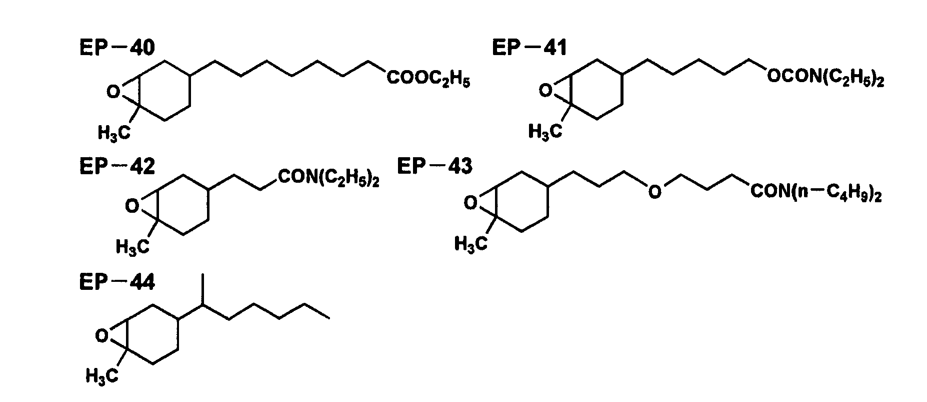

These epoxy compounds can be synthesized according to the methods described in U. S. Patent Nos. 2,745,847, 2,750,395, 2,853,498, 2,853,499 and 2,863,881.

Moreover, known epoxy compounds other than those represented by Formula (2) can be used in the invention relating to Claims 1 to 11. Examples of such epoxy compound are described in JP-A 8-277320, 8-333428, 9-151237 and 10-245430.

The oxetane compound relating to the invention is described bellow; the compound is referred to as oxetane ring-containing compound or oxetane compound in this specification and they are synonymous. The oxetane ring is a ring having a four-membered cyclic ether structure.

In the invention relating to Claims 1 to 11, oxetane compounds represented by the following Formula (3) are preferable.

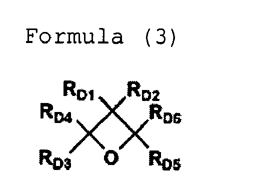

In Formula (3), R_{D1} to R_{D6} are each a hydrogen atom or a substituent, provided that whole of R_{D1} to R_{D6} are not hydrogen atom at the same time.

In Formula (3), Examples of the substituent represented by R_{D1} to R_{D6} include an alkyl group such as a methyl group, an ethyl group, a propyl group, an iso-propyl group, a tert-butyl group, a pentyl group, a hexyl group, an octyl group, a dodecyl group, a tridecyl group, a tetradecyl group, a pentadecyl group, a cyclopentyl group and cyclohexyl group; an alkenyl group such as a vinyl group, a 1-propenyl group, a 2-propenyl group, a 2-butenyl group and an allyl group; an alkynyl group such as an acetylenyl group, a 1-propynyl group, a 2-propynyl group, a 2-butynyl group and a propargyl group; an alkoxy group such as a methoxy group, an ethoxy group, a propyloxy group, a pentyloxy group, a hexyloxy group, an octyloxy group, a dodecyloxy group, a cyclopentyloxy group and a cyclohexyloxy group; an aromatic hydrocarbon group such as a phenyl group, a naphthyl group and an anthracenyl group; a heterocyclic aromatic group such as a furyl group, a thienyl group, a pyridyl group, a pyridazinyl group, a pyrimidyl group, a pyrazyl group, a triazyl group, an imidazolyl group, pyrazolyl group, a thiazolyl group, benzimidazolyl group, a benzoxazolyl group, a quinazolyl group, a phthalazyl group, a pyrrolyl group, a 2-quinolyl group and a 1-isoquinilyl group; a heterocyclic group such as a pyrrolidyl group, an imidazolidyl group, a morpholyl group, an oxazolidyl group, a 2-tetrahydrofuranyl group, a 2-tetrahydrothienyl group, a 2-tetrahydropyranyl group and a 3-tetrahysropyranyl group; a halogen atom such as a chlorine atom, a bromine atom and a fluorine atom; and a fluorohydrocarbon group such as a fluoromethyl group, a trifluoromethyl group, a pentafluoroethyl group and a pentafluorophenyl group. R_{D1} and R_{D2}, R_{D3} and R_{D4}, and R_{D5} and R_{D6}, are respectively bonded to form a di-valent cyclic group. As the substituent represented by R_{D1} to R_{D6}, the alkyl group, the alkoxy group, the alkoxycarbonyl group, the aromatic hydrocarbon group, the heterocyclic aromatic group, the halogen atom and the fluorohydrocarbon group are preferable.

The groups represented by R_{D1} to R_{D6} each further may have a substituent.

Examples of the substituent capable of substituting to the group represented by each of R_{D1} to R_{D6} include an alkyl group such as a methyl group, an ethyl group, a propyl group, an iso-propyl group, a tert-butyl group, a pentyl group, a hexyl group, an octyl group, a dodecyl group, a tridecyl group, a tetradecyl group, a pentadecyl group, a cyclopentyl group and a cyclohexyl group; an alkenyl group such as a vinyl group, a 1-propenyl group, a 2-propenyl group, a 2-butenyl group and an allyl group; an alkynyl group such as an acetylenyl group, a 1-propynyl group, a 2-propynyl group, a 2-butynyl group and a propargyl group; an aromatic hydrocarbon group such as a phenyl group, a naphthyl group and anthracenyl group; a heterocyclic aromatic group such as a furyl group, thienyl group, a pyridyl group, pyridazinyl group, pyrimidyl group, a pyrazyl group, a triazyl group, an imidazolyl group, a pyrazolyl group, a thiazolyl group, a benzimidazolyl group, a benzoxazolyl group, a quinazolyl group, a phthalazyl group, a pyrrolyl group, a 2-quinolyl group and a 1-isoquinilyl group; a heterocyclic group such as a pyrrolidyl group, an imidazolidyl group, a morpholyl group, an oxazolidyl group, a 2-tetrahydrofuranyl group, a 2-tetrahydrofuranyl group, a 2-tetrahydrothienyl group, a 2-tetrahydrothienyl group, a 2-tetrahydropyranyl group and 3-tetrahydropyranyl group; an alkoxy group such as a methoxy group, an ethoxy group, a propyloxy group, a pentyloxy group, a hexyloxy group, an octyloxy group, a dodecyloxy group, a cyclopentyloxy group and a cyclohexyloxy group; an aryloxy group such as a phenoxy group and a naphthyloxy group; an alkylthio group such as a methylthio group, an ethylthio group, a propylthio group, a pentylthio group, a hexylthio group, a an octylthio group, a dodecylthio group, a cyclopentylthio group and a cyclohexylthio group; an arylthio group such as a phenylthio group and a naphthylthio group; an alkoxycarbonyl group such as a methyloxycarbonyl group, an ethyloxycarbonyl group, a butyloxycarbonyl group, an octyloxycarbonyl group and a dodecyloxycarbonyl group; an aryloxycarbonyl group such as a phenyloxycarbonyl group and a naphthyloxycarbonyl group; a sulfamoyl group such as an aminosulfonyl group, a methylaminosulfonyl group, a dimethylaminosulfonyl group, a butylaminosulfonyl group, a hexylaminosulfonyl group, a cyclohexylaminosulfonyl group, an octylaminosulfonyl group, a dodecylaminosulfonyl group, a phenylaminosulfonyl group, a naphthylaminosulfonyl group and a 2-pyridylaminosulfonyl group; an acyl group such as an acetyl group, an ethylcarbonyl group, a propylcarbonyl group, a pentylcarbonyl group, a cyclohexylcarbonyl group, an octylcarbonyl group, a 2-ethylhexylcarbonyl group, a dodecylcarbonyl group, a phenylcarbonyl group, a naphthylcarbonyl group and a pyridylcarbonyl group; an acyloxy group such as an acetyloxy group, an ethylcarbonyloxy group, a butylcarbonyloxy group, an octylcarbonyloxy group, a dodecylcarbonyloxy group and a phenylcarbonyloxy group; an amido group such as a methylcarbonylamino group, an ethylcarbonylamino group, a dimethylcarbonylamino group, a propylcarbonylamino group, a pentylcarbonylamino group, a cyclohexylcarbonylamino group, a 2-ethylhexylcarbonylamino group, an octylcarbonylamino group, a dodecylcarbonylamino group, a phenylcarbonylamino group and a naphthylcarbonylamino group; a carbamoyl group such as an aminocarbonyl group, a methylaminocarbonyl group, a dimethylaminocarbonyl group, a propylaminocarbonyl group, a pentylaminocarbonyl group, a cyclohexylaminocarbonyl group, an octylaminocarbonyl group, a 2-ethylhexylaminocarbonyl group, a dodecylaminocarbonyl group, a phenylaminocarbonyl group, a naphthylaminocarbonyl group and a 2-pyridylamino-carbonyl group; a ureido group such as a methylureido group, an ethylureido group, a pentylureido group, a cyclohexylureido group, an octylureido group and a 2-pyridylureido group; a sulfinyl group such as a methylsulfinyl group, an ethylsulfinyl group, a butylsulfinyl group, a cyclohexylsulfinyl group, a 2-ethylhexylsulfinyl group, a dodecylsulfinyl group, a phenylsulfinyl group, a naphthylsulfinyl group and a 2-pyridylsulfinyl group; an alkylsulfonyl group such as a methylsulfonyl group, an ethylsulfonyl group, a butylsulfonyl group, a cyclohexylsulfonyl group, a 2-ethylhexyl group and a dodecylsulfonyl group; an arylsulfonyl group such as a phenylsulfonyl group, a naphthylsulfonyl group and a 2-pyridylsulfonyl group; an amino group such as an amino group, an ethylamino group, a dimethylamino group, a butylamino group, a cyclopentylamino group, a 2-ehtylhexylamino group, a dodecylamino group, a anilino group, a naphthylamino group and a 2-pyridylamino group; a halogen atom such as a fluorine atom, a chlorine atom and a bromine atom; a fluorohydrocarbon group such as a fluoromethyl group, a trifluoromethyl group, a pentafluoroethyl group and a pentafluorophenyl group; a cyano group; a nitro group; a hydroxyl group; a mercapto group; a silyl group such as a trimetylsilyl group, a triisopropylsilyl group, a triphenylsilyl group and a phenyldiethylsilyl group; a hydroxyl group; a nitro group; and a carboxyl group. The above groups each may be further substituted with a group the same as the exemplified groups as the group capable of substituting to the substituent represented by R_{D1} to R_{D6}, and plural groups of these groups may be bonded with together to form a ring.

Preferable groups as the group capable of substituting to the substituents each represented by R_{D1} to R_{D6} are a halogen atom, an alkyl group, an alkoxy group, an acyloxy group, an alkoxycarbonyl group, an aromatic hydrocarbon group, a heterocyclic aromatic group, a hydroxyl group or a fluorohydrocarbon group. At least one of the substituent represented by R_{D1} to R_{D6} may have an oxetane ring as a substituent of form a di- or more functional oxetane compound.

The oxetane compound relating to the invention preferably has a substituent at 2- or 3-position of the oxetane ring.

The substituent capable of substituting at the 2-position of the oxetane ring is preferably an aromatic group though the substituent is not specifically limited. The substituent is the same as the above mentioned aromatic hydrocarbon group such as a phenyl group, a naphthyl group and an anthracenyl group, heterocyclic aromatic ring such as a furyl group, a thienyl group, a pyridyl group, a pyridazinyl group, a pyrimidyl group, a pyrazyl group, a triazyl group, an imidazolyl group, a pyrazolyl group, a thiazolyl group, a benzimidazolyl group, a benzoxazolyl group, a quinazolyl group, a phthalazyl group, a pyrrolyl group, a 2-quinolyl group and a 1-isoquinyly group. These substituents each further may have a substituent such as the above-mentioned halogen atom, alkyl group, alkoxyl group, acyloxy group and alkoxycarbonyl group. When the substituent at the 2-position is the aromatic group, the oxetane ring may further have a substituent at the 3-position thereof. Examples of the substituent are synonymous with the above alkyl group and alkoxy group.

The oxetane compound having the substituent at the 2-position is preferably one represented by the following Formula (A₀) or (B₀).

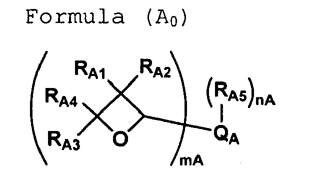

In Formula (A₀), Q_{A} is a (mA + nA)-valent aromatic group, R_{A1} to R_{A4} are each a hydrogen atom or a substituent, R_{A5} is a substituent, mA is an integer of from 1 to 3 and nA is an integer of from 0 to 5. The aromatic group represented by Q_{A} is the same as the above-mentioned (mA + nA)-valent aromatic group. The substituent represented by R_{A1} to R_{A4} are each the synonymous with the foregoing substituent represented by R_{D1} to R_{D6}, and preferably the hydrogen atom, alkyl group or alkoxy group. The substituents represented by R_{A5} are synonymous with the foregoing substituent represented by R_{D1} to R_{D6}, and the plural substituents represented by R_{A5} may be the same or different and may form a di-valent ring by bonding with together. R_{A5} is preferably an alkyl group of an alkoxy group and more preferably at least one of plural R_{A5}s is an alkoxy group. mA is preferably an integer of 1 or 2, nA is preferably an integer of from 0 to 3 and more preferably an integer of from 0 to 2, and mA + nA is preferably an integer from 1 to 6 and more preferably an integer from 1 to 3.

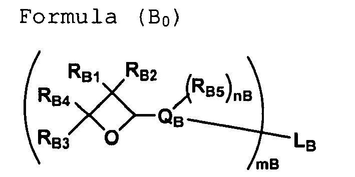

In Formula (B₀), Q_{B} is a di-valent aromatic group, R_{B1} to R_{B4} are each a hydrogen atom or a substituent, R_{B5} is a substituent, L_{B} is a mB-valent linking group, mB is an integer of from 2 to 4 and nB is an integer of from 0 to 4.

The aromatic groups represented by Q_{B} are synonymous with the foregoing (nB + 2)-valent aromatic groups. The substituents represented by R_{B1} to R_{B4} are synonymous with the foregoing substituents represented by R₁ to R₆, and R_{B1} to R_{B4} are preferably a hydrogen atom, an alkyl group or an alkoxy group. The substituent represented by R_{B5} is synonymous with the foregoing substituent represented by R₁ to R₆, and plural R_{B5}S may be the same or different and may form a divalent ring by bonding with together. R_{B5} is more preferably an alkyl group or an alkoxy group. mB is preferably 2 or 3, nB is preferably an integer of from 0 to 3 and more preferably an integer of from 0 to 2.

L_{B} is preferably a mB-valent kinking group having 0 to 15 carbon atoms which may contain an oxygen atom or a sulfur atom in the principal chain. Examples of the di-valent linking group which may contain an oxygen atom or a sulfur atom include the following groups and groups formed by combining each of the following listed groups and an -O-atom, an -S- atom, a -CO- group or a -CS- group: methylene group [-CH₂-], ethylidene group [>CHCH₃], iso-propyridene group [>C(CH₃)₂], 1,2-ethylene group [-CH₂CH₂-], 1,2-propyrene group [CH(CH₃)CH₂-], 1,3-propanediyl group [-CH₂CH₂CH₂-], 2,2-dimethyl-1,3-propanediyl group [-CH₂C(CH₃)₂CH₂-], 2,2-dimethoxy-1,3-propanediyl group [-CH₂C(OCH₃)₂CH₂-], 2,2-dimethoxymethyl-1,3-propanediyl group [-CH₂C(CH₂OCH₃)₂CH₂-], 1-methyl-1,3-propanediyl group [-CH(CH₃)CH₂CH₂-], 1,4-butanediyl group [-CH₂CH₂CH₂CH₂-], 1,5-pentanediyl group [-CH₂CH₂CH₂CH₂CH₂-], oxydiethylene group [CH₂CH₂OCH₂CH₂-], thiodiethylene group [-CH₂CH₂SCH₂CH₂-], 3-oxothiodiethylene group [-CH₂CH₂SOCH₂CH₂-], 3,3-dioxotiodiethylene group [-CH₂CH₂SO₂CH₂CH₂-], 1,4-dimethyl-3-oxa-1,5-pentanediyl group [-CH(CH₃)CH₂OCH(CH₃)CH₂-], 3-oxopentanediyl group [-CH₂CH₂COCH₂CH₂-], 1,5-dioxo-3-oxapentanediyl group [-COCH₂OCH₂CO-], 4-oxa-1,7-heptanediyl group [-CH₂CH₂CH₂OCH₂CH₂CH₂-], 3,6-dioxa-1,8-octanediyl group [-CH₂CH₂OCH₂CH₂OCH₂CH₂-], 1, 4, 7-trimethyl-3, 6-dioxa-1, 8-octanediyl group [-CH(CH₃)CH₂OCH(CH₃)CH₂OCH(CH₃)CH₂-], 5,5-dimethyl-7,3-dioxa-19-nonanediyl group [-CH₂CH₂OCH₂C(CH₃)₂CH₂OCH₂CH₂-], 5, 5-dimethoxy-3, 7-dioxa-1, 9-nonanediyl group [-CH₂CH₂OCH₂C(OCH₃)₂CH₂OCH₂CH₂-], 5,5-dimethoxymethyl-3,7-dioxa-1,9-nonanediyl group [-CH₂CH₂OCH₂C(CH₂OCH₃)₂CH₂OCH₂CH₂-], 4,7-dioxo-3,8-dioxa-1,10-decanediyl group [-CH₂CH₂O-COCH₂CH₂CO-OCH₂CH₂-], 3,8-dioxo-4,7-dioxa-1,10-decanediyl group [-CH₂CH₂CO-OCH₂CH₂O-COCH₂CH₂-], 1,3-cyclopentanediyl group [-1,3-C₅H₈-], 1,2-cyclohexanediyl group [-1,2-C₆H₁₀-], 1,4-cyclohexanediyl group [-1,4-C₆H₁₀-], 2,5-tetrahydrofurandiyl group [2,5-C₄H₆O-], paraphenylene group [-p-C₆H₄-], m-phenylene group [-m-C₆H₉-], α,α'-o-xylylene group [-o-CH₂-C₆H₄-CH₂-], α,α'-m-xylylene group [-m-CH₂-C₆H₄-CH₂-],α,α'-p-xylylene group [-p-CH₂-C₆H₄-CH₂-], furan-2,5-diyl-bismethylene group [2,5-CH₂-C₄H₂O-CH₂-], thiophene-2,5-diyl-bismethylene group [2,5-CH₂-C₄H₂S-CH₂-], and iso-propylidenebis-p-phenylene group [-p-C₆H₉-CH(CH₃)₂-p-C₆Hq-].

As a tri- or more-valent linking group, a group formed by removing a necessary number of hydrogen atom at an optional position from each of the above-listed groups and a group formed by combining each of the above listed groups and an -O- atom, an -S- atom, a -CO- group or a -CS- group can be cited.

The above-mentioned oxetane compounds may be produced by know method without any limitation according to the methods described in the following documents.
(1) Hu Xianming, Richard M. Kellogg, Synth., 533-538, May (2) A. O. Fitton, J. Hill, D. Ejane, R. Miller, Synth., 12, 1140 (3) Toshiro Imai and Shinya Nishida, Can. L. Chem. Vol. 59,2503-2509 (4) Nobujiro Shimizu, Chintaro Yamaoka and Yoho Tsuno, Bull. Chem. Soc. Jpn. 56, 3853-3854
(5) Walter Fisher and Cyril A. Grob, Heiv. Chem. Acta., 61, 2336 (6) Chem. Ber. 101, 1850 (7) "Heterocyclic Compounds with Three- and Four-membered Rings", Part Two, Chapter IX, Interscience Publishers, John Wiley & Sons, New York (8) Bull. CHem. Soc. Jpn., 61, 1653 (9) Pure Appl. Chem., A29(10), 915 (10) Pure Appl. Chem., A30(2 & amp; 3), 189 (11) JP-A 6-16804
(12) German Patent No. 1,012,858

Examples of the oxetane compound represented by Formula (3), (A₀) or (B₀) are listed below though the invention is not limited to them.

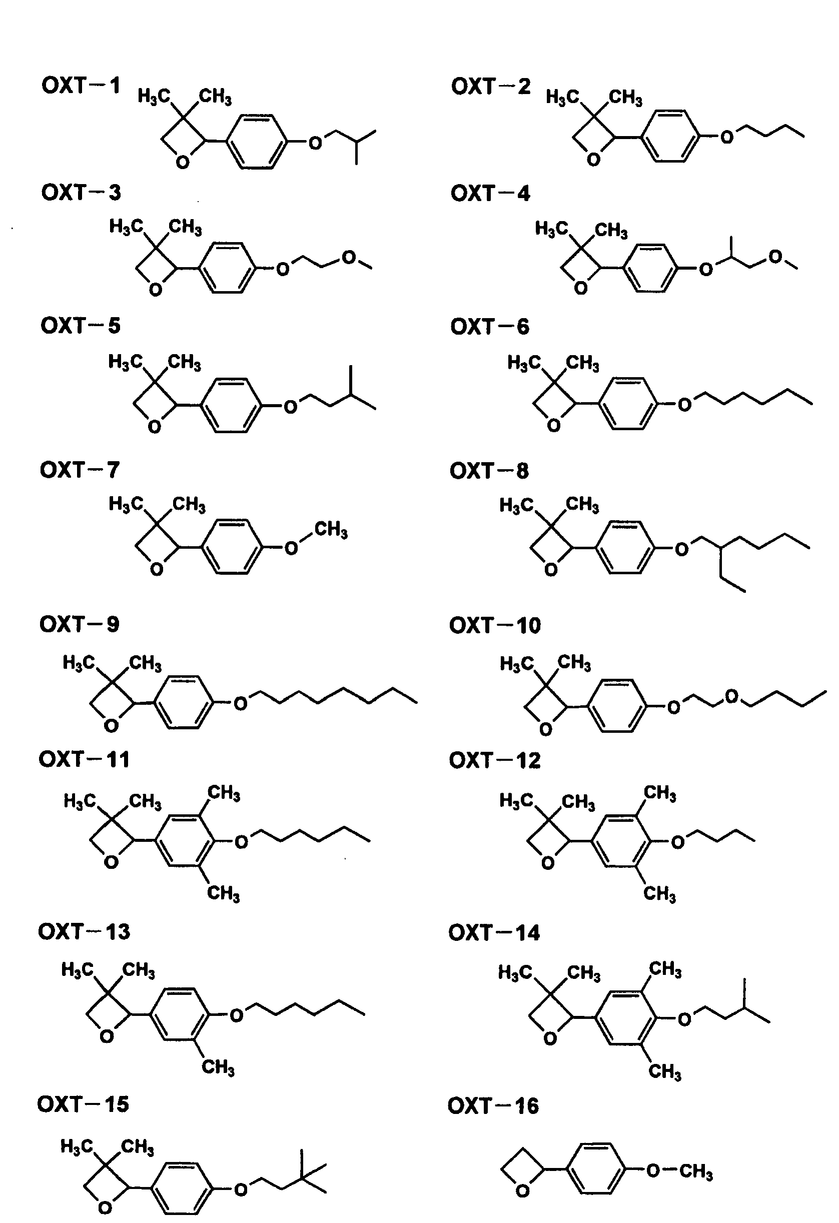

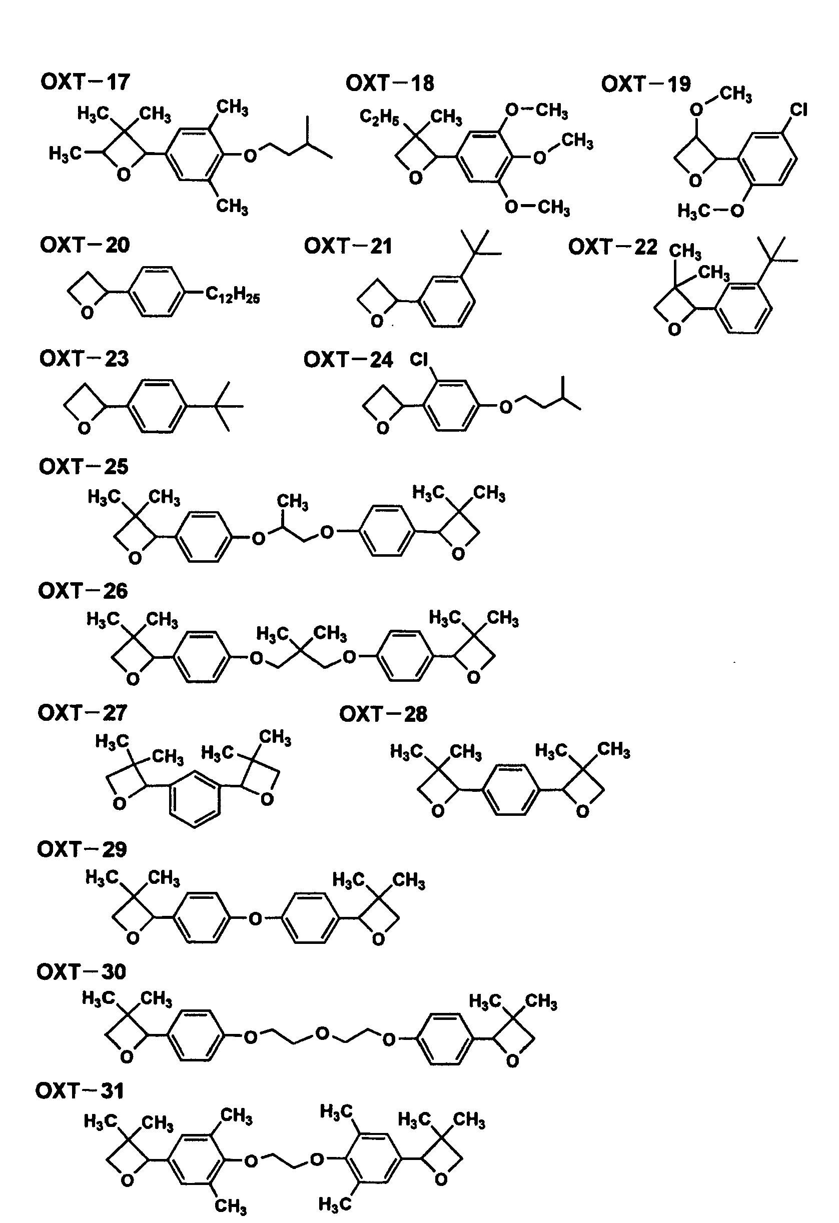

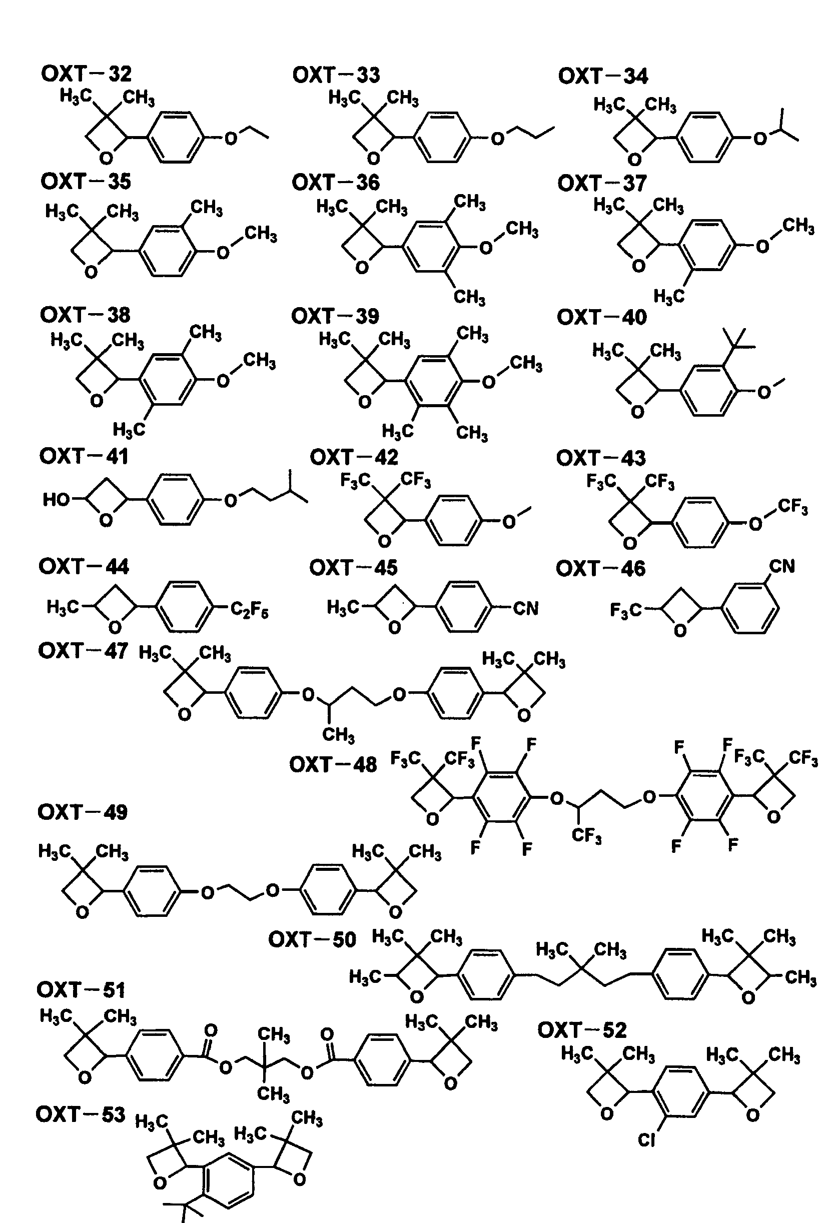

The substituent capable of substituting at 3-position of the oxetane ring is preferably the groups synonymous with the foregoing alkyl group, alkoxy group, acyloxy group, alkoxycarbonyl group, aromatic hydrocarbon group, heterocyclic aromatic group, halogen group and fluorohydrocarbon group though the substituent is not specifically limited.

The oxetane compound having the substituent at 3-position is preferably one which is not substituted at 2-position. As an example of the oxetane compound not substituted at 2-position, a compound represented by Formula (101) is cited.

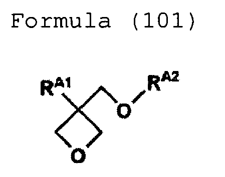

In Formula (101), R^{A1} is a hydrogen atom, an alkyl group having 1 to 6 carbon atoms such as a methyl group, an ethyl group, a propyl group and a butyl group, a fluoroalkyl group having 1 to 6 carbon atoms, an allyl group, an aryl group, a furyl group, or a thienyl group. R^{A2} is an alkyl group having 1 to 6 carbon atoms such as a methyl group, an ethyl group, a propyl group and a butyl group, an alkenyl group having 2 to 6 carbon atoms such as a 1-propenyl group, 2-propenyl group, a 2-methyl-1-propenyl group, a 2-methyl-2-propenyl group, a 1-butenyl group, a 2-butenyl group and a 3-butenyl group, a group, a group having an aromatic group such as a phenyl group, a benzyl group, a fluorobenzyl group, a methoxybenzyl group and a phenoxyethyl group, an alkylcarbonyl group having 2 to 6 carbon atoms such as an ethylcarbonyl group, a propylcarbonyl group and a butylcarbonyl group, an alkoxycarbonyl group having 2 to 6 carbon atoms such as an ethoxycarbonyl group a propoxycarbonyl group and a butoxycarbonyl group, or an N-alkylcarbamoyl group having 2 to 6 carbon atoms such as an ethylcarbamoyl group, a propylcarbamoyl group, a butylcarbamoyl group and a pentylcarbamoyl group. In the invention, the use of the compound having one oxetane ring is preferred because the obtained composition is superior in the adhesion ability and has low viscosity so as to be excellent in the working suitability.

As an example of the oxetane compound having two oxetane rings, compounds represented by the following Formula (102) are cited.

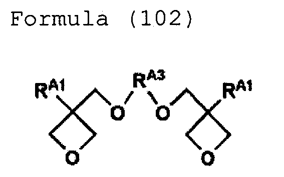

In Formula (102), R^{A1} is the same as that in Formula (101). R^{A3} is a linear or branched alkylene group such as an ethylene group, a propylene group and a butylene group, a linear of branched poly(alkyleneoxy) group such as a poly(ethyleneoxy) group and a poly(propyleneoxy group, a unsaturated linear or branched hydrocarbon group such as a propenylene group, a methylpropenylene group and a butenylene group, or a an alkylene group containing a carbonyl group or a carbonyl group, an alkylene group containing a carboxyl group or an alkylene group containing a carbamoyl group.

Moreover, a poly-valent group represented by the following Formula (103), (104) or (105) is cited as R^{A3}.

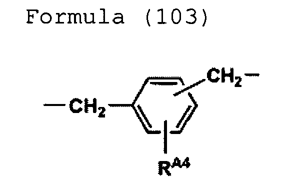

In Formula (103), R^{A4} is a hydrogen atom, an alkyl group having 1 to 4 carbon atoms such as a methyl group, an ethyl group, a propyl group and a butyl group, an alkoxy group having 1 to 4 carbon atoms such as a methoxy group, an ethoxy group, a propoxy group and a butoxy group, a halogen atom such as a chlorine atom and a bromine atom, a nitro group, a cyano group, a mercapto group, a lower alkylcarboxyl group, a carboxyl group, or a carbamoyl group.

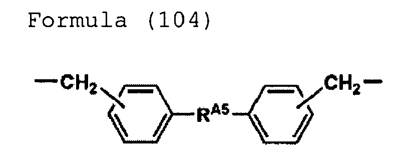

In Formula 4, R^{A5} is an oxygen atom, a sulfur atom, a methylene group, NH, SO, SO₂ C(CF₃)₂ or C(CH₃)₂.

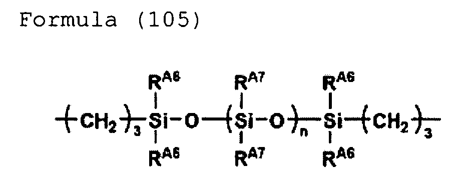

In Formula (105), R^{A6} is an alkyl group having 1 to4 carbon atoms such as a methyl group, an ethyl group, a propyl group and a butyl group or an aryl group. n is an integer of from 10 to 2,000. R^{A7} is an alkyl group having 1 to 4 carbon atoms such as a methyl group, an ethyl group, a propyl group and a butyl group or an aryl group. As R^{A7}, a group selected from the groups represented by the following Formula (106).

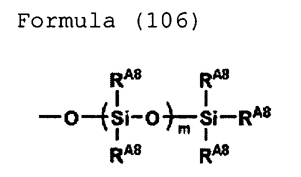

In Formula (106), is an alkyl group having 1 to 4 carbon atoms such as a methyl group, an ethyl group, a propyl group and a butyl group or an aryl group. m is an integer of 0 to 100.

As concrete examples of the compound having two oxetane rings, the followings are cited.

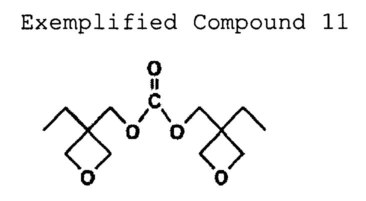

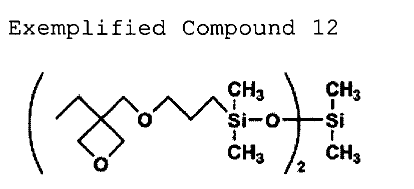

Exemplified Compound 11 is a compound of Formula (102) in which R^{A1} is an ethyl group and R^{A3} is a carboxyl group. Exemplified Compound 12 is a compound of Formula (102) in which R^{A1} is an ethyl group, R^{A6} and R^{A7} are each a methyl group and n is 1.

Preferable example of the compound having two oxetane rings other than the above compounds is a compound represented by the following Formula (107).

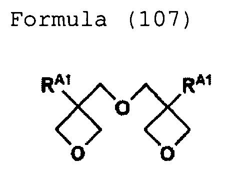

In Formula (107), R^{A1} is the same as R^{A1} in Formula (101).

As an example of compound having three or four oxetane rings, a compound represented by the following Formula (108) are cited.

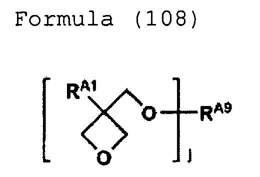

In Formula (108), R^{A1} is the same as R^{A1} in Formula (101). R^{A9} is, for example, a branched-chain alkylene group having 1 to 12 carbon atoms represented by the following A to C, a branched-chain poly(alkyleneoxy) group represented by the following D or a branched-chain polysiloxy group represented by the following E. j is 3 or 4.

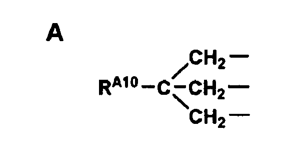

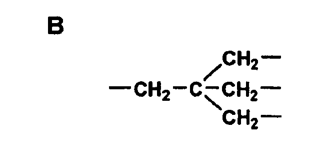

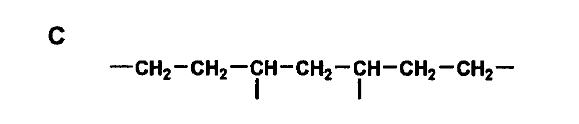

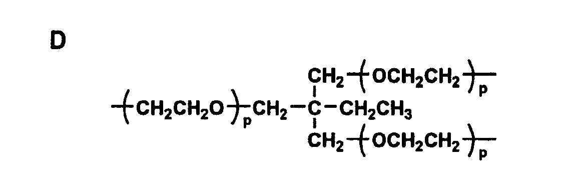

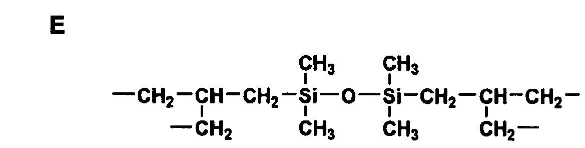

In the above A, R^{A10} is a lower alkyl group such as a methyl group, an ethyl group or a propyl group. In the above D, p is an integer of from 1 to 10.

As an example of the compound having three or four oxetane rings, Exemplified Compound 13 is cited.

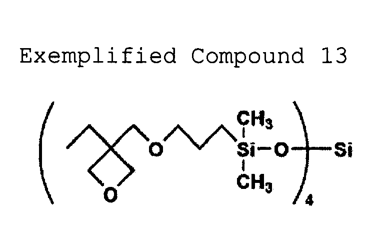

As an example of the compound having one to four oxetane rings other than those described in the above, a compound represented by the following Formula (109) is cited.

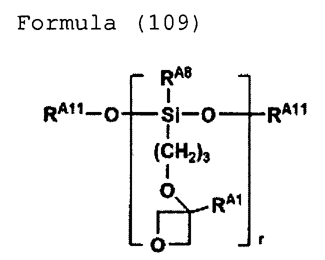

In Formula (109), R^{A1} is the same as R^{A1} in Formula (101) and R^{A8} is the same as R^{A8} in Formula (106). R^{A11} is a lower alkyl group having 1 to 4 carbon atoms such as a methyl group, an ethyl group, a propyl group and a butyl group.

Concrete examples of the oxetane compound to be used in the invention include the following compounds.

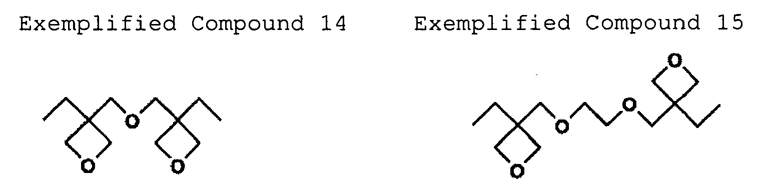

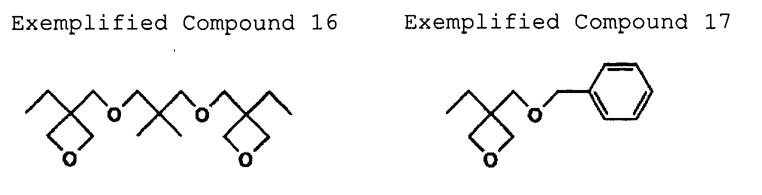

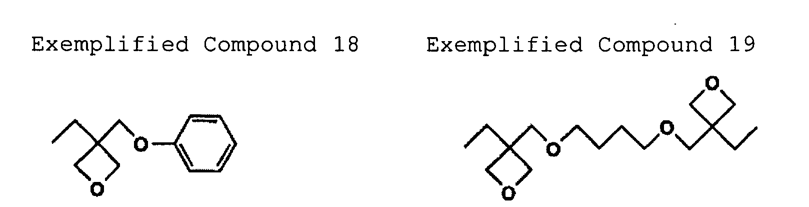

The above-mentioned oxetane compounds can be produced according to a known method without any limitation, for example, the method for synthesizing the oxetane ring form a diol disclosed in D. B. Pattison, J. Am. Chem. Soc., 3455, 79 (1956) can be applied. Other than the above, a compound having one to four oxetane rings and a high molecular weight of about from 1,000 to 5,000 is usable. As concrete examples of such compound, the followings can be cited.

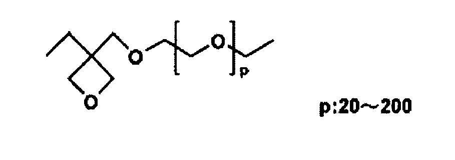

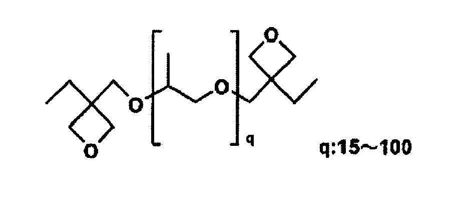

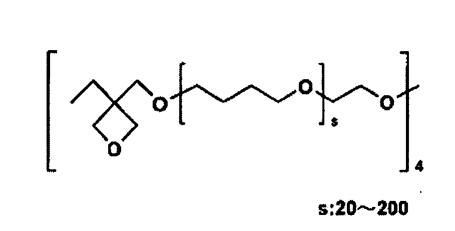

Next, the compound capable of forming an acid by irradiation of actinic radiation relating to the invention, hereinafter referred to as a photo-acid generating agent is described in detail below, which constitutes the polymerizable actinic radiation curable composition together with the above-described epoxy compound or the oxetane compound.

As a concrete example of the photo-acid generating agent, compounds to be used for chemically amplifying type photoresist or photo-cation polymerization, cf. "Organic material for imaging" edit. by Yuuki Electronics Zairyou Kenkyuu Kai, pp. 187-192, Bunshin Publisher (1993) can be used. Examples of the compound suitable for the invention are described below.

Firstly, a salt of an aromatic onium compound such as a diazonium, an ammonium, an iodonium, a sulfonium and a phosphonium with B(C₆F₅)₄⁻, PF₆⁻, AsF₆⁻, SbF₆⁻ or a sulfonic acid such as p-CH₃C₆H₄SO₃⁻ salt and CF₃SO₃⁻ salt can be cites.

Ones having a borate compound or PF₆⁻ salt as the counter ion are preferable since they have high acid forming ability. Concrete examples of the onium compound are shown below.

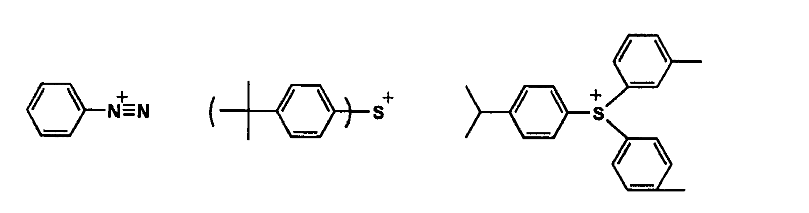

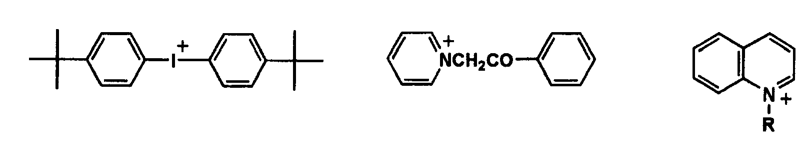

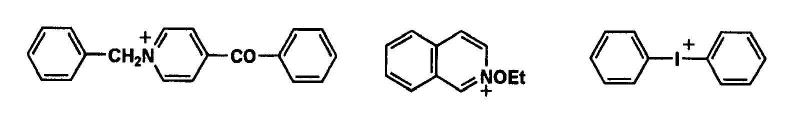

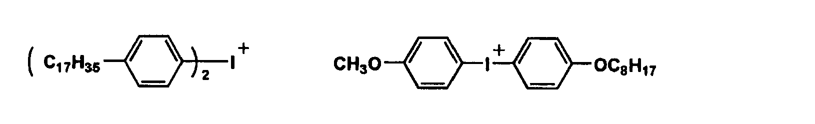

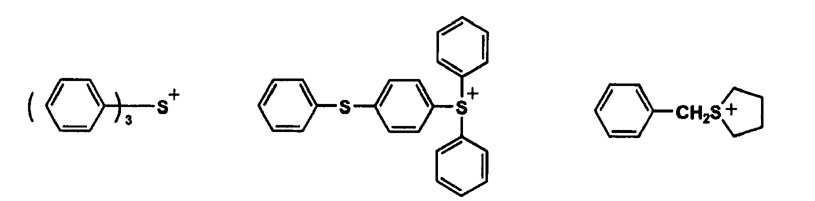

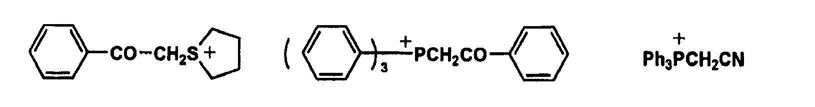

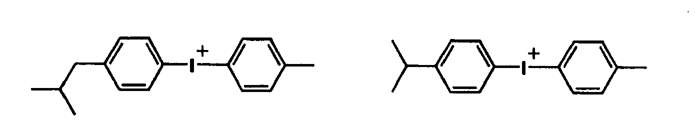

Secondarily, a sulfone compound capable of forming sulfonic acid can be cited. Concrete compounds are shown below.

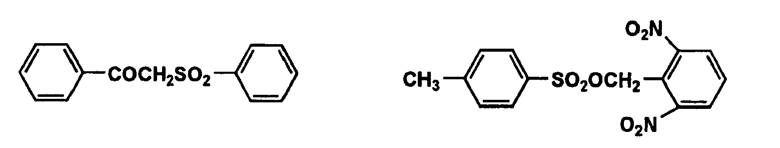

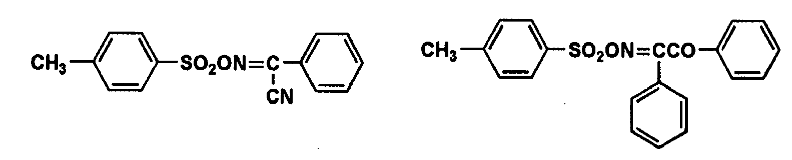

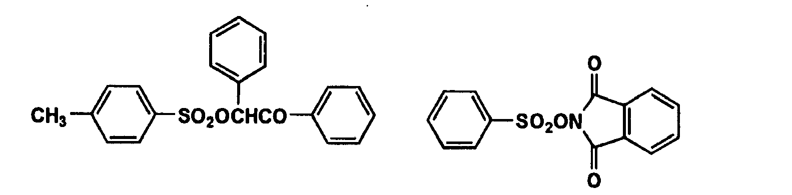

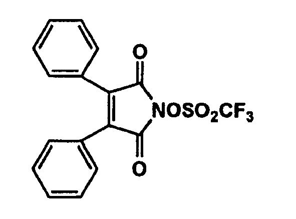

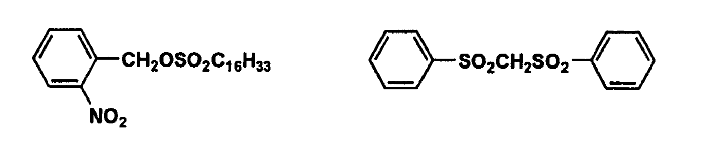

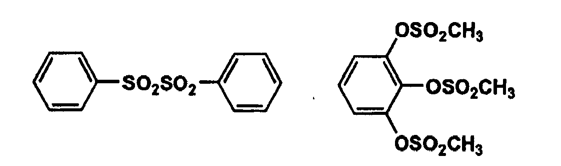

Thirdly, a halogen compound capable of forming hydrogen halide can be used. Concrete examples are shown below.

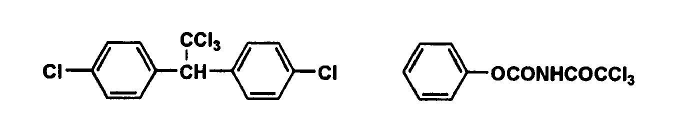

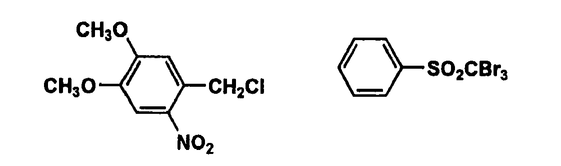

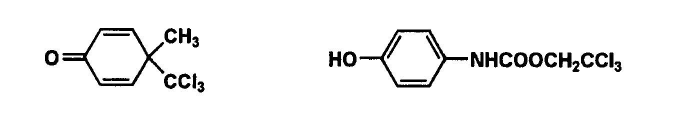

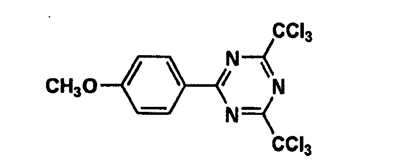

Fourthly, an iron arene complex can be cited.

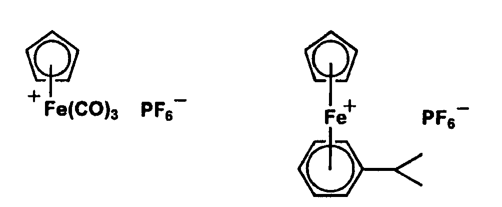

As the photo-acid generating agent to be used in the invention, an arylsulfonium salt derivative such as Silacure UVI-6990 and Silacure UVI-6974 manufactured by Union Carbide Corp., and Adecaoptmer SP-150, Adecaoptmer SP-152 and Adecaoptmer SP-172 each manufactured by Asahi Denka Kogyo Co., Ltd., an allyliodonium salt derivative such as RP-2074 manufactured by Rhodia Co., Ltd., an arene ion metal complex derivative such as Irgacure manufactured by Ciba-Geigy Co., Ltd., a diazonium salt derivative, a triazine type initiator and another halogen compound are usable. The photo-acid-forming agent is preferably contained in a ratio of from 0.2 to 20 parts by weight to 100 parts by weight of the cationic polymerizable compound. When the content of the photo-acid-forming agent is less than 0.2 parts by weight, the cured substance is difficultly obtained, and further hardening effect cannot be obtained even when the content exceeds 20 parts by weight. One or more kinds of these photo-acid generating agents can be selected for use.

As more preferable structure of the sulfonium salt compound, the sulfonium salts represented by the foregoing Formula (I-1) can be cited.

In Formula (I-1), R₁₁, R₁₂ and R₁₃ are each a substituent. Examples of the substituent include a halogen atom such as a chlorine atom, a bromine atom and a fluorine atom; an alkyl group having 1 to 6 carbon atoms such as a methyl group, an ethyl group, a propyl group, an iso-propyl group and a butyl group; a cycloalkyl group having 3 to 6 carbon atoms such as a cyclopropyl group, a cyclobutyl group, a cyclopentyl group and cyclohexyl group; an alkenyl group having 1 to 6 carbon atoms such as a vinyl group, a 1-propenyl group, a 2-propenyl group and a 2-butenyl group; an alkynyl group having 1 to 6 carbon atoms such as an acetylenyl group, a 1-propynyl group, a 2-propynyl group and a butynyl group; an alkoxy group having 1 to 6 carbon atoms such as a methoxy group, an ethoxy group, an n-propoxy group, an iso-propoxy group, an n-butoxy group and tert-butoxy group; an alkylthio group having 1 to 6 carbon atoms such as a methylthio group, an ethylthio group, an n-propylthio group, an iso-propylthio group, an n-butylthio group and tert-butylthio group; an aryl group having 6 to 14 carbon atoms such as a phenyl group, a naphthyl group and an anthracenyl group; an aryloxy group having 6 to 10 carbon atoms such as a phenoxy group and a naphthoxy group; an arylthio group having 6 to 10 carbon atoms such as a phenylthio group and a naphthylthio group; an acyl group such as an acetyl group, a propionyl group, a trifluoroacetyl group and a benzoyl group; an acyloxy group such as an acetoxy group, a propionyloxy group, a trifluoroacetoxy group and a benzoyloxy group; an alkoxycarbonyl group such as a methoxycarbonyl group, an ethoxycarbonyl group and a tert-butoxycarbonyl group, a hetero atom-containing aromatic cyclic group having 4 to 8 carbon atoms such as a furyl group and a thienyl group; a nitro group; and a cyano group.

As the substituent, the halogen atom, alkyl group, aryl group, aryloxy group, arylthio group and acyl group are preferable. These substituents may further have a substituent when it is possible. m, n and p are each an integer of 0 to 2 and preferable 1 or 2. X₁₁⁻ is a counter anion. As the counter anion, a complex ion such as BF₄⁻, B(C₆F₅)₄⁻, PF₆⁻, AsF₆⁻ and SbF₆⁻, and a sulfonate ion such as p-CH₃C₆H₄SO₃⁻ and CF₃SO₃⁻ can be cited. The borate ion and the sulfonate ion are preferred for the counter anion, since they have high acid forming ability.

Moreover, phosphonium salts represented by Formula (I-2) or (1-3) described in Claim 8 of JP-A 2004-143135 can also be cited as the photo-acid generating agent. Detail description as to the phosphonium salts represented by Formula (I-2) or (I-3) is given in paragraphs (0161) to (0172) of the above JP-A 2004-143135.

Concrete examples of the sulfonium salt relating to the invention are listed below though the invention is not limited to them.

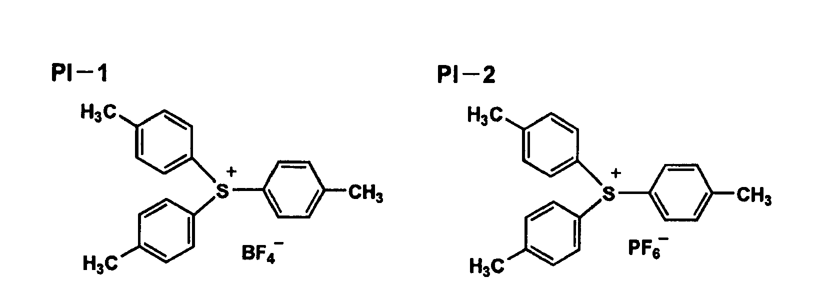

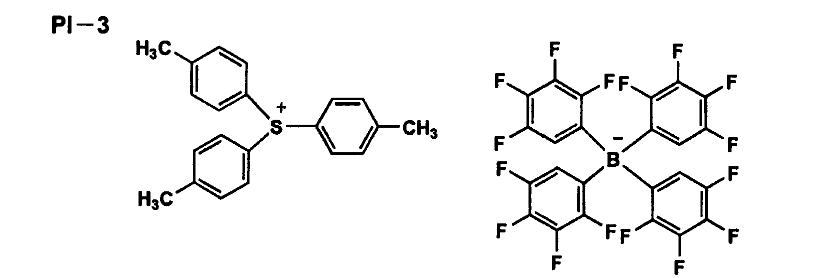

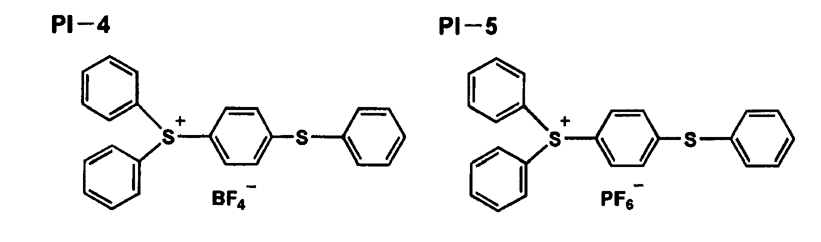

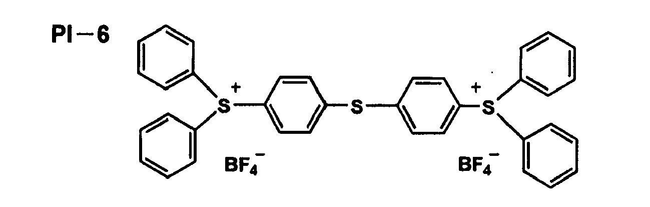

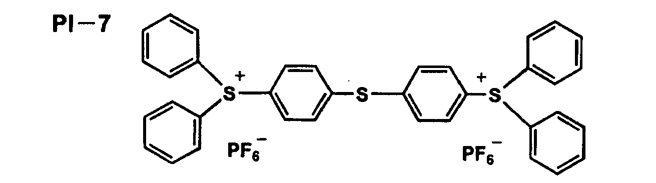

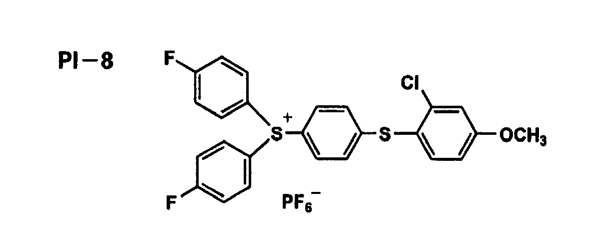

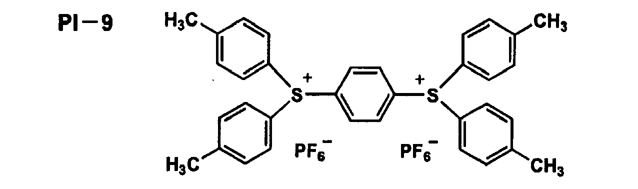

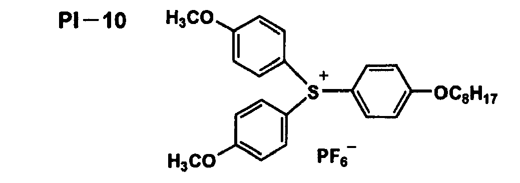

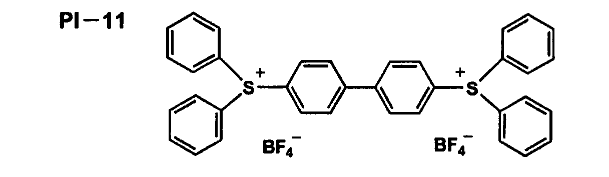

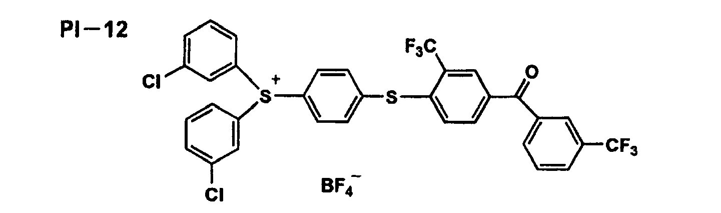

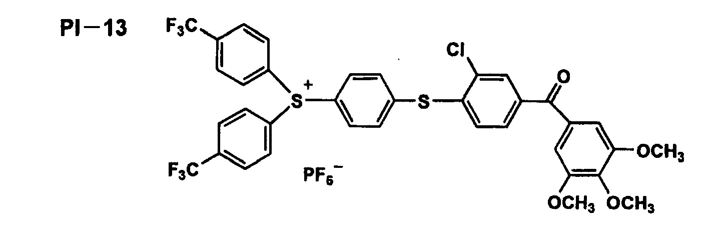

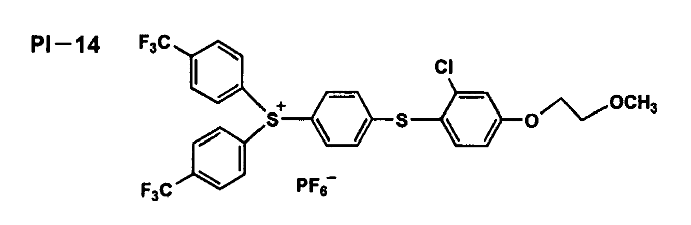

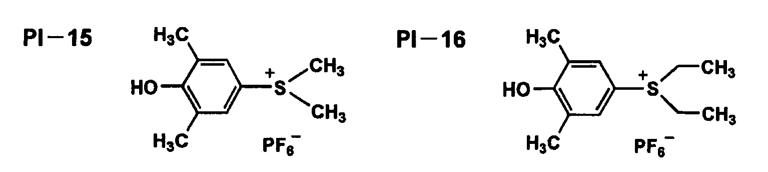

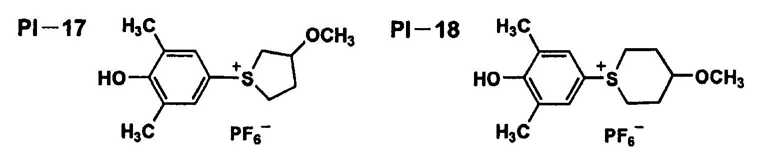

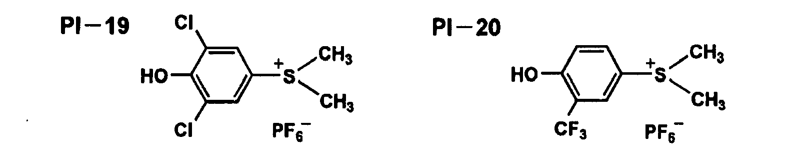

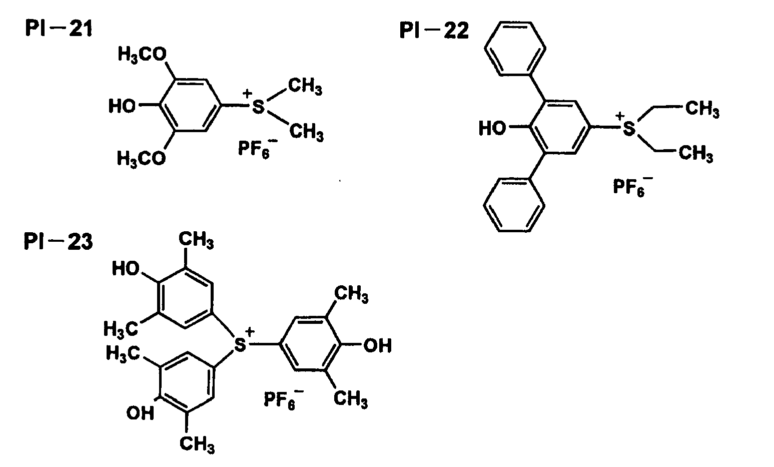

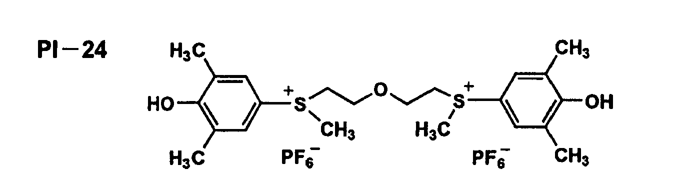

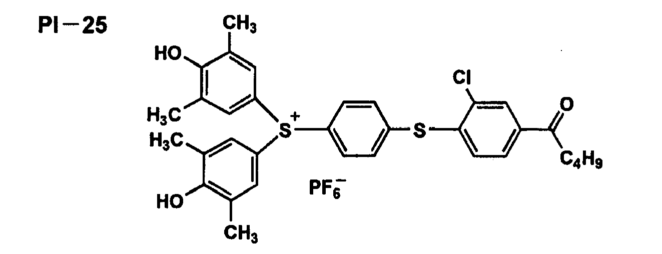

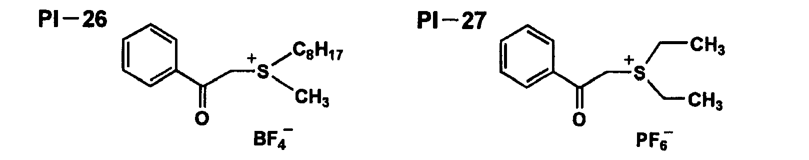

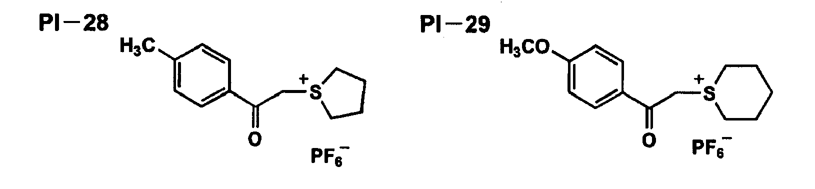

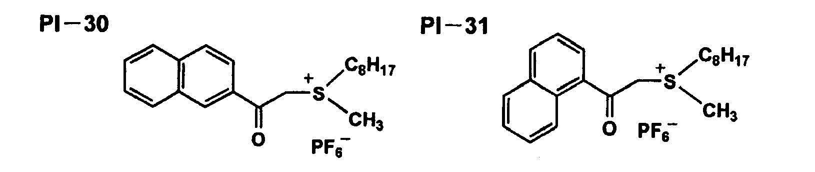

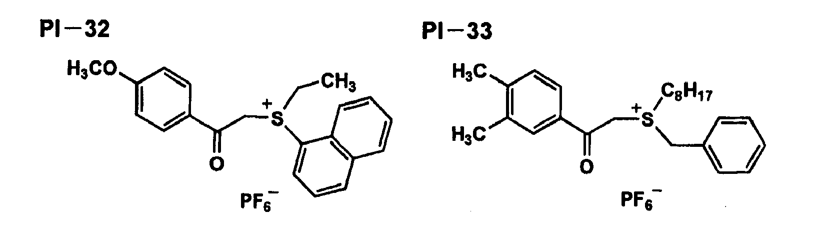

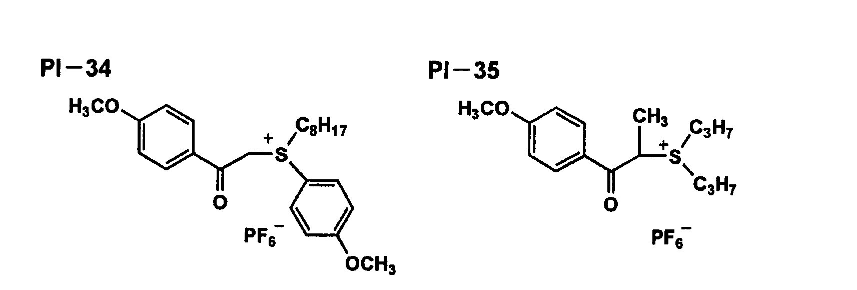

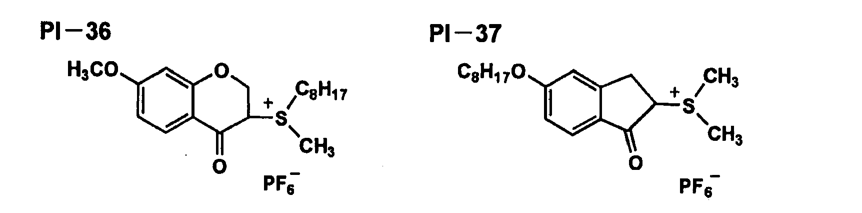

As a photopolymerization accelerating agent, anthracene, an anthracene derivative such as Adecaoptmer SP-100 manufactured by Asahi Denka Kogyo Co., Ltd., phenothiazine such as 10H-phenothiazine, a phenothiazine derivative such as 10-methylphenothiazine, 10-ethylphenothiazine, 10-decyl-phenothiazine, 10-acetylphenothiazine, 10-decylpheno-thiazine-5-oxide, 10-decylphenothiazine-5,5-dioxide, and 10-acetylphenothiazine-5,5-dioxide can be cited. These photopolymerization accelerating agents can be used singly of in combination of two or more kinds thereof.

The polymerizable actinic radiation curable composition of the invention relating to Claims 1 to 11 is described in detail bellow. The actinic radiation in the invention is preferably light emitted from a light source having light emission spectrum within the range of from 200 to 500 nm even though there is no limitation as to the wavelength range. Light emitted from a light source emitting UV region is particularly preferred. A light source having a peak of emitting light within the wavelength range of from 250 to 370 nm is preferable from the point of sensitivity. Density of energy is not specifically limited as long as that is sufficient for curing the curable composition, and is preferably from 1 to 30 W/cm². Electron rays can be used as the actinic radiation in the invention. In such case, irradiation of energy of not more than 300 eV is preferable.

Examples of the light source for irradiating the actinic radiation include a mercury arc lamp, a xenon arc lamp, a fluorescent lamp, a carbon arc lamp, a tungsten-halogen lamp for copier, a high pressure mercury lamp, a metal halide lamp, a non-electrode UV lamp, a low pressure mercury lamp, a UV laser, a xenon flush lamp, an insect trapping lamp, a black light, a sterilizer lamp, a cold cathode lamp and LED are usable. The actinic radiation curable composition of the invention is one which is cured by cross-linking of the epoxy compound of the invention and/or a monomer such as the oxetane compound caused by irradiation by the above light source.

It is preferable that the amount of the epoxy compound represented by the foregoing Formula (1) or (2) is from 5 to 90 parts by weight to 100 parts by weight of the polymerizable actinic radiation curable composition relating to Claims 1 to 11. The amount is more preferably from 10 to 40 parts by weight. The epoxy compound is preferably a mixture of a compound having only one oxirane ring and that having plural oxirane rings in the molecule thereof, and the ratio of the former to the later is preferably within the range of from 95:5 to 30:70. In the invention relating Claims 1 to 11, the oxetane compound is preferably added, and the content of the oxetane compound is within the range of from 10 to 90 parts by weight to 100 parts by weight of the actinic radiation curable composition of the invention. The content is more preferably from 50 to 70 parts by weight. The preferable adding amount of the foregoing compound capable of forming an acid by irradiation of actinic radiation is within the range of from 1 to 20 parts by weight to 100 parts by weight of the polymerizable actinic radiation curable composition of the invention.

The polymerizable actinic radiation curable composition of the invention relating to Claims 12 to 30 is described below.

As a result of the investigation by the inventors about the foregoing second object, it is found that a strong cured layer holding sufficient flexibility through prolonged storage duration can be formed without influence of environmental humidity by a low luminance light source when a polymerizable actinic radiation curable composition containing a compound represented by the foregoing Formula (X) is used. It is also found that high quality images can be obtained by the use of a polymerizable ink using such composition. Thus the invention relating to Claims 12 to 30 can be attained.

In the invention relating to Claims 12 to 30, the hardness is further improved and the strong cured layer holding sufficient flexibility through prolonged storage duration can be obtained when the compound represented by Formula (X) is used together with the oxetane compound.

Moreover, effects of further improving in the hardness and in the stability of the polymerizable actinic radiation curable composition can be obtained when di- or more-functional oxetane compound is used with together as a specific oxetane compound so that the polymerizable actinic radiation curable composition having high activity and excellent in the stability without any variation of the properties after storage and giving high hardness to the cured layer can be obtained.

In the polymerizable actinic radiation curable composition relating to Claims 12 to 30, more preferable reactivity and the flexibility of cured layer can be obtained by using a mono-functional alicyclic epoxy compound as a cation polymerizable compound to be used in combination together with the oxetane compound represented by Formula (X). High quality images satisfying the above-described various properties can be formed by using the polymerizable actinic radiation curable composition of the invention to an actinic radiation curable ink.

The invention relating to Claims 12 to 30 is described in detail below.

In Formula (X), Rx₁ and Rx₂, and RX₃ and R_{X4} each bonded to two carbon atoms constituting the oxirane ring are each a hydrogen atom or an alkyl group, and Rx₁ and Rx₂ are not hydrogen atoms at the same time, and RX₃ and Rx₄ are not hydrogen atoms at the same time. It is preferable that one of Rx₁ and Rx₂ is an alkyl group and the other is a hydrogen atom and one of RX₃ and Rx₄ is an alkyl group and the other is a hydrogen atom. Examples of the alkyl group include a methyl group, an ethyl group, a propyl group, an iso-propyl group, an n-butyl group, a sec-butyl group, a tert-butyl group, a pentyl group, a hexyl group, a cyclopentyl group, a cyclohexyl group, a heptyl group, an octyl group, a 2-ethylhexyl group, a decyl group and a dodecyl group.

These alkyl groups each may have a substituent, and examples of the substituent of the alkyl group having the substituent include a halogen atom such as a chlorine atom, a bromine atom, a fluorine atom; an alkenyl group such as a vinyl group, a 1-propenyl group, a 2-propenyl group, a 2-butenyl group and allyl group; an alkynyl group such as an acetylenyl group, a 1-propynyl group, a 2-propynyl group, a 2-butynyl group and a propargyl group; an alkoxy group such as a methoxy group, an ethoxy group, an n-propoxy group, an iso-propoxy group, an n-butoxy group and a tert-butoxy group; an acyl group such as an acetyl group, a propionyl group and a trifluoroacetyl group; an acyloxy group such as an acetoxy group, a propionyloxy group and a trifluoroacetoxy group; an alkoxycarbonyl group such as a methoxycarbonyl group, an ethoxycarbonyl group and a tert-butoxycarbonyl group; an alkylthiocarbonyl group such as a methylthiocarbonyl group, an ethylthiocarbonyl group and a tert-butylthiocarbonyl group; an aryloxycarbonyl; an alkylsulfonyl group; an acylamino group; an aryloxyamino group; an amino group; a ureido group; a urethane group; a cyano group; a nitro group; a hydroxyl group; and a substituent constituted by optional combination of these substituent.

As the alkyl group of one of Rx₁ and Rx₂ and that one of Rx₃ and Rx₄, an alkyl group having 1 to 6 carbon atom such as a methyl group, an ethyl group, a propyl group, an iso-propyl group, an n-butyl group,, a sec-butyl group, a tert-butyl group, a pentyl group, a hexyl group are more preferable. As the alkyl group of one of Rx₁ and Rx₂, and that one of Rx₃ and Rx₄, are most preferably the methyl group.

One of Rx₁ and Rx₂ may be bonded with X in Formula (X), one of Rx₃ and Rx₄ may be bonded with X in Formula (X), and one of Rx₁ and Rx₂ and one of Rx₃ and Rx₄ each may be bonded with X in Formula (X) at the same time. The bonding states when one of Rx₁ and Rx₂, and one of Rx₃ and Rx₄ are bonded with X at the same time is concretely shown by the following formulas (Formulas (X-a), (X-b) and (X-c) supplementary display a part of examples of the compound represented by Formula (X) and do not always show preferable bonding states of the compounds represented by Formula (X)).

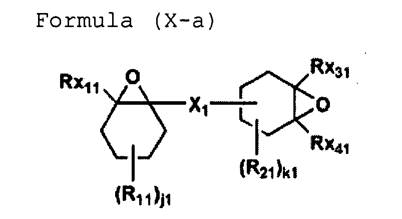

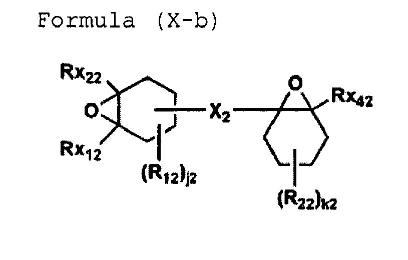

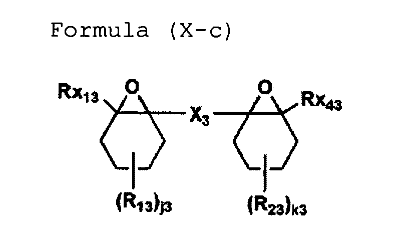

In the above Formulas (X-a), (X-b) and (X-c), Rx₁₁, Rx₃₁, Rx₄₁, Rx₁₂, Rx₂₂, Rx₄₂, Rx₁₃ and Rx₄₃, each represents a group the same as that represented by Rx₁, Rx₂, Rx₃ and Rx₄ in Formula (X), and R₁₁, R₂₁, R₁₂, R₂₂, R₁₃ and R₂₃ each represents a group the same as that represented by R₁ and R₂ in Formula (X), X₁, X₂ and X₃ each represents a group the same as the - CR₃(R₄)- group in Formula (X), and j1, j2, j3, k1, k2, and k3 are each the same as j and k in Formula (X), respectively.

In Formula (X), R₁ and R₂ are each a hydrogen atom or a substituent. As examples of the substituent, groups the same as the foregoing alkyl group and substituted alkyl group exemplified for Rx₁, Rx₂, Rx₃ and Rx₄ are cited, and the alkyl group, alkoxycarbonyl group and alkoxycarbonyl group are preferable as the substituent, and the alkyl group is more preferable. When R₁ and R₂ are each the substituent, these substituents each independently may have further a substituent and the above-mentioned substituents can be cited as example of such substituent. When R₁ or R₂ is plural, they may be the same or different and may be for a ring by bonding at an optional site. J and k are each an integer of from 1 to 3 and preferably 0 or 1. When j and k are 1, the preferable substituting site is a site for forming the following structure.

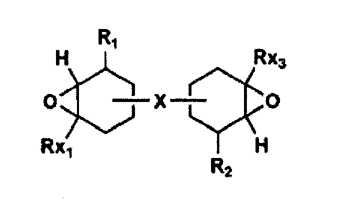

In Formula (X), X is an oxygen atom, a sulfur atom, a - CR₃(R₄)- group, an -SO- group, an -SO₂- group, a -CO- group, a -CS- group or a group formed by optionally combining these groups.

Typical structure of examples of the group formed by optionally combining an oxygen atom, a sulfur atom, a - CR₃(R₉)- group, an -SO- group, an -SO₂- group, a -CO- group, a -CS- group are as follows (in the formulas, * represents the bonding site with the alicyclic epoxy structure and R'₃ and R'₄ are each a group the same as the later-mentioned R₃ and R₄). The structure listed below may be optionally combined.

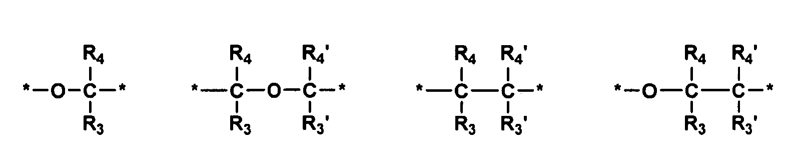

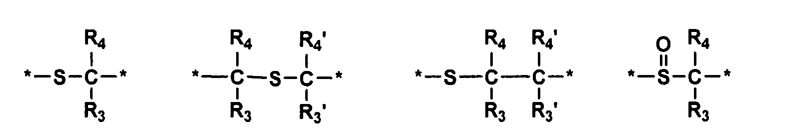

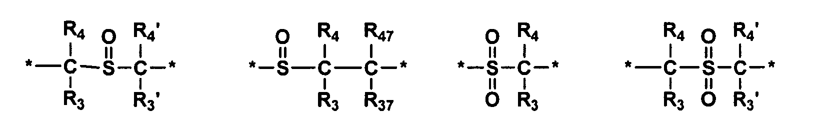

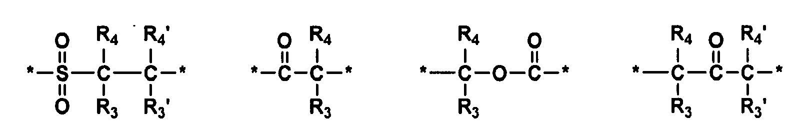

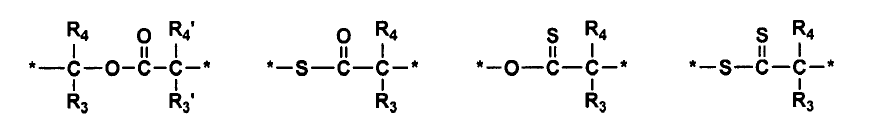

In Formula (X), X is preferably the oxygen atom or a group formed by optionally combining with the oxygen atom and the oxygen atom is most preferable. R₃ and R₄ are each a hydrogen atom of a substituent; as examples of the substituent, the same as the alkyl group and substituted alkyl group exemplified for Rx₁, Rx₂, Rx₃ and RX₄ are cited.

When R₃ and R₄ are each a substituent, the substituent independently may have further a substituent and groups the same as the above-described substituent can be cited as examples of such substituent. R₃ and R₄ are each preferably a hydrogen atom or an alkyl group, and a hydrogen atom or an alkyl group having 1 to 10 carbon atoms are more preferable, and further preferably a hydrogen atom or a methyl group, an ethyl group, a propyl group, an iso-propyl group, an n-butyl group, a sec-butyl group, a tert-butyl group, a pentyl group, a hexyl group and a cyclohexyl group.

It is allowed that the compound represented by Formula (X) becomes a tri- or more-functional epoxy compound by further substituting the substituent of R₃, R₄, R'₃ or R'₄ with an alicyclic epoxy structure.

When the compound represented by Formula (X) becomes a tri-functional epoxy compound, compounds represented by Formula (X-1) are preferable and when the compound represented by Formula (X) becomes a tetra-functional epoxy compound, compounds represented by Formula (X-2) are preferable.

Formula (X-1) EPX-(Lx)n-EPY

Formula (X-2) EPX-Lx-EPX

In the formulas, EPX represents the following group, and EPY represents the following group.

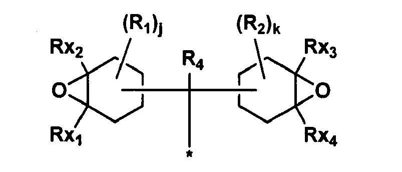

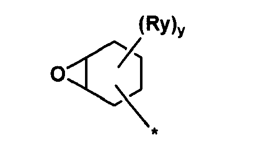

In Formulas (X-1) and (X-2), Rx₁, Rx₂, Rx₃, Rx₄, R₁, R₂, R₃, R₄, j and k are each the same as Rx₁, Rx₂, Rx₃, Rx₄, R₁, R₂, R₃, R₄, j and k in Formula (X), respectively, and Lx is a di-valent linking group which may contain an oxygen atom or a sulfur atom in the principal chain thereof or a simple link. * represents the linking site of EPX and Lx or EPY and Lx, n is 0 or 1 and y is an integer of from 0 to 5.

Examples of the di-valent linking group represented by Lₓ which may contain an oxygen atom or a sulfur atom in the principal chain include the following group and groups formed by combining the group with a plurality of an -O-, a -S-, a - CO- group and -CS- group can be cited.
Methylene group [-CH₂-]
Ethylidene group [>CHCH₃]
Iso-propylidene group [>C(CH₃)CH₂-]
1,2-ethylene group [-CH₂CH₂-]
1,2-propylene group [-CH(CH₃)CH₂-]
1,3-propanediyl group [-CH₂CH₂CH₂-]
2,2-dimethyl-1,3-propanediyl group [-CH₂C(CH₃)₂CH₂-]
2,2-dimethoxy-1,3-propanediyl group [-CH₂C(OCH₃)₂CH₂-]
2,2-dimethoxymethyl-1,3-propanediyl group [-CH₂C(CH₂OCH₃)₂CH₂-]
1-methyl-1,3-propanediyl group [-CH₂(CH₃)CH₂CH₂-]
1,4-butanediyl group [-CH₂CH₂CH₂CH₂-]
1,5-pentanediyl group [-CH₂CH₂CH₂CH₂CH₂-]
Oxydiethylene group [-CH₂CH₂OCH₂CH₂-]
Thiodiethylene group [-CH₂CH₂SCH₂CHz-]
3-oxothiodietylene group [-CH₂CH₂SOCH₂CH₂-]
3,3 dioxodiethylene group [-CH₂CH₂O₂CH₂CH₂-]
1,4-dimethyl-3-oxa-1,5-pentanediyl group [-CH(CH₃)CH₂OCH(CH₃)CH₂-]
3-oxopentanediyl group [-CH₂CH₂COCH₂CH₂-]
1,5-dioxo-3-oxapentanediyl group [-COCH₂OCH₂CO-]
4-oxa-1,7-heptanediyl group [-CH₂CH₂CH₂OCH₂CH₂CH₂-]
3, 6-dioxa-1, 8-octanediyl group [-CH₂CH₂OCH₂CH₂OCH₂CH₂₋]
1,4,7-trimethyl-3,6-dioxa-1,8-octanediyl group [-CH(CH₃)CH₂OCH(CH₃)CH₂OCH (CH₃) CH₂-1]
5,5-dimethyl-3,7-dioxa-1,9-nonanediyl group [-CH₂CH₂OCH₂C(CH₃)₂CH₂OCH₂CH₂-]
5,5-dimethoxyl-3,7-dioxa-1,9-nonanediyl group [-CH₂CH₂OCH₂C(OCH₃)₂CH₂OCH₂CH₂-]
5,5-dimethoxymethyl-3,7-dioxa-1,9-nonanediyl group [-CH₂CH₂OCH₂C(CH₂OCH₃)₂CH₂OCH₂CH₂-]
4,7-dioxo-3,8-dioxa-1,10-decanediyl group [-CH₂CH₂O-COCH₂CH₂CO-OCH₂CH₂-]
3,8-dioxo-4,7-dioxa-1,10-decanediyl group [-CH₂CH₂CO-O-CH₂CH₂O-COCH₂CH₂-]
1,3-cyclopentanediyl group [-1,3-C₅H₈-]
1,2-cyclohexanediyl group [-1,2-C₆H₁₀-]
1,3-cyclohexanediyl group [-1,3-C₆H₁₀-]
1,4-cyclohexanediyl group [-1,4-C₆H₁₀-]
2,5-tetrahydrofurandiyl group [2,5-C₄H₆O-]
p-phenylene group [-p-C₆H₄-]
m-phenylene group [-m-C₆H₄-]
α,α'-o-xylylene group [-o-CH₂-C₆H₄-CH₂-]
α,α'-m-xylylene group [-m-CH₂-C₆H₄-CH₂-]
α,α'-p-xylylene group [-p-CH₂-C₆H₉-CH₂-]
Furan-2,5-diyl-bismethylene group [2,5-CH₂-C₄H₂O-CH₂-]
Thiophene-2,5-diyl-bismethylene group [2,5-CH₂C₄H₂S-CH₂-]
Iso-propylidene-bis-p-phenylene group [-p-C₆H₄-C(CH₃)₂-p-C₆H₄-]

Lx may have a substituent. Examples of the substituent include a halogen atom such as a chlorine atom, a bromine atom and a fluorine atom, an alkyl group having 1 to 6 carbon atoms such as a methyl group, an ethyl group, a propyl group, an iso-propyl group and a butyl group; an alkoxy group having 1 to 6 carbon atoms such as a methoxy group, an ethoxy group, an propoxy group, an n-propoxy group, an iso-propoxy group, an n-butoxy group and tert-butoxy group; an acyl group such as an acetyl group, a propionyl group and a trifluoroacetyl group; an acyloxy group such as an acetoxy group, a propionyloxy group and a trifluoroacetoxy group; an alkoxycarbonyl group such as a methoxycarbonyl group, an ethoxycarbonyl group and tert-butoxycarbonyl group; a hydroxyl group; and a cyano group. The halogen atom, alkyl group, alkoxy group, alkoxycarbonyl group and hydroxyl group are preferable as the substituent.

Lx is preferably the di-valent linking group having 1 to 8 carbon atoms which may contain an oxygen atom or a sulfur atom in the principal chain thereof, and a di-valent linking group having the principal chain composed of only 1 to 5 carbon atoms is more preferable.

Ry is a substituent. As examples of such substituent, groups the same as the substituent of the alkyl group and the substituted alkyl group exemplified for Rx₁, Rx₂, Rx₃ and Rx₄ are cited, and an alkyl group and an alkoxy group are preferable, and an alkyl group is more preferable, and a methyl group, an ethyl group, a propyl group, an iso-propyl group, an n-butyl group, a sec-butyl group, a tert-butyl group, a pentyl group, a hexyl group and a cyclohexyl group are more preferable, and the methyl group, ethyl group, propyl group, iso-propyl group, n-butyl group, sec-propyl group and tert-butyl group are most preferable. Ry may have a substituent. As examples of this constituent, groups the same as the substituent of Lx can be cited.

Preferable compounds represented by Formula (X) are those represented by Formula (XX).

In Formula (XX), Rx, Rxx₁ and R_{XX2} are each an alkyl group. As examples of the alkyl group, groups the same as the alkyl group exemplified for Rx₁, Rx₂, Rx₃ and Rx₄ can be cited. The substituent is preferably a methyl group, an ethyl group, a propyl group, an iso-propyl group, an n-butyl group, a sec-butyl group and a tert-butyl group.

Xx is an oxygen atom or -CRxx₃(Rxx₄), provided that Rxx₃ and Rxx₄ each represent a hydrogen atom or an alkyl group. Rxx₃ and Rxx₄ are each a hydrogen atom or an alkyl group. As the alkyl group, groups the same as those represented by Rx can be cited. When Rxx₃ and Rxx₄ are each an alkyl group, the alkyl group may be either linear or branched and is preferably an alkyl group having 1 to 20 carbon atoms, more preferably an alkyl group having 1 to 12 carbon atoms, and further preferably a methyl group, an ethyl group, a propyl group, an iso-propyl group, an n-butyl group, a sec-butyl group, a tert-butyl group, a pentyl group, a hexyl group, a cyclohexyl group, a heptyl group, an octyl group. jx and kx are each an integer of from 0 to 3 and preferably 0 or 1.

More preferable compounds represented by Formula (X) are those represented by Formula (XX-2).

In Formula (XX-2), Rxx₂₁ and Rxx₂₂ are each a hydrogen atom or an alkyl group having 1 to 4 carbon atoms and preferably a methyl group, an ethyl group and a tert-butyl group. Rxx₂₃ and Rxx₂₄ are each a hydrogen atom or an alkyl group the same as those represented by the foregoing Rxx₃.

Examples of the compound represented by Formula (X) are listed below but the invention is not limited to them.

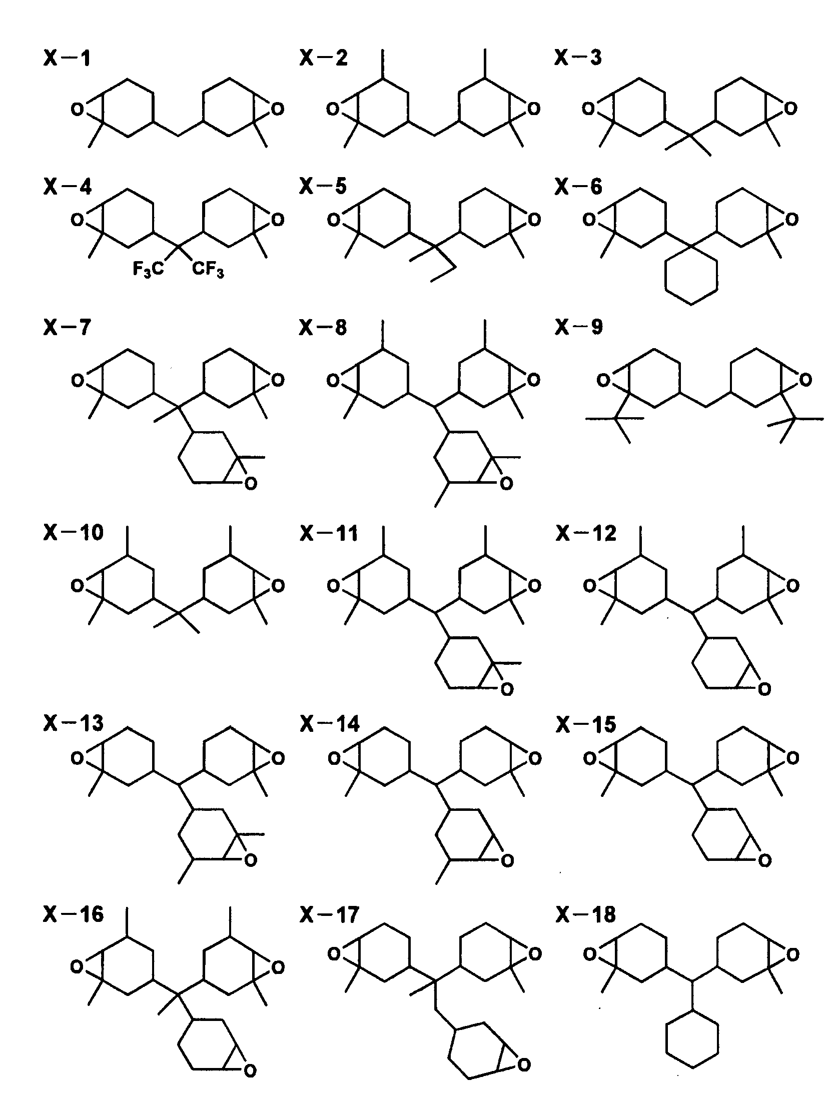

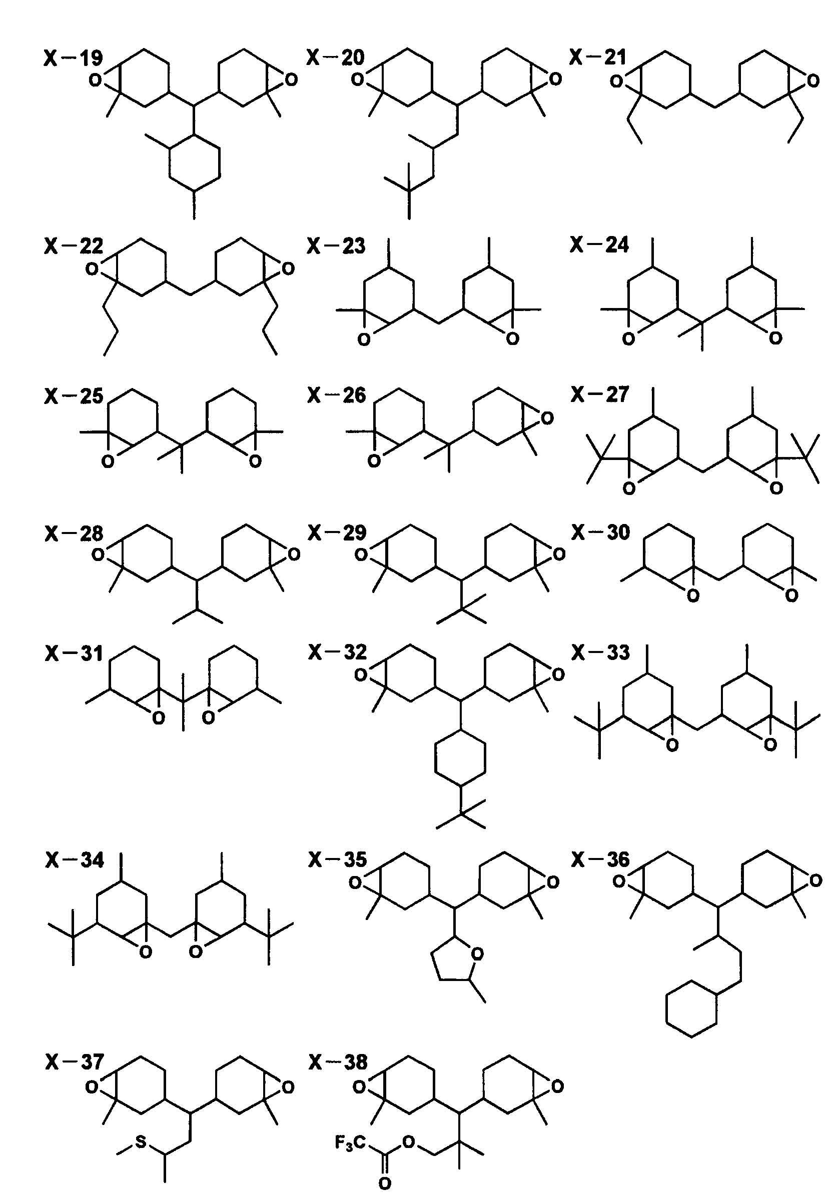

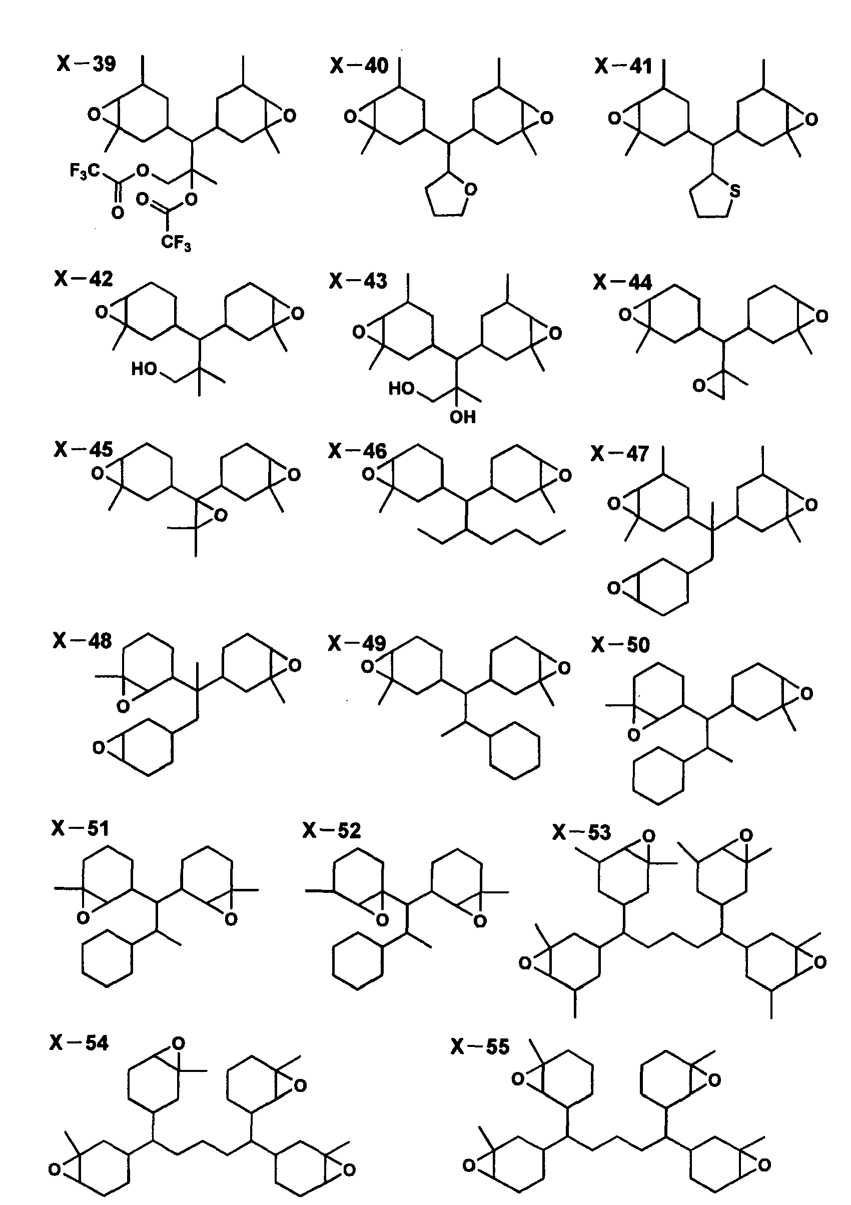

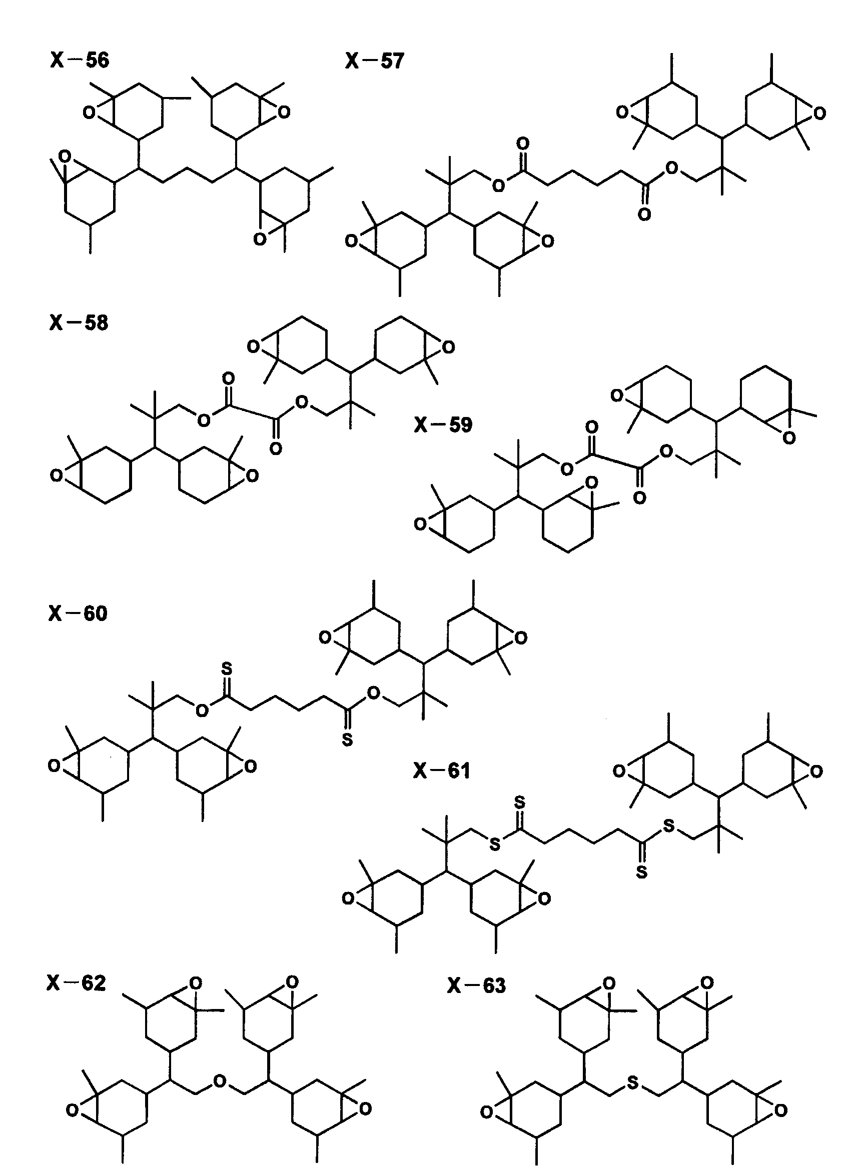

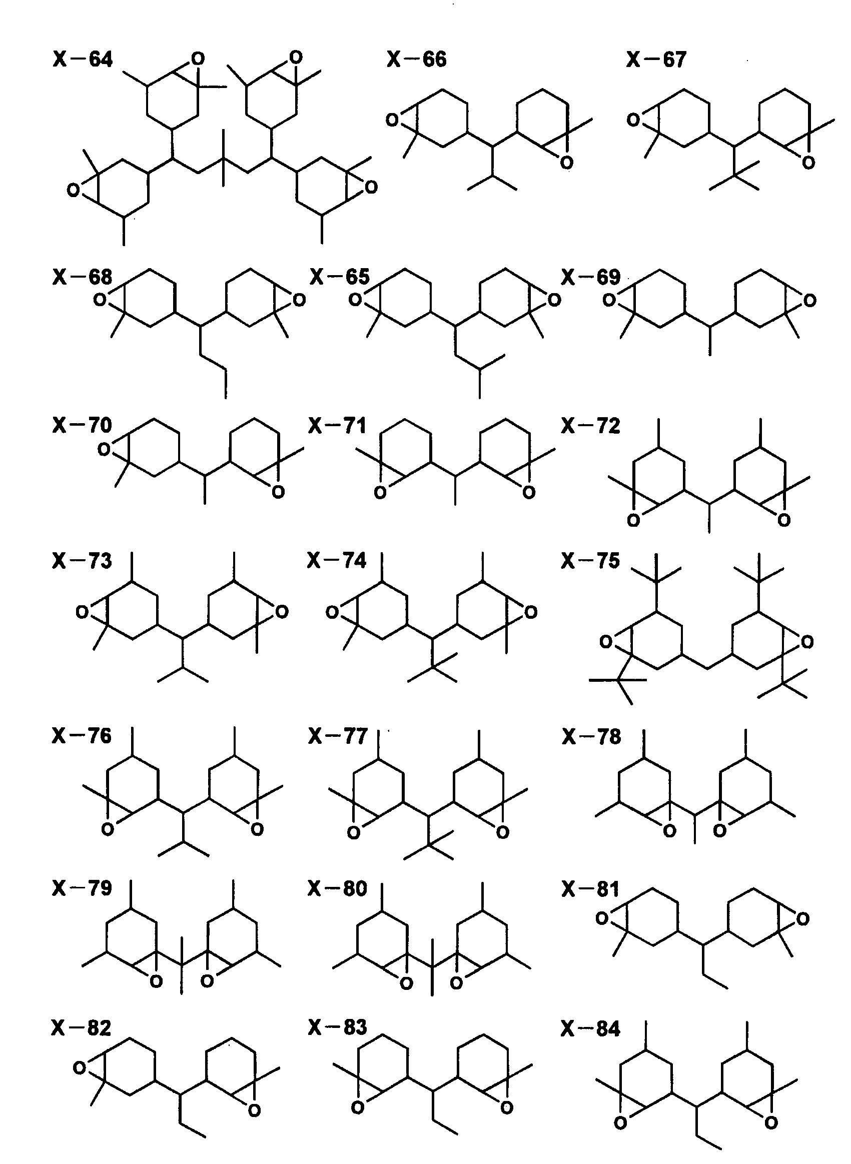

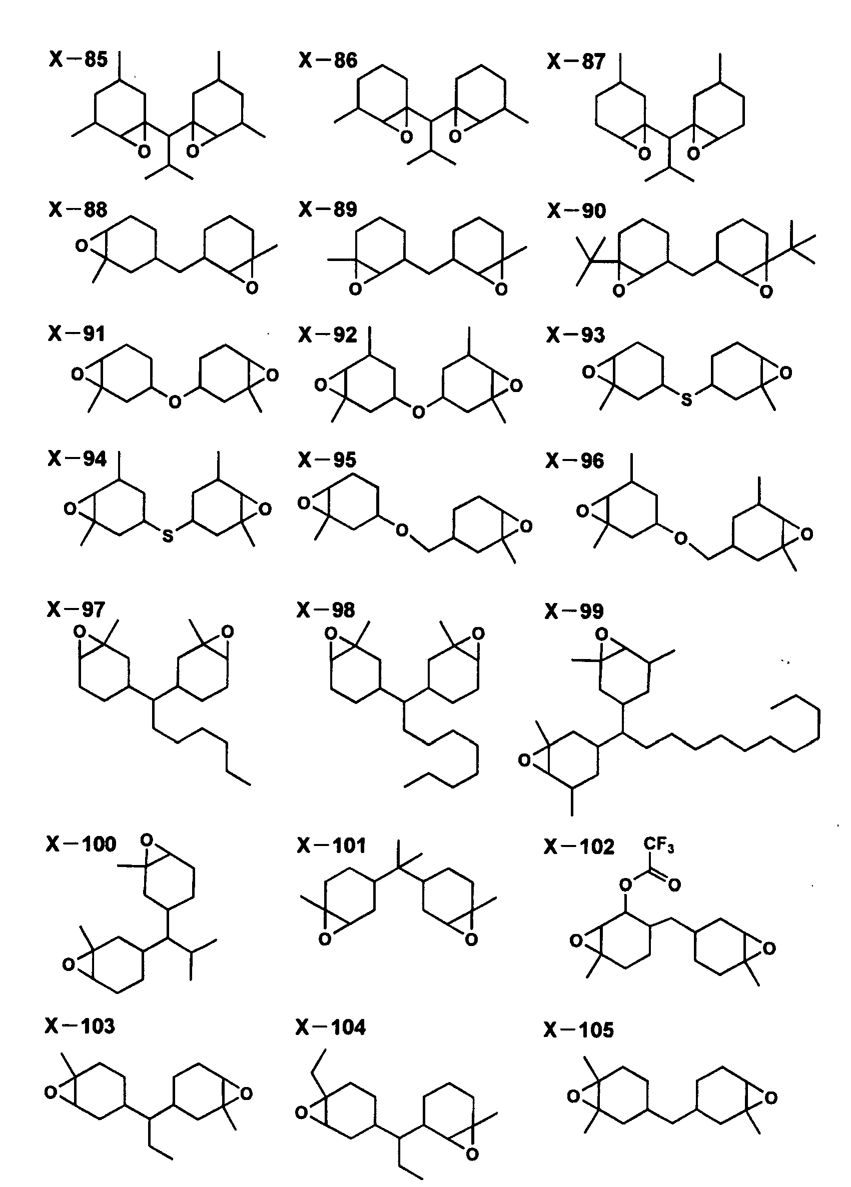

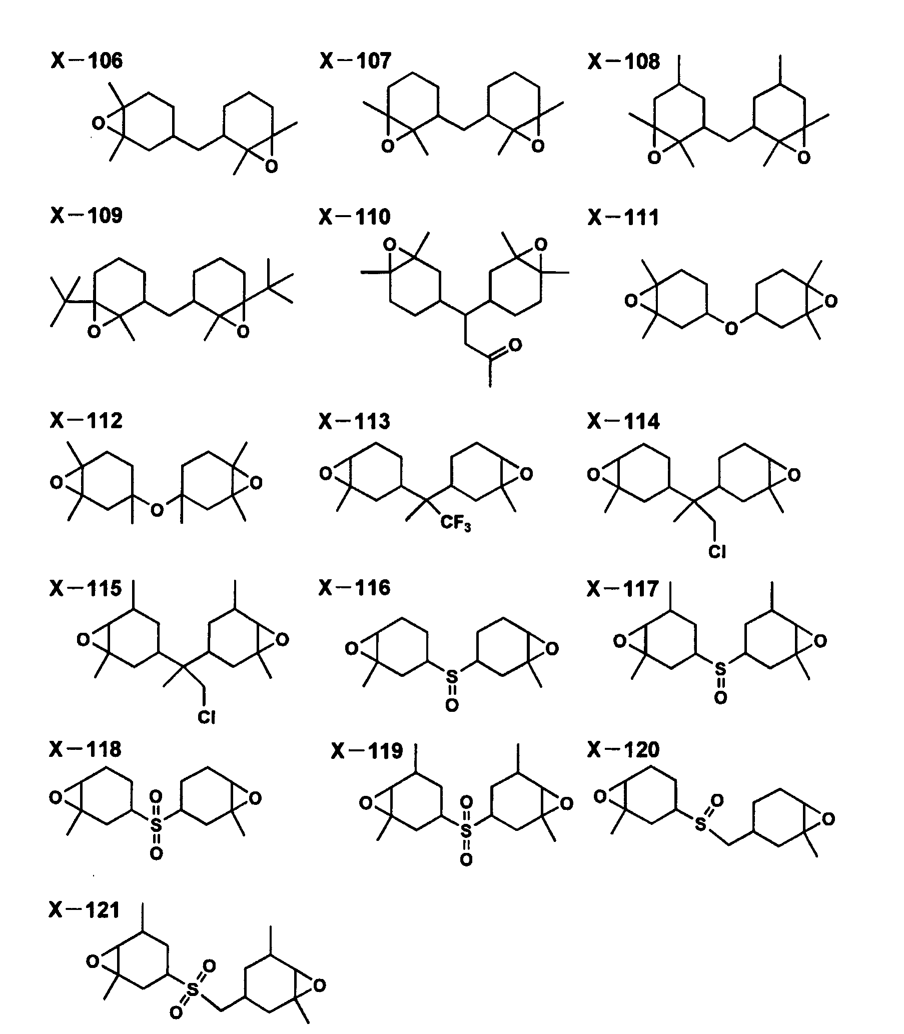

A method for producing the compounds represented by Formula (X) is not limited; for example, the compound can be obtained by that a phenol compound is dimerized or polymerized in the presence of an aldehyde or ketone compound under an acidic condition (such process can be carried out by referring the methods described in, for example, J. Am. Chem. Soc., 61, 345 (1939), U. P. Patent No. 2,046,318, J. Am. Chem. Soc., 63, 1731 (1941), J. Am. Chem. Soc., 71, 2287 (1949), Synthesis, 4, 253 (1989) and Bull. Chem. Soc. Jpn., 62, 3603 (1989)) and then subjected to reducing reaction using platinum catalyst to form a cyclohexane alcohol derivative (Such process can be carried out by referring the methods described in Monatsh. Chem., 89, 135 (1958), U. S. Patent No. 2,118,954 and German Patent No. 2,530,122), thereafter, the product is converted to an olefin derivative by dehydration reaction (such process can be carried out by referring the method described in J. Am. Chem. Soc., 38, 2518 (1916), J. Am. Chem. Soc., 40, 842 (1918), J. Am. Chem. Soc., 74, 4872 (1952) and J. Org. Chem., 35, 1646 (1970)) and then epoxidized by an optional method (this process can be carried out by referring the documents cited in the description relating the production method of the epoxy compounds represented by Formula (A) or (B) of the invention).

Synthesizing examples of the compound represented by Formula (X) are shown below but the invention is not limited to them.

### Synthesizing Example 1

### Synthesis of exemplified Compound X-1

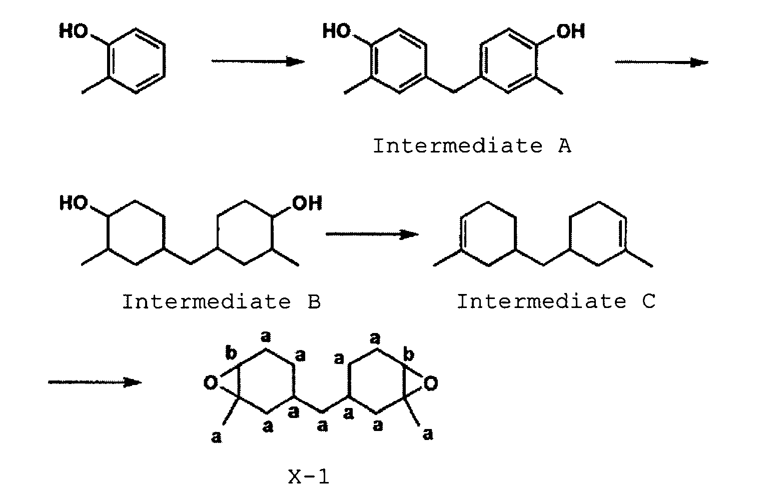

Intermediates A, B and C were synthesized according to usual methods. Concretely, o-cresol was reacted in methanol/hydrogen chloride in the presence of formaldehyde according to the method described in J. Am. Soc., 54, 4325 (1958) to obtain Intermediate A. After that, Intermediate A was reduced according to the method described in Monatsh. Chem. 89, 135 (1958) to obtain Intermediate B. Intermediate B was reacted according to the method described in J. Org. Chem. 35, 1646 (1970). Thus Intermediate C was obtained.

In 90 ml of methylene chloride, 10.2 g of Intermediate C was dissolved. In 100 ml of methylene chloride, 29.2 g of m-chloroperbenzoic acid was dissolved and the resultant solution was dropped into the solution of Intermediate C spending 2 hours. Reaction was carried out for 2 hours at room temperature, and then disappear of the raw material was confirmed by gas chromatography. After completion of the reaction, suitable amount of sodium sulfite was added for inactivating the excessive m-chloroperbenzoic acid. The organic layer was separated and washed for several times by a sodium hydrogen carbonate solution, and then the organic layer was separated and the solvent was removed by vacuum distillation. The resultant residue was purified by vacuum distillation to obtain X-1. The amount of the product was 7.7 g (yield: 65%). The objective substance was confirmed by NMR and mass spectrum.

(¹H-NMR)(CDCL₃)δ(ppm): 1.2 to 2.3 (m, 22H, the hydrogen atom substituted with the carbon atom of the foregoing a), 2.9 to 3.1 (m, 2H the hydrogen atom substituted with the carbon atom of the foregoing b)

### Synthesizing Example 2

### Synthesis of Exemplified Compound X-2

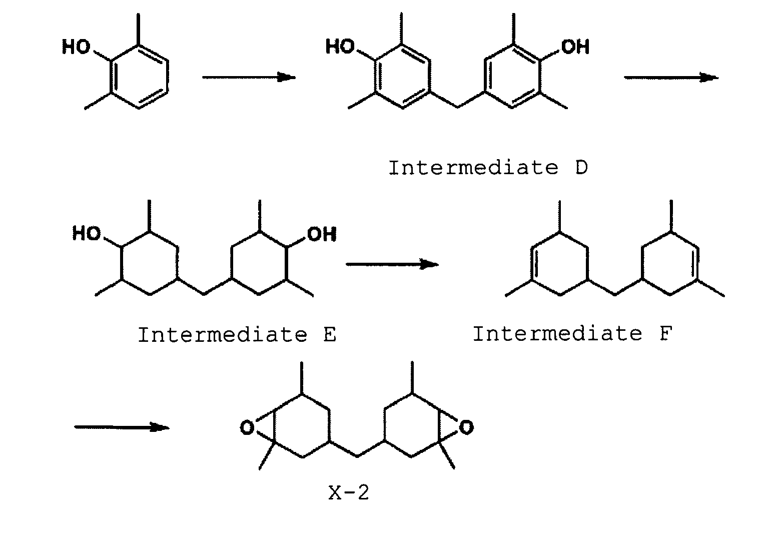

Intermediate F was synthesized in the same manner as in Synthesizing Example 1 except that o-cresol was replaced by 2,6-dimethylphenol.

In 90 ml of methylene chloride, 11.6 g of Intermediate F was dissolved. A solution prepared by dissolving 29,2 g of m-chloroperbenzoic acid in 100 ml of methylene chloride was dropped into the above solution of Intermediate F spending 2 hours. Reaction was carried out for 2 hours at room temperature and then disappearance of the raw material was confirmed by gas chromatography. After completion of the reaction, suitable amount of sodium sulfite was added for inactivating the excessive m-chloroperbenzoic acid. The organic layer was separated and washed for several times by a sodium hydrogen carbonate solution, and then the organic layer was separated and the solvent was removed by vacuum distillation. The resultant residue was purified by vacuum distillation to obtain X-2. The amount of the product was 8.9 g (yield: 68%). The objective substance was confirmed by NMR and mass spectrum.

### Synthesizing Example 3

### Synthesis of Exemplified Compound X-3

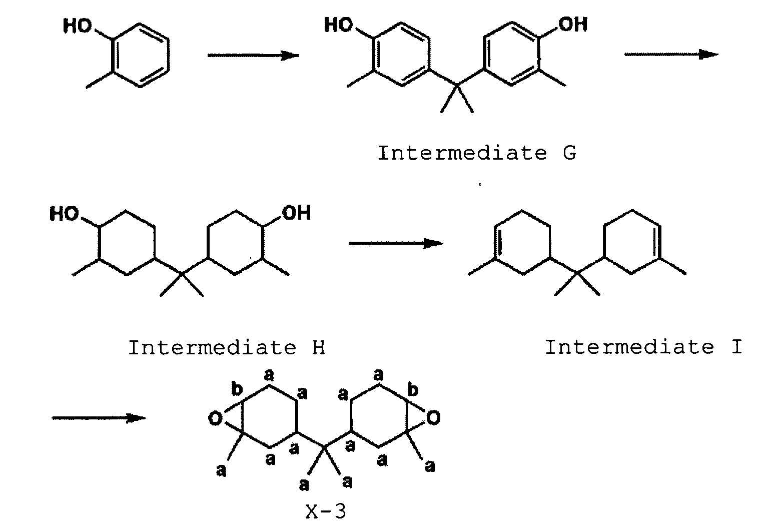

Intermediate G was synthesized according to an usual method. Concretely, Intermediate G was obtained by reacting o-cresol in the presence of acetone and concentrated hydrochloric acid according to the method described in J. Am. Chem. Soc., 71, 2287 (1949). After that, Intermediates H and I were synthesized in the same manner as in Synthesizing Example 1.

In 180 ml of methylene chloride, 23.2 g of Intermediate I was dissolved. In 200 ml of methylene chloride, 59.0 g of m-chloroperbenzoic acid was dissolved and dropped into the above solution of Intermediate I spending 6 hours. Reaction was carried out for 6 hours at room temperature and disappearance of the raw material was confirmed by gas chromatography. After completion of the reaction, suitable amount of sodium sulfite was added for inactivating the excessive m-chloroperbenzoic acid. The organic layer was separated and washed for several times by a sodium hydrogen carbonate solution, and then the organic layer was separated and the solvent was removed by vacuum distillation. The resultant residue was purified by vacuum distillation to obtain X-3. The amount of the product was 18.6 g (yield: 70%). The objective substance was confirmed by NMR and mass spectrum. (¹H-NMR)(CDCL₃)δ(ppm): 1.0 to 2.2 (m, 26H, the hydrogen atom substituted with the carbon atom of the foregoing a), 2.9 to 3.1 (m, 2H the hydrogen atom substituted with the carbon atom of the foregoing b).

### Synthesizing Example 4

### Synthesis of Exemplified Compound X-4

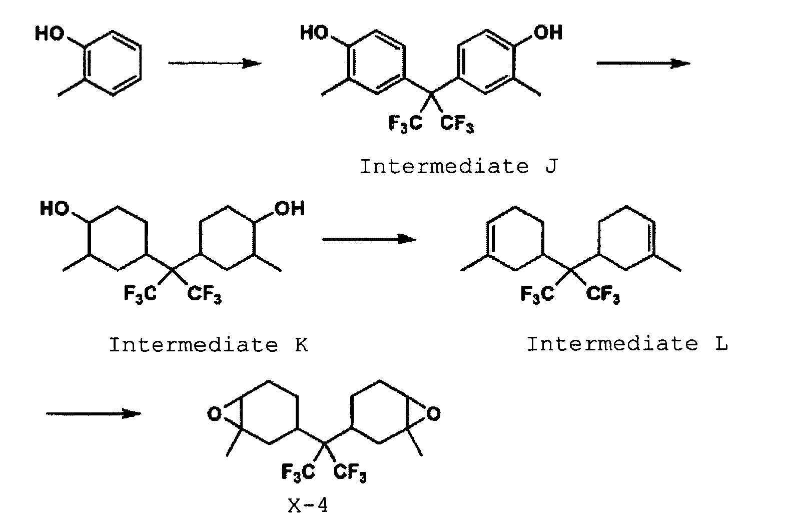

Intermediate J was synthesized according to a usual method. Concretely, Intermediate J was obtained by reacting o-cresol in the presence of hexafluoroacetone and hydrofluoric acid according to the method described in Bull. Acad. Sci. USSR Div. Chem. Sci. (Engl. Transl.), 4, 647 (1960). After that, Intermediates H and I and X-4 were synthesized in the same manner as in Synthesizing Example 1. The objective substances were confirmed by NMR and mass spectrum.

### Synthesizing Example 5

### Synthesis of Exemplified Compound X-5

X-5 was synthesized in a manner similar to that in Synthesizing Example 3 except that acetone described in Synthesizing Example 3 was replaced by 2-butanone. The object substance was confirmed by NMR and mass spectrogram.

### Synthesizing Example 6

### Synthesis of X-9

X-9 was synthesized in a manner similar to that in Synthesizing Example 1 except that o-cresol described in Synthesizing Example 1 was replaced by o-tert-butylphenol. The objective substance was confirmed by NMR and mass spectrogram.

### Synthesizing Example 7

### Synthesis of X-10

X-10 was synthesized in a manner similar to that in Synthesizing Example 1 except that o-cresol described in Synthesizing Example 1 was replaced by 2,6-dimethylphenol. The objective substance was confirmed by NMR and mass spectrogram.

### Synthesizing Example 8

### Synthesis of X-13

X-13 was synthesized in a manner similar to that in Synthesizing Example 3 except that acetone described in Synthesizing Example 3 was replaced by 3,5-dimethyl-4-hydroxy-benzaldehyde. The objective substance was confirmed by NMR and mass spectrogram.

### Synthesizing Example 9

### Synthesis of X-24

X-24 was synthesized in a manner similar to that in Synthesizing Example 3 except that acetone described in Synthesizing Example 3 was replaced by 3,5-dimethyl-4-hydroxy-benzaldehyde. The objective substance was confirmed by NMR and mass spectrogram.

### Synthesizing Example 10

### Synthesis of X-53

X-53 was synthesized in a manner similar to that in Synthesizing Example 1 except that o-cresol described in Synthesizing Example 1 and formaldehyde were each replaced by 2,6-dimethylphenol and a 50% aqueous solution of glutaraldehyde, respectively. The objective substance was confirmed by NMR and mass spectrogram.

### Synthesizing Example 11

### Synthesis of Exemplified Compound X-92

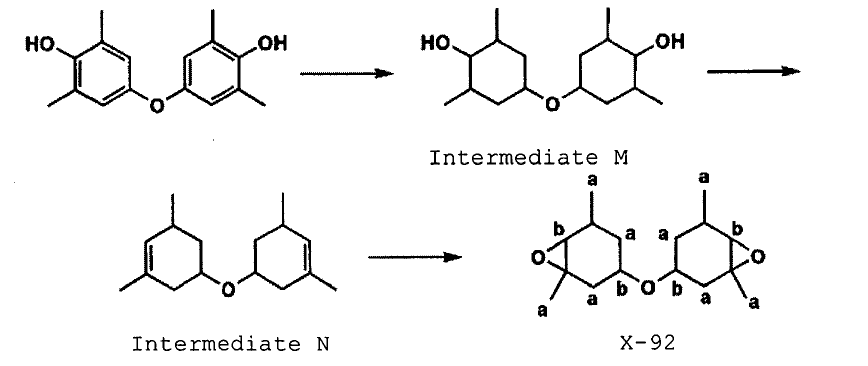

Intermediate M was obtained by reducing 3,3',5,5'-tetramethyl-4,4'-dihydroxydiphenyl ether according to the method described in Monatsh. Chem., 89, 135 (1958). And then Intermediate M was reacted according to the method described in J. Org. Chem., 35, 1646 (1970) to obtain Intermediate N. Exemplified Compound X-92 was obtained by subjecting Intermediate N to oxygen reaction using m-chloroperbenzoic acid according to the method described in Synthesizing Example 1. The objective substance was confirmed by NMR and mass spectrum. (¹H-NMR)(CDCL₃)δ(ppm): 1.0 to 2.1 (m, 20H, the hydrogen atom substituted with the carbon atom of the foregoing a), 2.7 to 3.1 (m, 4H the hydrogen atom substituted with the carbon atom of the foregoing b).

### Synthesizing Example 12

### Synthesis of Exemplified Compound X-119

Exemplified Compound X-119 was obtained according to the method described in Synthesizing Example 11 except that 3,3',5,5'-tetramethyl-4,4'-dihydroxydiphenyl ether was replaced by bis (40hydroxy-3,5-dimethyl) sulfone. Objective substance was confirmed by NMR and mass spectrum.

Content of the compound is preferably from 5 to 80% by weight. When the content is less than 5% by weight, the curing rate tends to be easily influenced by environmental humidity and when the content exceeds 80% by weight, the contacting ability to the substrate is considerably lowered. In the invention, the compounds represented by Formula (X) may be used singly or in suitable combination of two or more kinds thereof.

Viscosity of the polymerizable actinic radiation curable composition containing the compound represented by Formula (X) relating to Claims 12 to 30 is preferably controlled into the range of from 1 to 500 mPa·s at 25 °C from the viewpoint of handling, coating suitability and permeating ability into a porous material. The polymerizable actinic radiation curable composition is preferably containing no solvent though it may be diluted by a solvent available on the market. When the viscosity of the compound represented by Formula (X) is sufficiently low, the compound it self can be used as a reactive solvent. When the viscosity is higher than 500 mPa·s, the compound is preferably combined with a low viscosity reactive diluent. As the suitable diluent, a compound having sufficiently low viscosity among the compounds represented by Formula (X) an oxetane compound and a compound represented by Formula (A) each having sufficiently low viscosity may be used for combining with the high viscosity compound. In such case, the viscosity of the reactive diluent is preferably from 1 to 400 mPa·s, more preferably from 1 to 300 mPa·s, and most preferably from 1 to 150 mPa·s, at 25 °C.

As the compound having oxetane ring usable in the invention relating to Claims 12 to 30, known oxetane compounds such as those disclosed in JP-A 2001-220526 and 2001-310937 are entirely applicable.

In the polymerizable actinic radiation curable composition relating to Claims 12 to 30, the oxetane compound having no substituent at 2-position is preferably used together with the compound represented by Formula (X). As an example of the oxetane compound having no substituent at 2-position, compounds represented by foregoing Formula (101) can be cited.

The oxetane compound having two oxetane rings is particularly preferred since the resultant composition is excellent in the adhesiveness and the working suitability because of low viscosity. As an example of the oxetane compound having two oxetane rings, those represented by the foregoing Formula (102) are cited.

As the concrete example of the oxetane compound having two oxetane rings, the above-described Exemplified Compounds 11 and 12 can be cited.

Preferable examples of the compound having two oxetane rings other than the above-mentioned include compounds represented by the foregoing Formula (107) described in this specification.

As an example of the compound having three or four oxetane rings, compounds represented by the foregoing Formula (108) described in this specification can be cited.

An example of compound having three or four oxetane rings is the foregoing Exemplified Compound 13 described in this specification.

As an Example of the compound having one to four oxetane rings other than the above-described, compounds represented by the foregoing Formula (109) described in this specification.

As preferable concrete examples of oxetane compound to be used in the invention relating to Claims 12 to 30, the foregoing exemplified Compounds 17 to 19 can be cited.

The above-described compounds having the oxetane ring can be produced by the method disclosed in the foregoing documents. The compounds having one to four oxetane rings and a high molecular weight approximately from 1,000 to 5,000 concretely described in the invention relating to Claims 1 to 11 are also usable in the invention relating to Claims 12 to 30.

### Mono-functional alicyclic epoxy compound

In the polymerizable actinic radiation curable composition relating to Claims 12 to 30, the epoxy compound represented by Formula (A) can be added together with the compound represented by Formula (X). The compound represented by Formula (A) is suitable for the invention as a means for controlling the viscosity of the polymerizable actinic radiation curable composition and the hardness, flexibility and the contacting ability with the substrate of the cured matter.

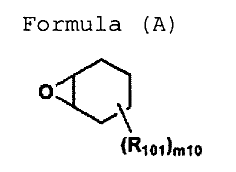

In the formula, R₁₀₁ is a substituent having no cation polymerizable or radical polymerizable reactive functional group, and m10 is 1, 2, 3 or 4.

R₁₀₁ in Formula (A) is the substituent having no cation polymerizable or radical polymerizable reactive functional group. Examples of the substituent include a halogen atom such as a chlorine atom, a bromine atom and a fluorine atom; an alkyl group having 1 to 20 carbon atoms such as a methyl group, an ethyl group, a propyl group, an iso-propyl group, an n-butyl group, an iso-butyl group, a tert-butyl group, a pentyl group, a cyclopropyl group, a cyclobutyl group, a cyclopentyl group and cyclohexyl group; an alkoxy group having 1 to 20 carbon atoms such as a methoxy group, an ethoxy group, an n-propoxy group, an iso-propoxy group, an n-butoxy group and tert-butoxy group; an acyl group having 2 to 20 carbon atoms such as an acetyl group, a propionyl group and a trifluoroacetyl group; an acyloxy group having 2 to 20 carbon atoms such as an acetoxy group, a propionyloxy group and trifluoroacetoxy group; an acylthio group having 2 to 20 carbon atoms such as an acetylthio group, a propionylthio group and a trifluoroacetylthio group; an alkoxycarbonyl group having 2 to 20 carbon atoms such as a methoxycarbonyl group, an ethoxycarbonyl group and a tert-butoxycarbonyl group; and an alkylthiocarbonyl group having 2 to 20 carbon atoms such as a methylthiocarbonyl group, an ethylthiocarbonyl group and a tert-butylthiocarbonyl group.

These groups each may have a substituent. Examples of the substituent include a halogen atom such as a chlorine atom, a bromine atom and a fluorine atom; an alkoxy group having 1 to 20 carbon atoms such as a methoxy group, an ethoxy group, an n-propoxy group, an iso-propoxy group, an n-butoxy group and tert-butoxy group; an acyl group having 2 to 20 carbon atoms such as an acetyl group, a propionyl group and a trifluoroacetyl group; an acyloxy group having 2 to 20 carbon atoms such as an acetoxy group, a propionyloxy group and trifluoroacetoxy group; an alkoxycarbonyl group having 2 to 20 carbon atoms such as a methoxycarbonyl group, an ethoxycarbonyl group and a tert-butoxycarbonyl group; an alkylthiocarbonyl group having 2 to 20 carbon atoms such as a methylthiocarbonyl group, an ethylthiocarbonyl group and a tert-butylthiocarbonyl group; an aryloxycarbonyl group; an alkylsulfonyl group; an arylsulfonyl group; a cyano group; and a nitro group. Preferable substituent is the halogen atom, alkoxy group, acyloxy group and alkoxycarbonyl group.

Alicyclic epoxide compounds represented by the following Formula (A-I) are more preferable since a cured layer with high harness is formed and the contacting ability with the substrate is improved by such compounds.

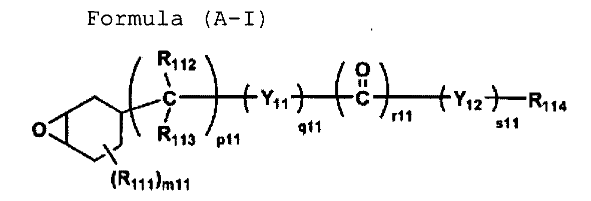

In the formula, R₁₁₁ is a substituent and m11 is 0, 1, 2 or 3. R₁₁₂, R,₁₃ and R₁₁₄ are each independently a hydrogen atom or a substituted or unsubstituted alkyl group. Y₁₁ and Y₁₂ are each independently O or S, p11 is 0, 1 or 2, q11 is 0 or 1, r1 is 0 or 1, and s1 is 0 or 1.

In Formula (A-I), R₁₁₁ represents a substituent. Examples of the substituent include a halogen atom such as a chlorine atom, a bromine atom and a fluorine atom; an alkyl group having 1 to 20 carbon atoms such as a methyl group, an ethyl group, a propyl group, an iso-propyl group, an n-butyl group, an iso-butyl group, a tert-butyl group, a pentyl group, a cyclopropyl group, a cyclobutyl group, a cyclopentyl group and cyclohexyl group; an alkoxy group having 1 to 20 carbon atoms such as a methoxy group, an ethoxy group, an n-propoxy group, an iso-propoxy group, an n-butoxy group and tert-butoxy group; an acyl group such as an acetyl group, a propionyl group and a trifluoroacetyl group; an acyloxy group having 2 to 20 carbon atoms such as an acetoxy group, a propionyloxy group and trifluoroacetoxy group; an alkoxycarbonyl group having 1 to 20 carbon atoms such as a methoxycarbonyl group, an ethoxycarbonyl group and a tert-butoxycarbonyl group; an alkylthiocarbonyl group having 2 to 20 carbon atoms such as a methylthiocarbonyl group, an ethylthiocarbonyl group and a tert-butylthiocarbonyl group, an aryloxycarbonyl group; an alkylsulfonyl group; an arylsulfonyl group; a cyano group; and nitro group. Preferable substituents are the alkyl group, alkoxy group and alkoxycarbonyl group.

R₁₁₂, R₁₁₃ and R₁₁₄ are each a hydrogen atom or a substituted or unsubstituted alkyl group. As examples of the alkyl group, groups the same as the alkyl groups represented by R₁₁₁ are cited. When the alkyl group has a substituent, examples of the substituent include a halogen atom such as a chlorine atom, a bromine atom and a fluorine atom; an alkoxy group having 1 to 20 carbon atoms such as a methoxy group, an ethoxy group, an n-propoxy group, an iso-propoxy group, an n-butoxy group and tert-butoxy group; an acyl group such as an acetyl group, a propionyl group and a trifluoroacetyl group; an acyloxy group having 1 to 20 carbon atoms such as an acetoxy group, a propionyloxy group and trifluoroacetoxy group; an alkoxycarbonyl group having 1 to 20 carbon atoms such as a methoxycarbonyl group, an ethoxycarbonyl group and a tert-butoxycarbonyl group; an alkylthiocarbonyl group having 2 to 20 carbon atoms such as a methylthiocarbonyl group, an ethylthiocarbonyl group and a tert-butylthiocarbonyl group; an aryloxycarbonyl group; an alkylsulfonyl group; an arylsulfonyl group; a cyano group; and a nitro group. The alkoxy group and alkoxycarbonyl group are preferable as the substituent.

Y₁₁ and Y₁₂ are each O or S and O is preferred.

m11 is o to 3 and preferably 1 or 2. p11 is 0, 1 or 2 and q11, r11 and s11 are each 0 or 1.

Alicyclic epoxide compounds represented by the following Formula (A-II) are particularly preferable since a cured layer with high harness is formed and the contacting ability with the substrate is improved by such compounds.

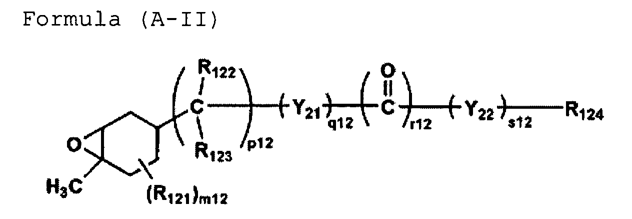

In the formula, R₁₂₁ is a substituent and m12 is 0, 1 or 2. R₁₂₂, R₁₂₃ and R₁₂₄ are each independently a hydrogen atom, or substituted or unsubstituted alkyl group. Y₂₁ and Y₂₂ are each independently O or S, p12 is 0, 1 or 2, q12 is 0 or 1, r12 is 0 or 1, and s12 is 0 or 1.

In the above formula, R₁₂₁ is a substituent, examples of which include a halogen atom such as a chlorine atom, a bromine atom and a fluorine atom; an alkyl group having 1 to 20 carbon atoms such as a methyl group, an ethyl group, a propyl group, an iso-propyl group, an n-butyl group, an iso-butyl group, a tert-butyl group, a pentyl group, a cyclopropyl group, a cyclobutyl group, a cyclopentyl group and a cyclohexyl group;
an alkoxy group having 1 to 20 carbon atoms such as a methoxy group, an ethoxy group, an n-propoxy group, an iso-propoxy group, an n-butoxy group and tert-butoxy group; an acyloxy group having 1 to 20 carbon atoms such as an acetoxy group, a propionyloxy group and trifluoroacetoxy group; an alkoxycarbonyl group having 1 to 20 carbon atoms such as a methoxycarbonyl group, an ethoxycarbonyl group and a tert-butoxycarbonyl group; an alkylthiocarbonyl group having 2 to 20 carbon atoms such as a methylthiocarbonyl group, an ethylthiocarbonyl group and a tert-butylthiocarbonyl group; an aryloxycarbonyl group; an alkylsulfonyl group; an arylsulfonyl group; a cyano group; and a nitro group. The alkyl, alkoxy group and alkoxycarbonyl group are preferable as the substituent.

Y₃₁ and Y₃₂ are each O or S and O is preferable. M12 is 0 to 2 and 0 or 1 is preferable, p12 is 0, 1 or 2, q12, r12 and s12 are each 0 or 1.

R₁₂₂, R₁₂₃ and R₁₂₄ are each a hydrogen atom, substituted or unsubstituted alkyl group. As examples of the alkyl group, groups the same as the alkyl groups of R₁₁₁ can be cited. Examples of substituent of the alkyl group having a substituent include a halogen atom such as a chlorine atom, a bromine atom and a fluorine atom; an alkoxy group having 1 to 20 carbon atoms such as a methoxy group, an ethoxy group, an n-propoxy group, an iso-propoxy group, an n-butoxy group and tert-butoxy group;
an acyl group such as an acetyl group, a propionyl group and a trifluoroacetyl group; an acyloxy group having 1 to 20 carbon atoms such as an acetoxy group, a propionyloxy group and trifluoroacetoxy group; an alkoxycarbonyl group having 1 to 20 carbon atoms such as a methoxycarbonyl group, an ethoxycarbonyl group and a tert-butoxycarbonyl group; an alkylthiocarbonyl group having 2 to 20 carbon atoms such as a methylthiocarbonyl group, an ethylthiocarbonyl group and a tert-butylthiocarbonyl group; an aryloxycarbonyl group; an alkylsulfonyl group; an arylsulfonyl group; a cyano group; and a nitro group. The alkoxy group and alkoxycarbonyl group are preferable as the substituent.

More preferable alicyclic epoxide is compounds represented by Formula (A-III), (A-IV) or (A-V) from the viewpoint of that the curing sensitivity is high, the contacting ability to the substrate of the cured layer is improved and the curing sensitivity is difficultly influenced by the variation of the printing environment.

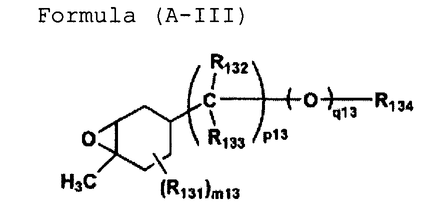

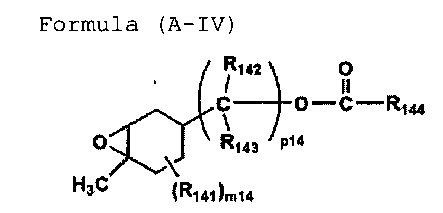

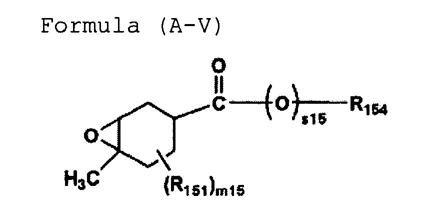

In the above formulas, R₁₃₁, R₁₄₁ and R₁₅₁ are each the same as the above R₁₁₁. m13, m14 and m15 are each 0 to 2 and 0 or 1 is preferable, and q13 and s15 are each 0 or 1. R₁₃₂, R₁₃₃, R₁₃₄, R₁₄₂, R₁₄₃, R₁₄₄ and R₁₄₅, are each synonymous with R₁₃₂, R₁₃₂ and R₁₃₂.

In Formula (A-III), (A-IV) or (A-V), R₁₃₁, R₁₄₁, and R₁₅₁ are each a substituent. Examples of the substituent include a halogen atom such as a chlorine atom, a bromine atom and a fluorine atom; an alkyl group having 1 to 20 carbon atoms such as a methyl group, an ethyl group, a propyl group, an iso-propyl group, an n-butyl group, an iso-butyl group, a tert-butyl group, a pentyl group, a cyclopropyl group, a cyclobutyl group, a cyclopentyl group and a cyclohexyl group; an alkoxy group having 1 to 20 carbon atoms such as a methoxy group, an ethoxy group, an n-propoxy group, an iso-propoxy group, an n-butoxy group and tert-butoxy group; an acyl group such as an acetyl group, a propionyl group and a trifluoroacetyl group; an acyloxy group having 1 to 20 carbon atoms such as an acetoxy group, a propionyloxy group and trifluoroacetoxy group; an alkoxycarbonyl group having 1 to 20 carbon atoms such as a methoxycarbonyl group, an ethoxycarbonyl group and a tert-butoxycarbonyl group; an alkylthiocarbonyl group having 2 to 20 carbon atoms such as a methylthiocarbonyl group, an ethylthiocarbonyl group and a tert-butylthiocarbonyl group; an aryloxycarbonyl group; an alkylsulfonyl group; an arylsulfonyl group; a cyano group; and a nitro group. The alkoxy group and alkoxycarbonyl group are preferable as the substituent.

Particularly preferable alicyclic epoxide is compounds represented by Formula (A-VI) from the viewpoint of that the curing sensitivity is high, the contacting ability to the substrate of the cured layer is improved and the curing sensitivity is difficultly influenced by the variation of the printing environment.

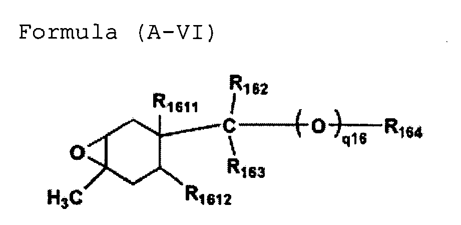

In the formula, R₁₆₁₁ and R₁₆₁₂ are each independently a hydrogen atom or an alkyl group having 1 to 6 carbon atoms. R₁₆₂, R₁₆₃ and R₁₆₄ are each independently a hydrogen atom, a substituted or unsubstituted alkyl group. q16 is 0 or 1.

In the above formula, R₁₆₁₁ and R₁₆₁₂ are each a hydrogen atom or an alkyl group having 1 to 6 carbon atoms such as a methyl group, an ethyl group, a propyl group, an iso-propyl group, a butyl group, a sec-butyl group, a t-butyl group, a pentyl group and a hexyl group. Preferable alkyl group is the methyl, ethyl and propyl group.

R_{162'} R₁₆₃ and R₁₆₄ are each independently a hydrogen atom, a substituted or unsubstituted alkyl group. As examples of the alkyl group, alkyl groups the same as the alkyl group of R₁₁₁ can be cited. Examples of substituent of the alkyl group having a substituent include a halogen atom such as a chlorine atom, a bromine atom and a fluorine atom; an alkoxy group having 1 to 20 carbon atoms such as a methoxy group, an ethoxy group, an n-propoxy group, an iso-propoxy group, an n-butoxy group and tert-butoxy group; an acyl group such as an acetyl group, a propionyl group and a trifluoroacetyl group; an acyloxy group having 1 to 20 carbon atoms such as an acetoxy group, a propionyloxy group and trifluoroacetoxy group; an alkoxycarbonyl group having 1 to 20 carbon atoms such as a methoxycarbonyl group, an ethoxycarbonyl group and a tert-butoxycarbonyl group; an alkylthiocarbonyl group having 2 to 20 carbon atoms such as a methylthiocarbonyl group, an ethylthiocarbonyl group and a tert-butylthiocarbonyl group; an aryloxycarbonyl group; an alkylsulfonyl group; an arylsulfonyl group; a cyano group; and a nitro group. The alkoxy group and alkoxycarbonyl group are preferable as the substituent. q16 is 0 or 1.

Concrete examples of mono-functional epoxy compound to be used in the invention relating to Claims 12 to 30 are shown below, but the invention is not limited to them.

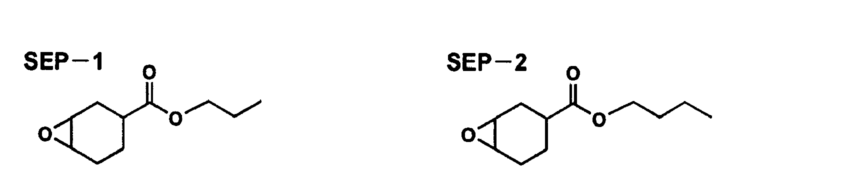

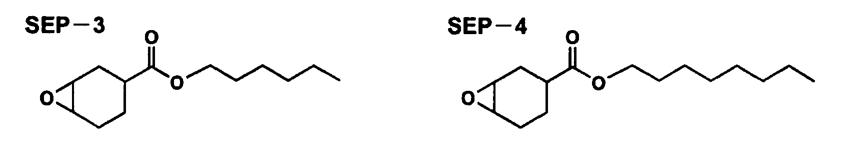

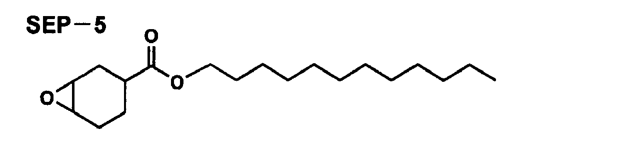

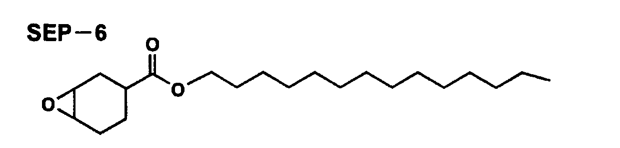

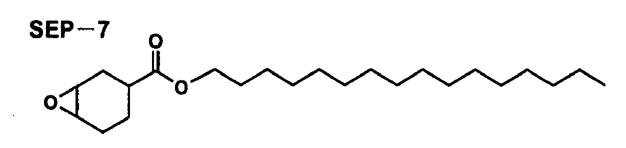

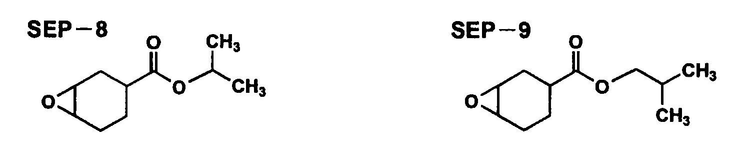

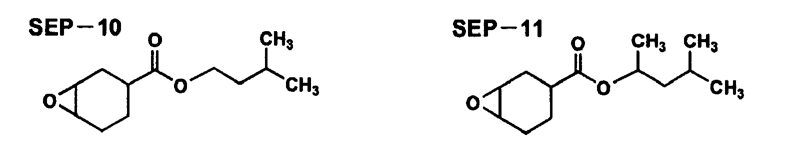

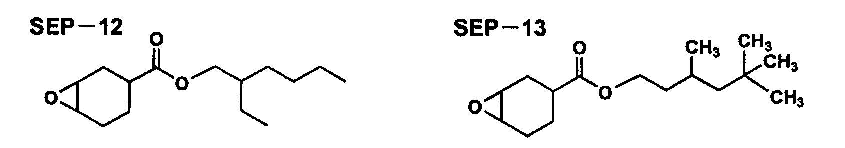

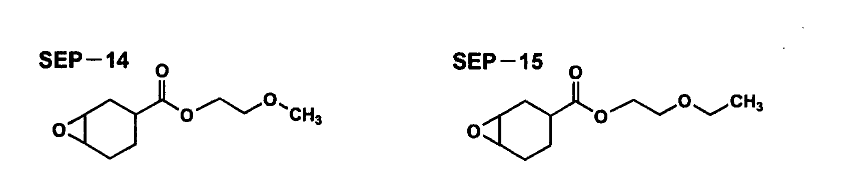

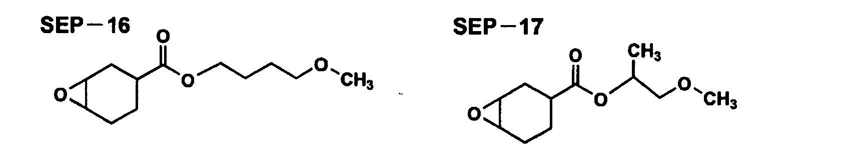

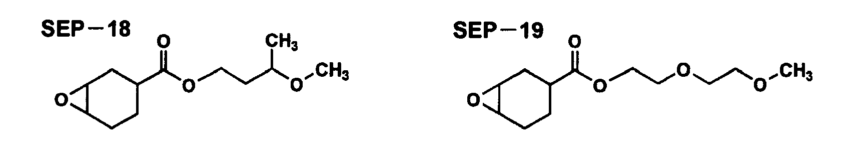

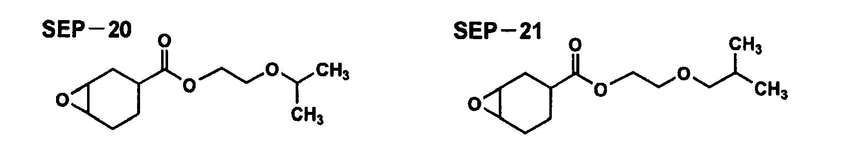

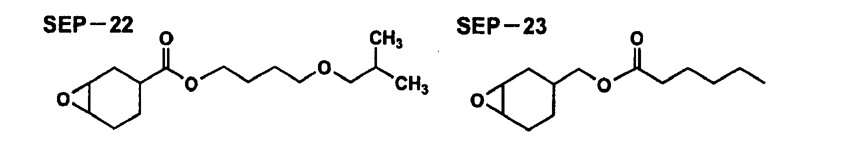

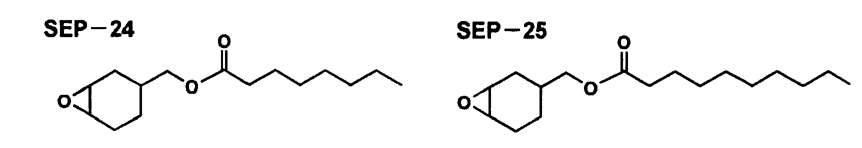

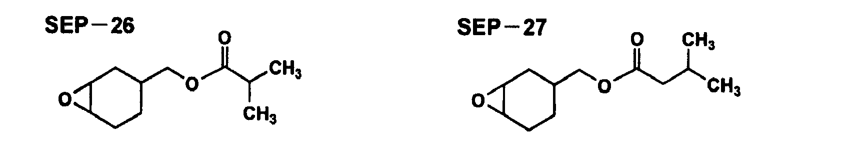

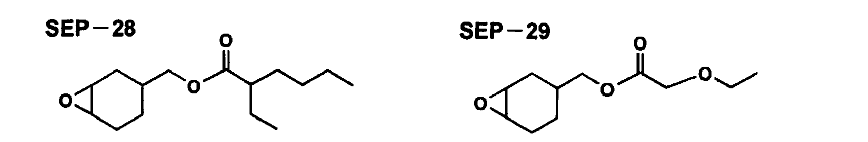

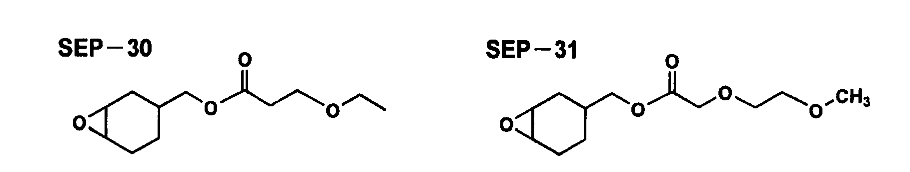

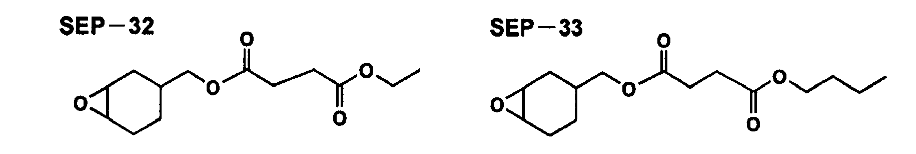

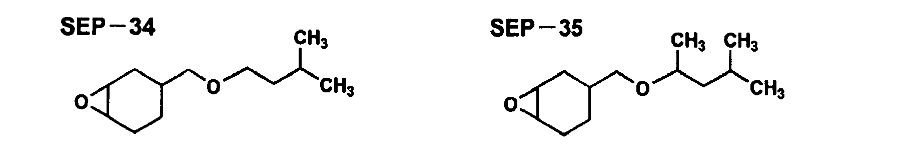

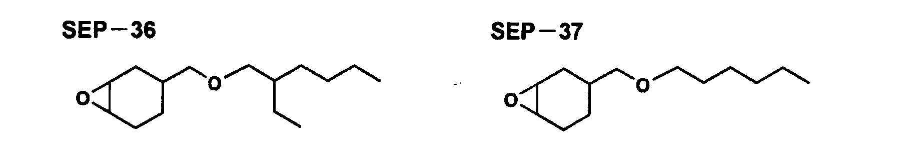

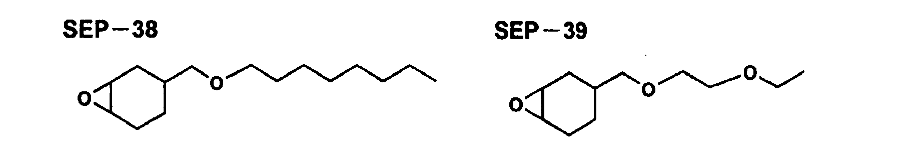

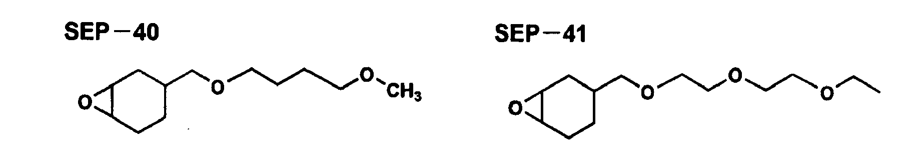

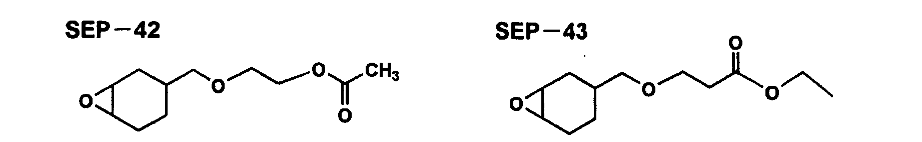

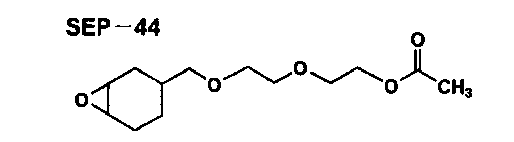

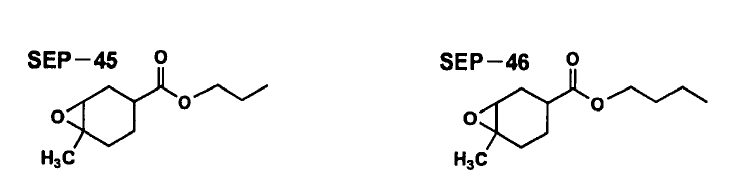

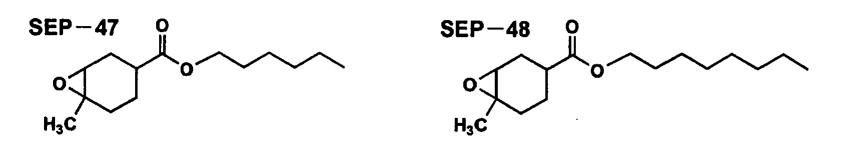

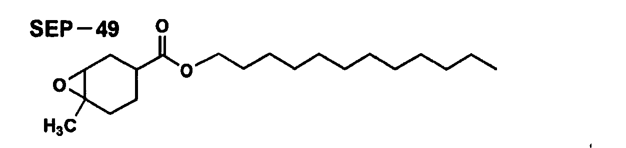

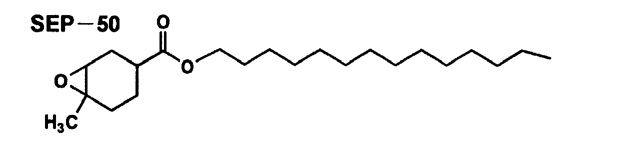

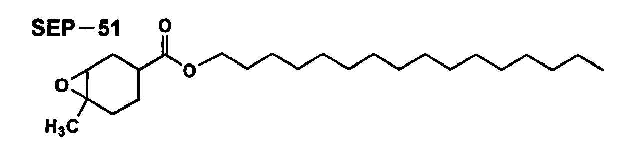

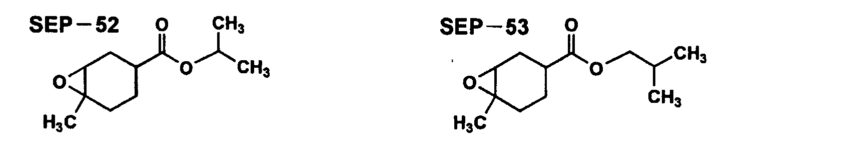

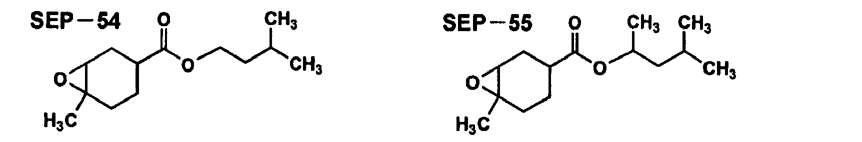

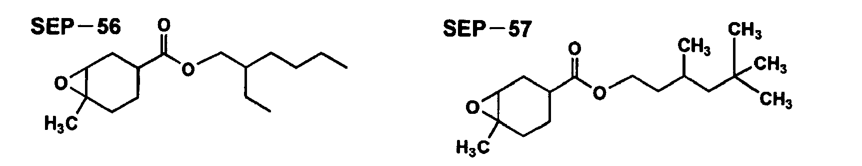

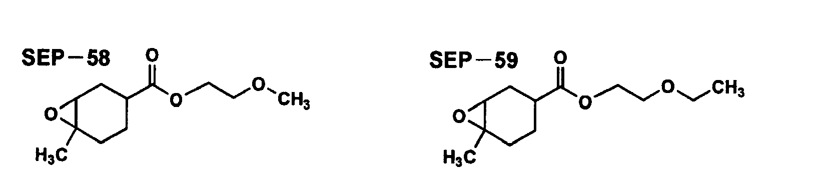

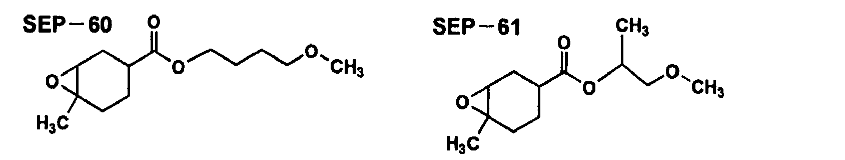

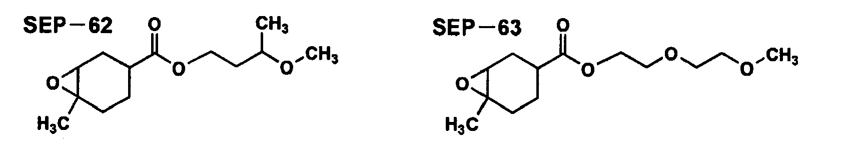

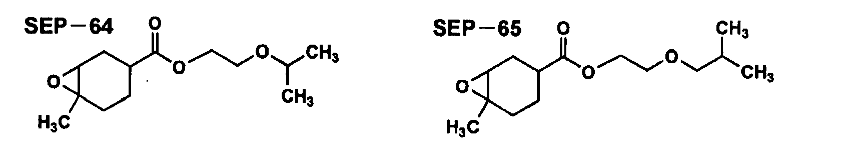

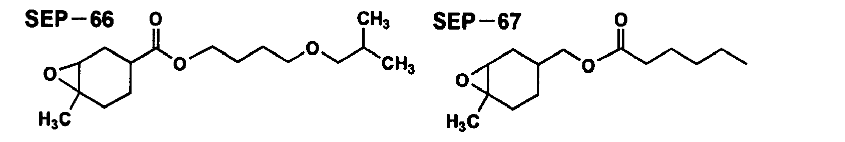

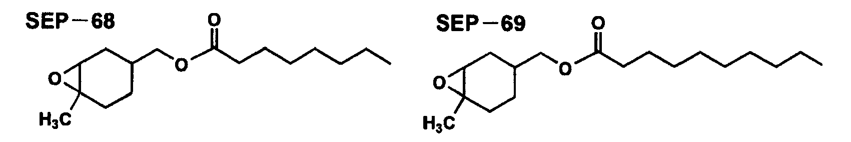

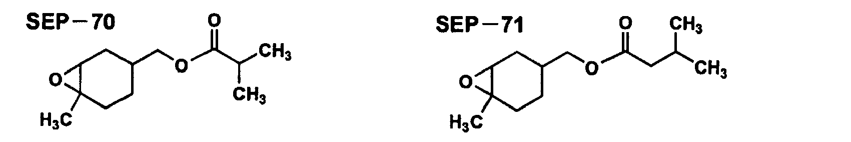

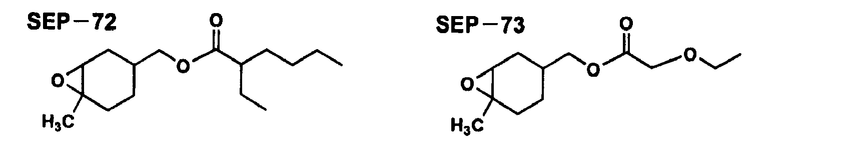

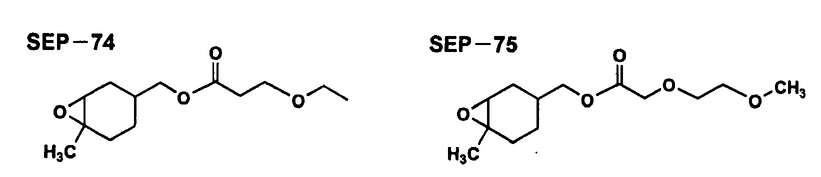

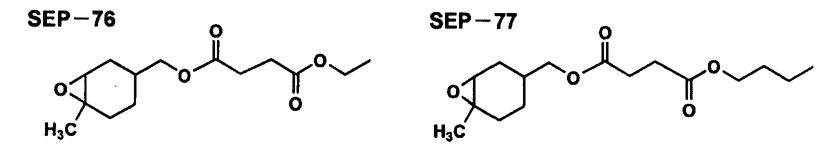

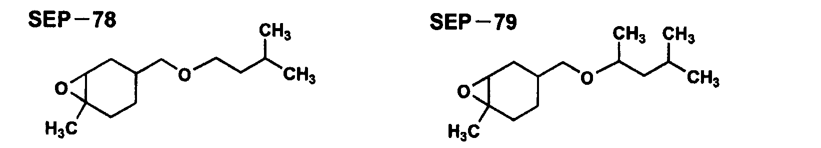

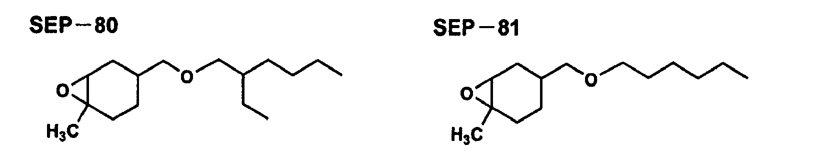

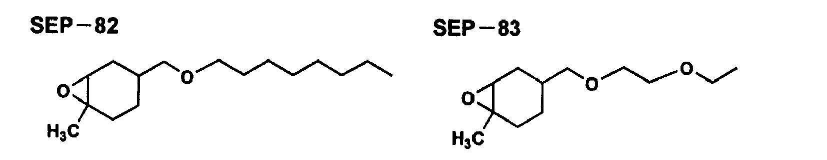

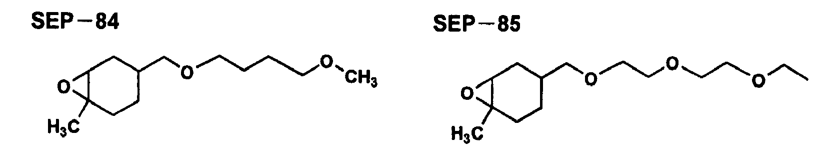

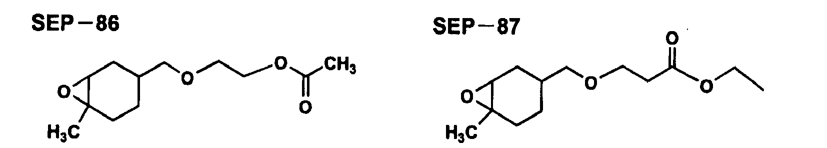

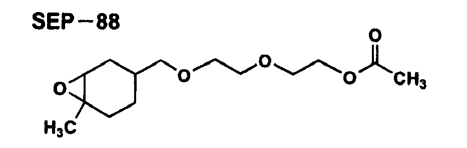

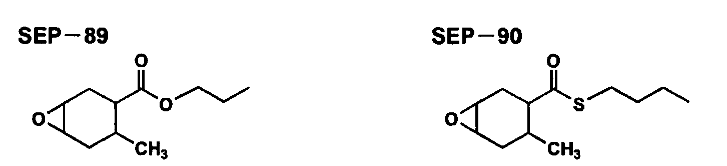

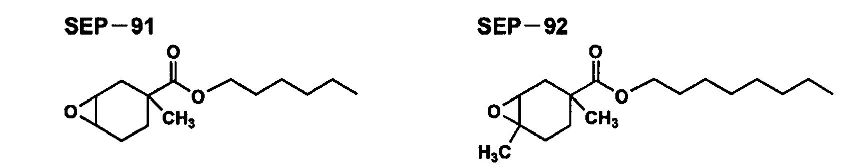

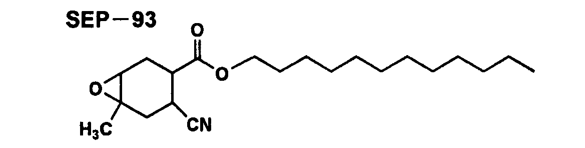

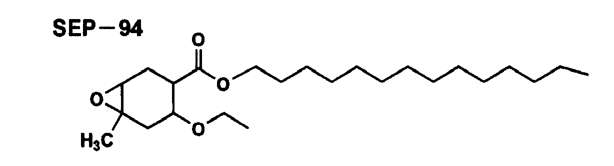

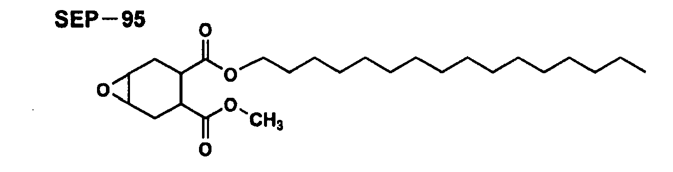

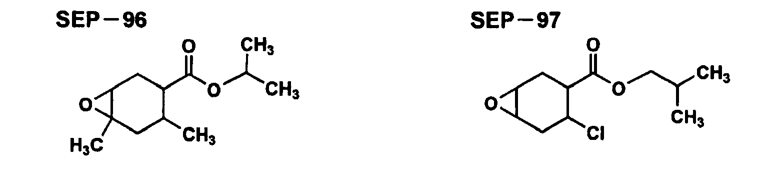

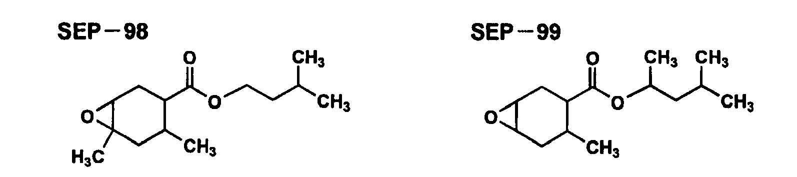

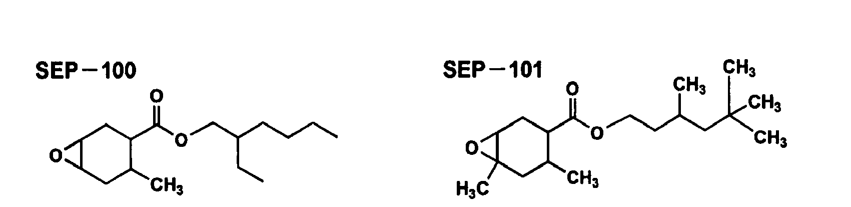

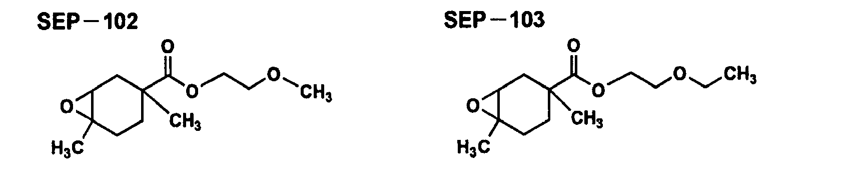

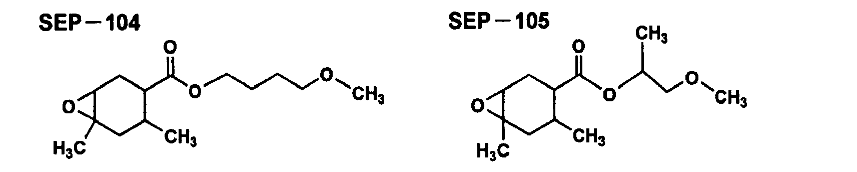

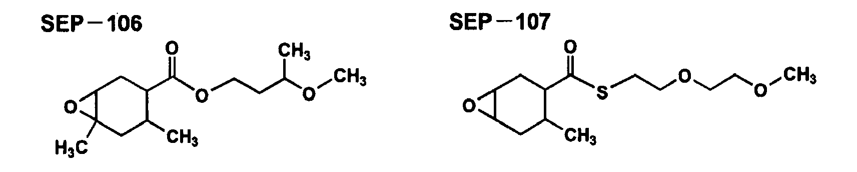

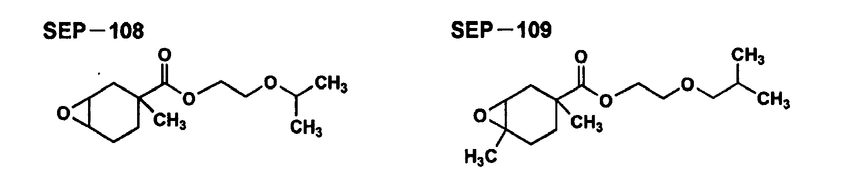

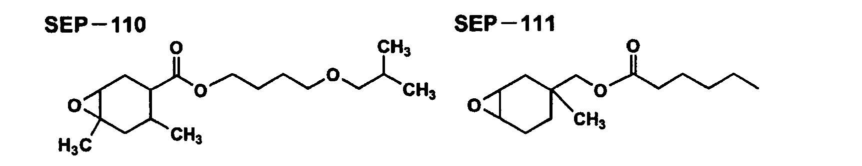

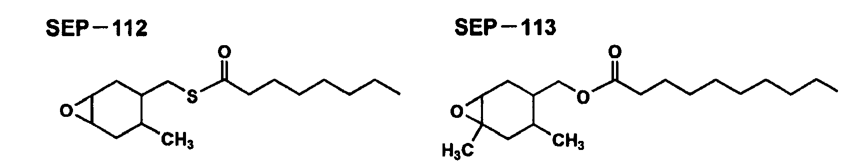

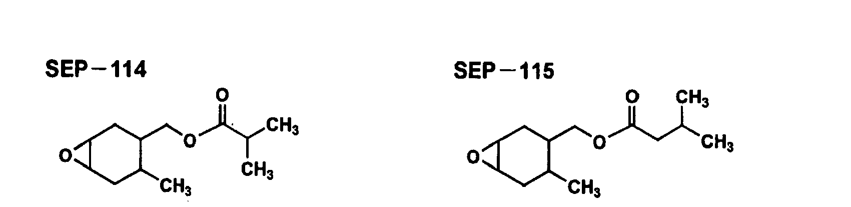

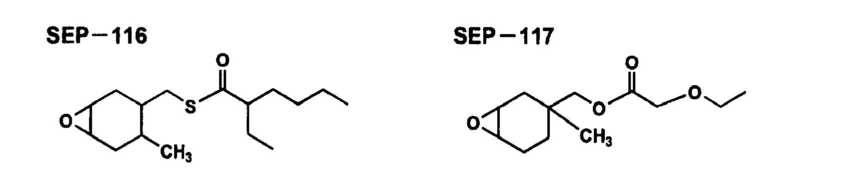

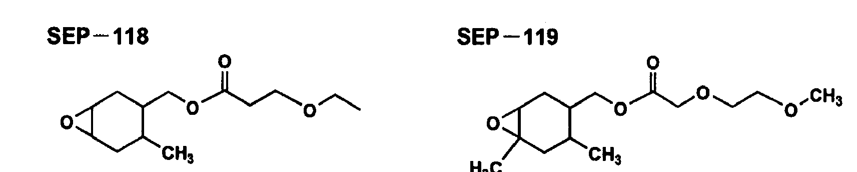

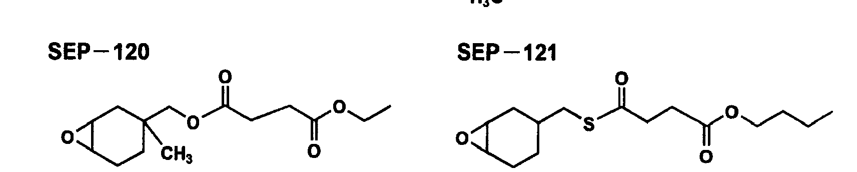

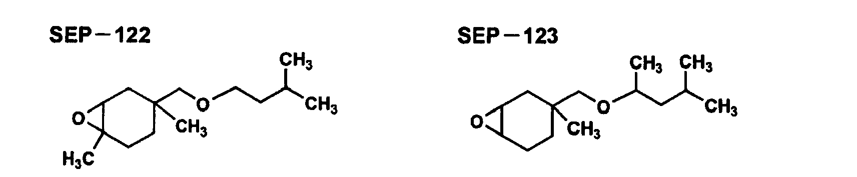

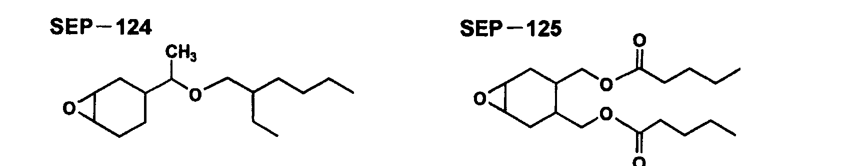

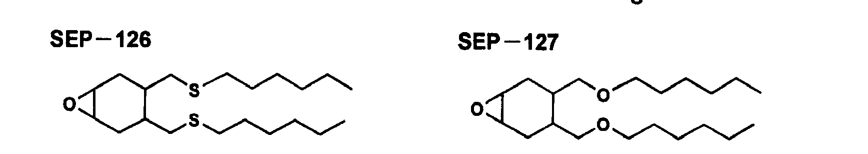

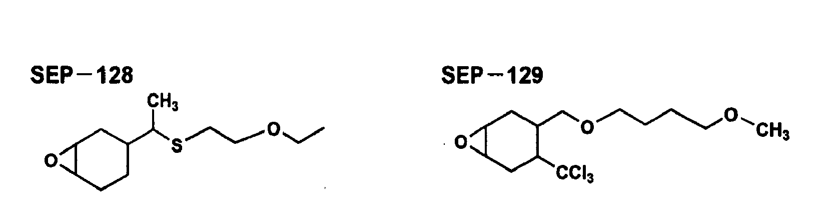

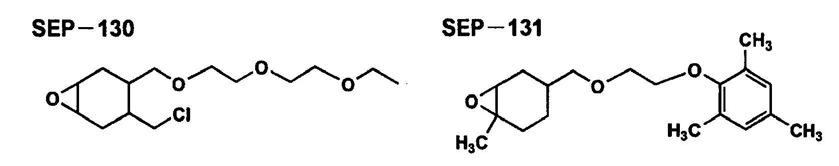

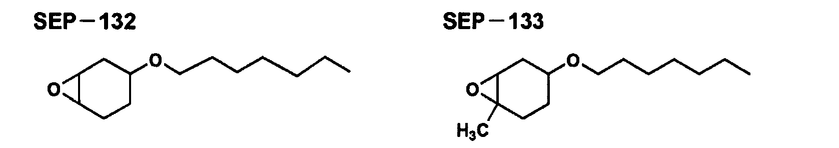

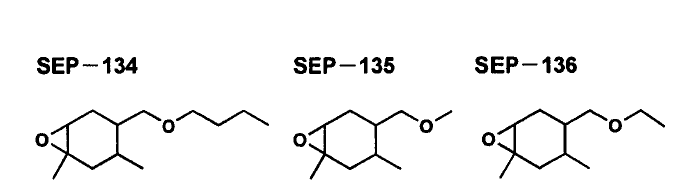

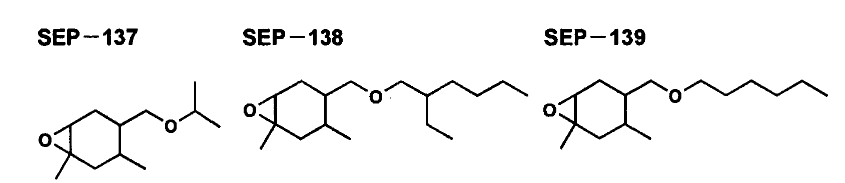

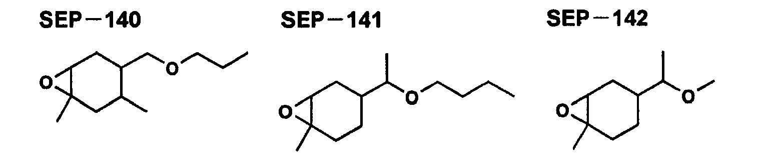

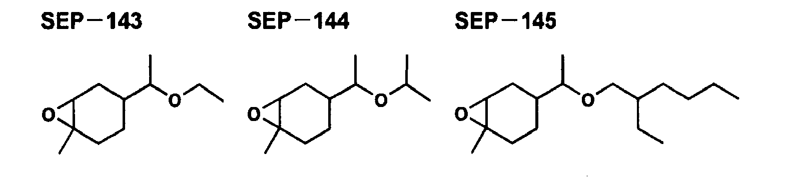

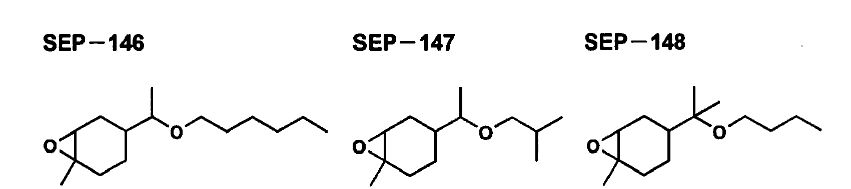

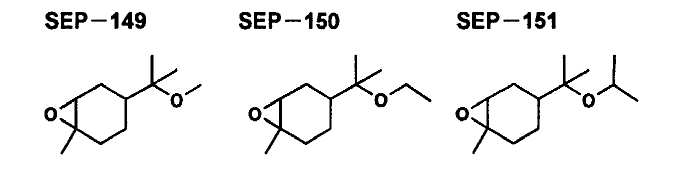

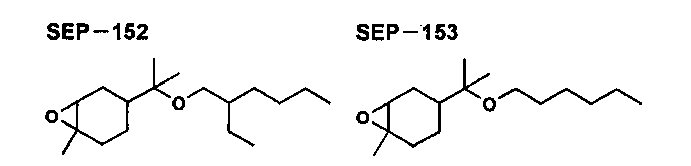

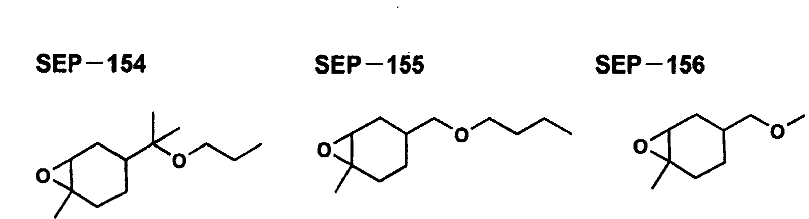

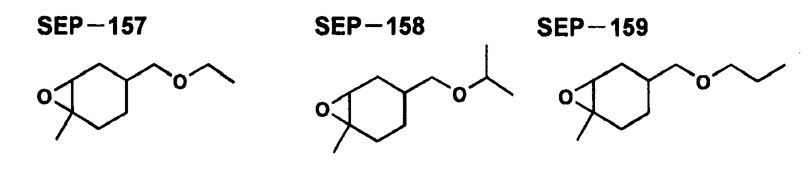

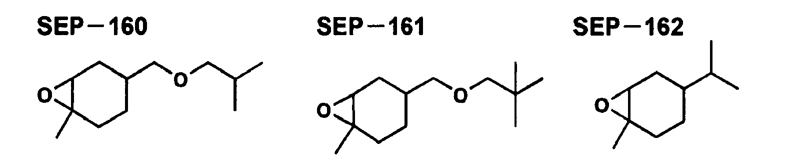

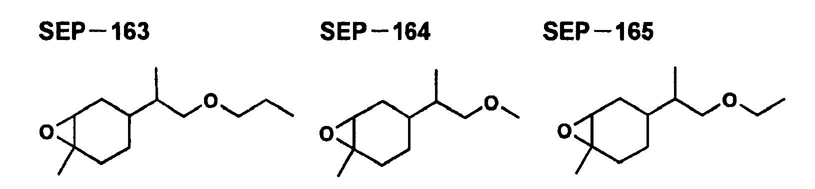

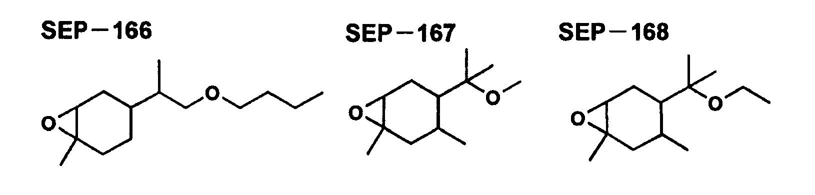

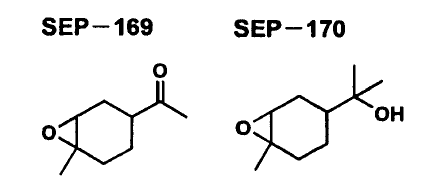

In the invention relating to Claims 12 to 30, the adding amount of the mono-functional epoxy compound represented by Formula (A) is preferably from 10 to 40% by weight when such compound is added to the polymerizable actinic radiation curable composition. When the amount is less than 10%, the contribution to the flexibility of the cured layer is made insufficient. When the adding amount exceeds 40% by weight, the strength of the cured layer is made weak and not applicable for actual use. When the mono-functional epoxy compound represented by Formula (A), the compound may be used singly or in combination of two or more kinds thereof.

### Multi-functional alicyclic epoxy compound

In the polymerizable actinic radiation curable composition relating to the invention of Claims 12 to 30, a multi-functional alicyclic epoxy compound represented by Formula (B) can be used together with the compound represented by Formula (X).

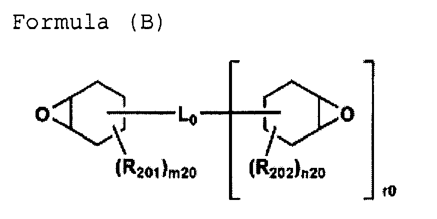

In the formula, R₂₀₁, and R₂₀₂ are each a substituent, m20 and n20 are each 0, 1 or 2 and 0 or 1 is preferable. r1 is 1 to 3. L₀ is a r0+1-valent linking group having 1 to 15 carbon atoms, which may contain an oxygen atom or a sulfur atom in the principal chain thereof, or a single bond.

Examples of the substituent represented by R₂₀₁ or R₂₀₂ include a halogen atom such as a chlorine atom, a bromine atom and a fluorine atom; an alkyl group having 1 to 6 carbon atoms such as a methyl group, an ethyl group, a propyl group, an iso-propyl group and a butyl group; an alkoxy group having 1 to 6 carbon atoms such as a methoxy group, an ethoxy group, an n-propoxy group, an iso-propoxy group, an n-butoxy group and a tert-butoxy group; an acyl group such as an acetyl group, a propionyl group and a trifluoroacetyl group; an acyloxy group such as an acetoxy group, a propionyloxy group and a trifluoroacetoxy group; and an alkoxycarbonyl group such as a methoxycarbonyl group, an ethoxycarbonyl group and a tert-butoxycarbonyl group. The alkyl group, alkoxy group and alkoxycarbonyl group are preferred as the substituent.

Examples of the di-valent linking group represented by L₀ which may contain an oxygen atom or a sulfur atom in the principal chain include the following group and groups formed by combining the group with a plurality of an -O-, a -S-, a-CO- group and -CS- group can be cited.
Methylene group [-CH₂-]
Ethylidene group [>CHCH₃]
Iso-propylidene group [>C(CH₃)CH₂-]
1,2-ethylene group [-CH₂CH₂-]
1,2-propylene group [-CH(CH₃)CH₂-]
1,3-propanediyl group [-CH₂CH₂CH₂-]
2, 2-dimethyl-1, 3-propanediyl group [-CH₂C(CH₃)₂CH₂-]
2,2-dimethoxy-1,3-propanediyl group [-CH₂C(OCH₃)₂CH₂-]
2,2-dimethoxymethyl-1,3-propanediyl group [-CH₂C(CH₂OCH₃)₂CH₂-]
1-methyl-1,3-propanediyl group [-CH₂(CH₃)CH₂CH₂-]
1,4-butanediyl group [-CH₂CH₂CH₂CH₂-]
1,5-pentanediyl group [-CH₂CH₂CH₂CH₂CH₂-]
Oxydiethylene group [-CH₂CH₂OCH₂CH₂-]
Thiodiethylene group [-CH₂CH₂SCH₂CH₂-]
3-oxothiodietylene group [-CH₂CH₂SOCH₂CH₂-]
3,3 dioxodiethylele group [-CH₂CH₂O₂CH₂CH₂-]
1,4-dimethyl-3-oxa-1,5-pentanediyl group [-CH(CH₃)CH₂OCH(CH₃)CH₂-]
3-oxopentanediyl group [-CH₂CH₂COCH₂CH₂-]
1,5-dioxo-3-oxapentanediyl group [-COCH₂OCH₂CO-]
4-oxa-1,7-heptanediyl group [-CH₂CH₂CH₂OCH₂CH₂CH₂-]
3,6-dioxa-1,8-octanediyl group [-CH₂CH₂OCH₂CH₂OCH₂CH₂-]
1,4,7-trimethyl-3,6-dioxa-1,8-octanediyl group [-CH(CH₃)CH₂OCH (CH₃)CH₂OCH (CH₃)CH₂-]
5,5-dimethyl-3,7-dioxa-1,9-nonanediyl group [-CH₂CH₂OCH₂C (CH₃) ₂CH₂OCH₂CH₂-]
5,5-dimethoxyl-3,7-dioxa-1,9-nonanediyl group [-CH₂CH₂OCH₂C (OCH₃) ₂CH₂OCH₂CH₂-]
5,5-dimethoxymethyl-3,7-dioxa-1,9-nonanediyl group [-CH₂CH₂OCH₂C (CH₂OCH₃)₂CH₂OCH₂CH₂-]
4,7-dioxo-3,8-dioxa-1,10-decanediyl group [-CH₂CH₂O-COCH₂CH₂CO-OCH₂CH₂-]
3,8-dioxo-4,7-dioxa-1,10-decanediyl group [-CH₂CH₂CO-O-CH₂CH₂O-COCH₂CH₂-]
1,3-cyclopentanediyl group [-1,3-C₅H₈-]
1,2-cyclohexanediyl group [-1,2-C₆H₁₀-]
1,3-cyclohexanediyl group [-1,3-C₆H₁₀-]
1,4-cyclohexanediyl group [-1,4-C₆H₁₀-]
2,5-tetrahydrofurandiyl group [2,5-C₄H₆O-]
p-phenylene group [-p-C₆H₄-]
m-phenylene group [-m-C₆H₄-]
α,α'-o-xylylene group [-o-CH₂-C₆H₄-CH₂-]
α,α'-m-xylylene group [-m-CH₂-C₆H₄-CH₂-]
α,α'-p-xylylene group [-p-CH₂-C₆H₄-CH₂-]
Furan-2,5-diyl-bismethylene group [2,5-CH₂-C₄H₂O-CH₂-]
Thiophene-2,5-diyl-bismethylene group [2,5-CH₂-C₄H₂S-CH₂-]
Iso-propylidene-bis-p-phenylene group [-P-C₆H₄-C (CH₃) ₂-p-C₆H₄-]

As the tri- or more-valent linking group, groups formed by removing necessary number of hydrogen atoms from optional positions of the above-mentioned di-valent linking groups and groups formed by combining with a plurality of n -O- atom, an -S- atom, a -CO- group and a -CS- group can be cited.

L₀ may have a substituent. Examples of the substituent include a halogen atom such as a chlorine atom, a bromine atom and a fluorine atom; an alkyl group having 1 to 6 carbon atoms such as a methyl group, an ethyl group, a propyl group, an iso-propyl group and a butyl group; an alkoxy group having 1 to 6 carbon atoms such as a methoxy group, an ethoxy group, an n-propoxy group, an iso-propoxy group, an n-butoxy group and a tert-butoxy group; an acyl group such as an acetyl group, a propionyl group and a trifluoroacetyl group; an acyloxy group such as an acetoxy group, a propionyloxy group and a trifluoroacetoxy group; and an alkoxycarbonyl group such as a methoxycarbonyl group, an ethoxycarbonyl group and a tert-butoxycarbonyl group. The alkyl group, alkoxy group and alkoxycarbonyl group are preferred as the substituent.

L₀ is preferably a di-valent linking group having 1 to 8 carbon atoms, which may contain an oxygen atom or a sulfur atom in the principal chain thereof and more preferably a divalent linking group having a principal chain composed of 1 to 5 carbon atoms.

Compounds represented by the following Formula (B-I) or (B-II) are the preferable alicyclic compound for forming a layer having high hardness and improved contacting ability with the substrate.

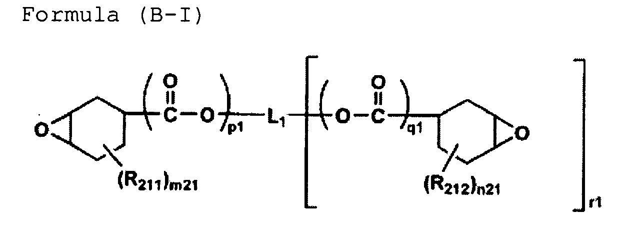

In the formula, R₂₁₁ and R₂₁₂ are each a substituent, m21 and n21 are each 0, 1 or 2 and 0 or 1 is preferable. p1 and q1 are each 0 or 1. r1 is 1 to 3. L₁ is a (r0 + 1)-valent linking group having 1 to 15 carbon atoms, which may contain an oxygen atom or a sulfur atom in the principal chain thereof, or a single bond.

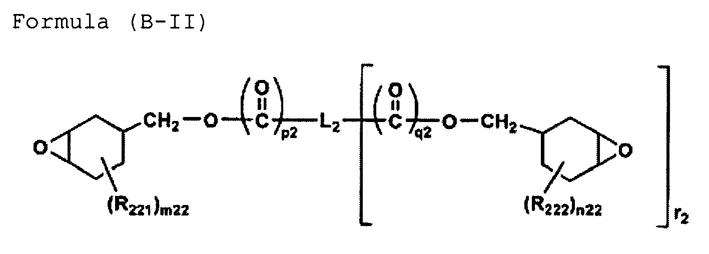

In the formula, R₂₂₁ and R₂₂₂ are each a substituent, m22 and n22 are each 0, 1 or 2 and 0 or 1 is preferable. p2 and q2 are each 0 or 1. r2 is 1 to 3. L₂ is a (r0 + 1)-valent linking group having 1 to 15 carbon atoms, which may contain an oxygen atom or a sulfur atom in the principal chain thereof, or a single bond.

In the above formulas, R₂₁₁, R₂₁₂, R₂₂₁ and R₂₂₂ are each synonymous with R₁₁₁ in Formula (A-1).

As examples of the di-valent linking group having 1 to 15 carbon atoms, which may contain an oxygen atom or a sulfur atom, represented by L₁ or L₂, groups the same as those described as to L₀ are cited. A di-valent linking group having 1 to 8 carbon atoms, which may contain an oxygen group or a sulfur group in the principal chain thereof, is preferable as L₁ or L₂ and a di-valent linking group composed of only 1 to 5 carbon atoms is more preferable.

Compounds represented by Formula (B-III) or (B-IV) are particularly preferred alicyclic epoxy compound from the viewpoint of that the curing sensitivity is high and difficultly influenced by variation of the image forming environment.

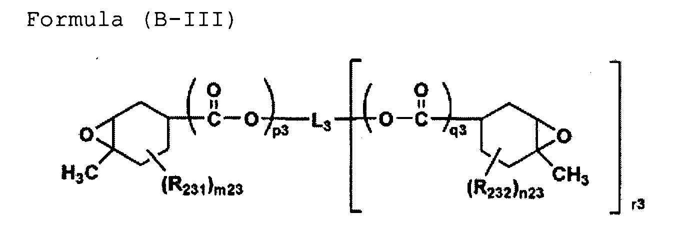

In the formula, R₂₃₁ and R₂₃₂ are each a substituent, m23 and n23 are each 0 or 1. p3 and q3 are each 0 or 1. r3 is 1 to 3. L₃ is a r0+1-valent linking group having 1 to 15 carbon atoms, which may contain an oxygen atom or a sulfur atom in the principal chain thereof, or a single bond.

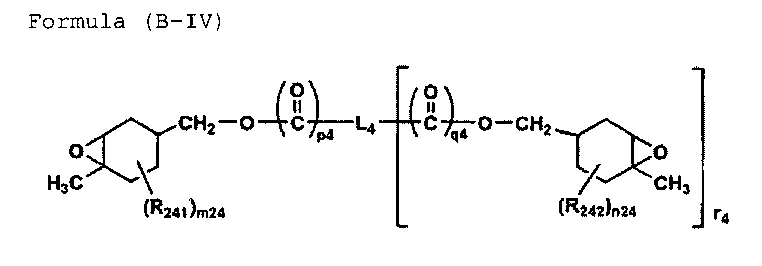

In the formula, R₂₄₁ and R₂₄₂ are each a substituent, m24 and n24 are each 0 or 1. p4 and q4 are each 0 or 1. r4 is 1 to 3. L₄ is a (r0 + 1)-valent linking group having 1 to 15 carbon atoms, which may contain an oxygen atom or a sulfur atom in the principal chain thereof, or a single bond.

In the above formulas R₂₃₁, R₂₃₂, R₂₄₁ and R₂₄₂ are each synonymous with R₁₁₁ in Formula (A-1). As the di-valent linking group having 1 to 15 carbon atoms, which may contain an oxygen atom or a sulfur atom, groups the same as those described as to L₀ are cited.

Concrete examples of preferable alicyclic epoxide are shown below, but the invention is not limited to them.

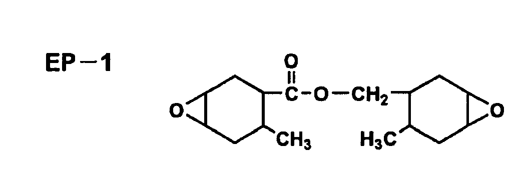

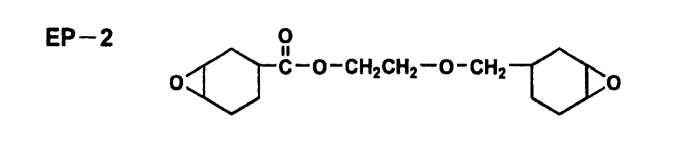

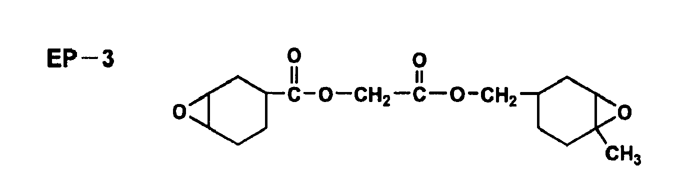

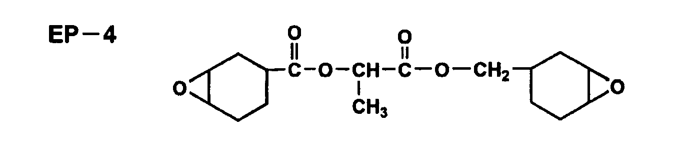

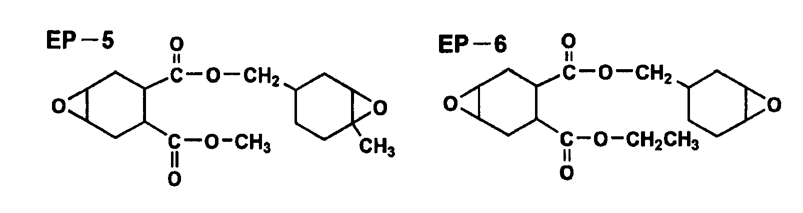

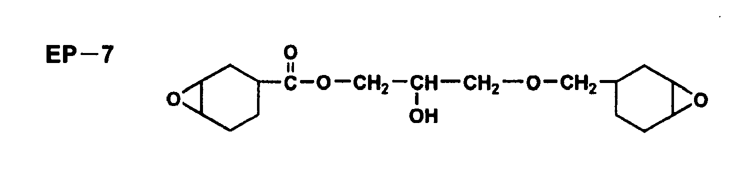

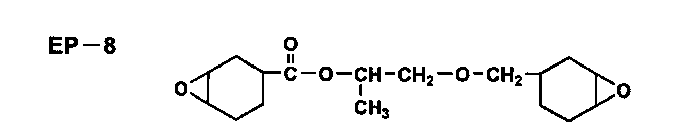

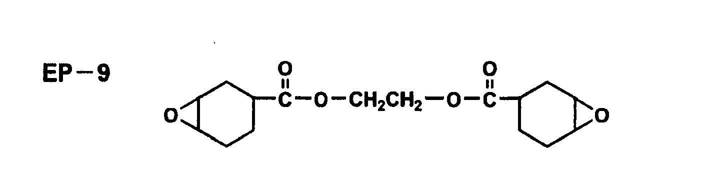

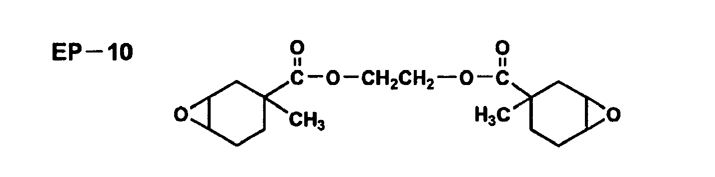

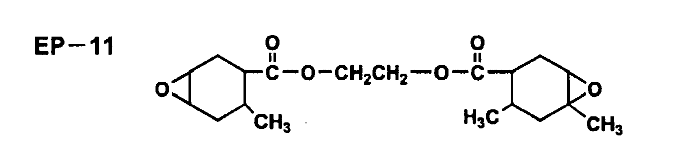

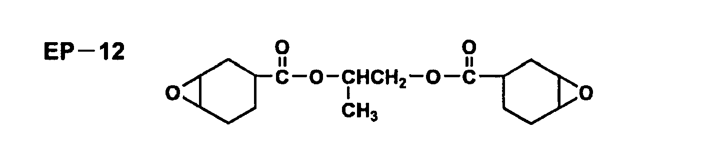

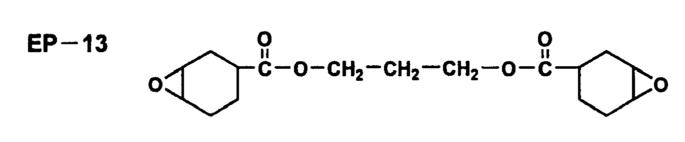

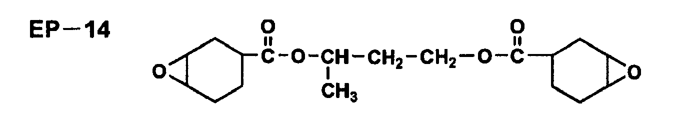

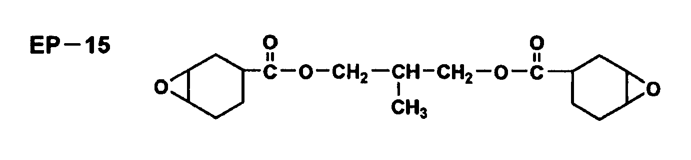

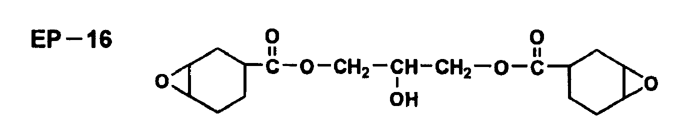

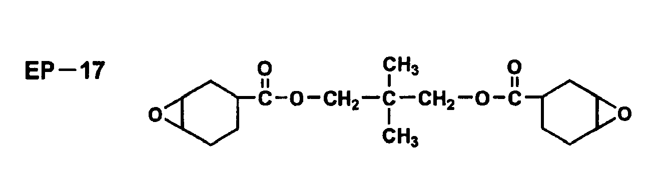

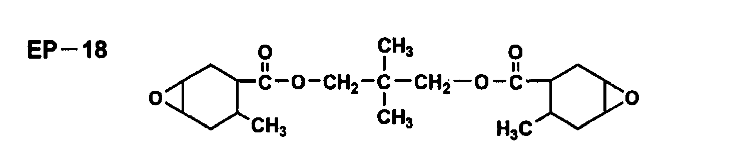

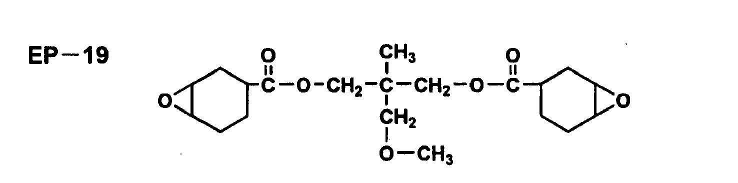

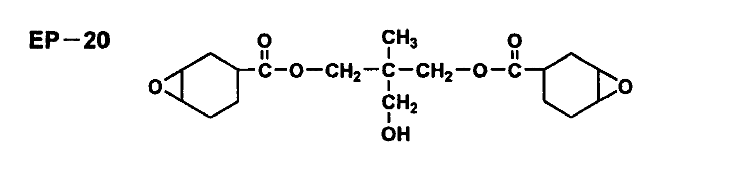

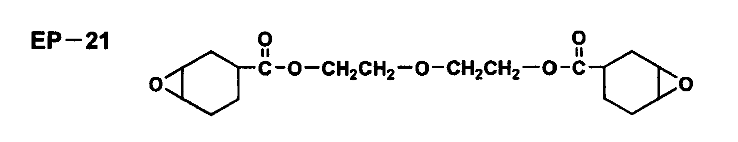

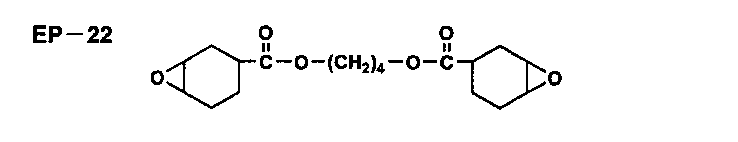

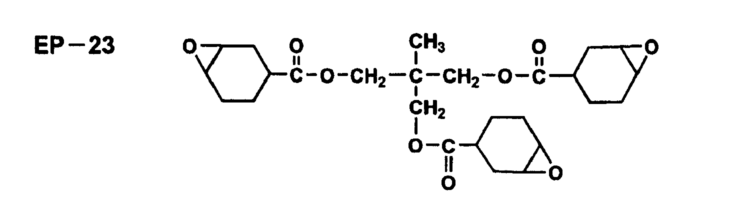

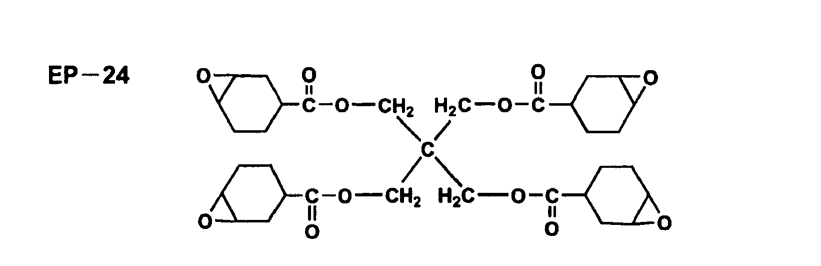

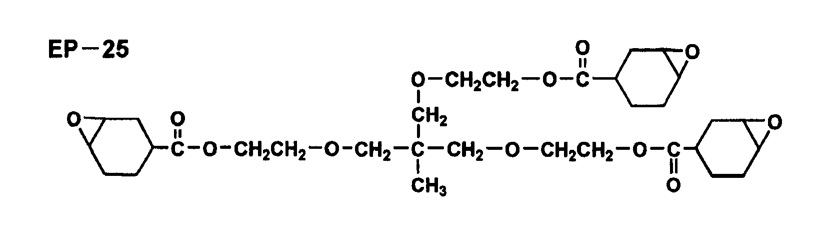

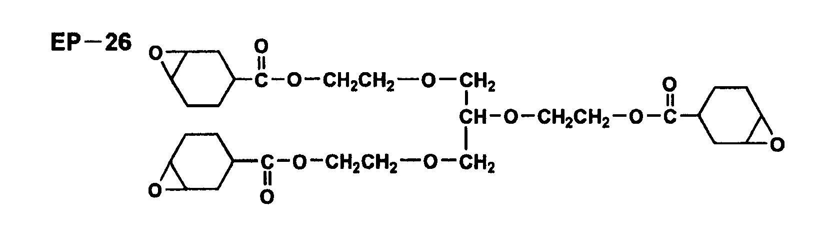

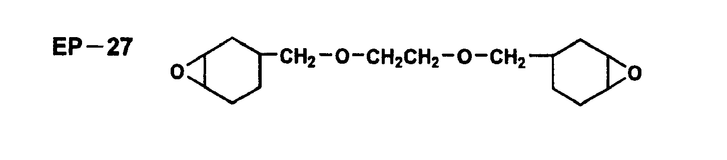

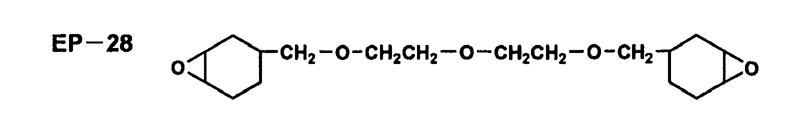

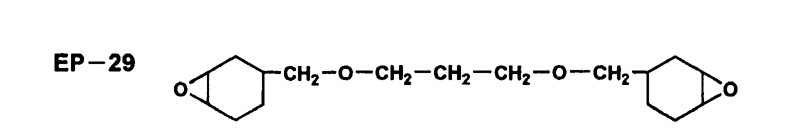

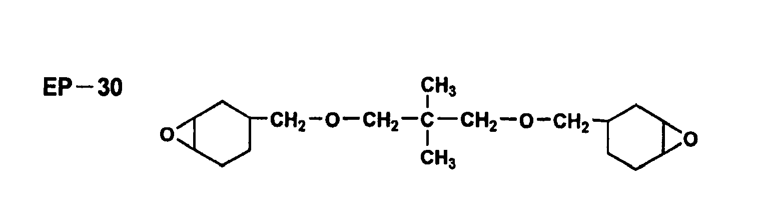

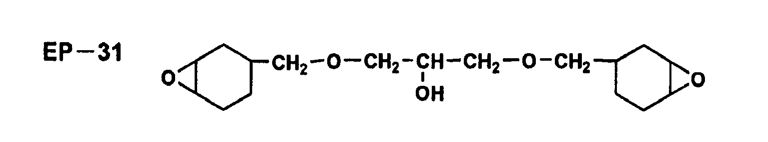

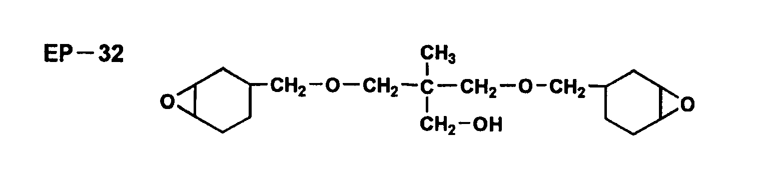

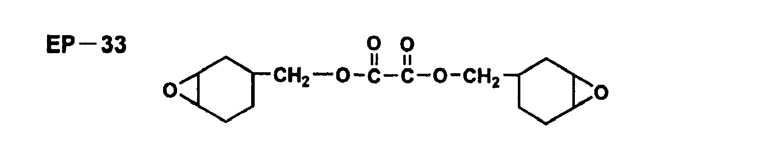

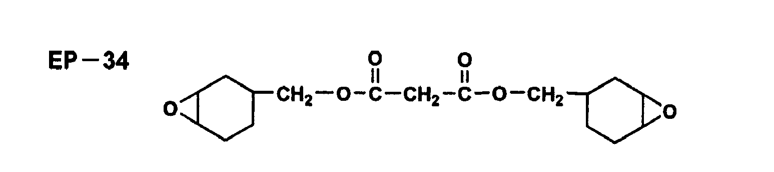

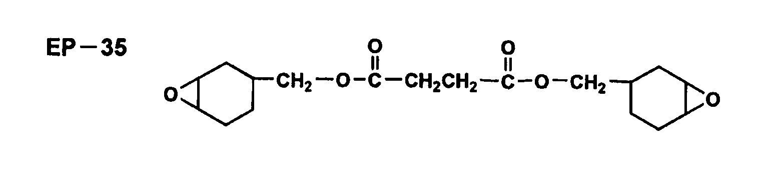

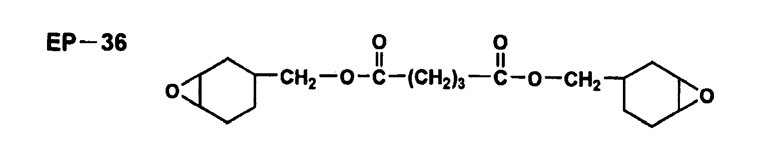

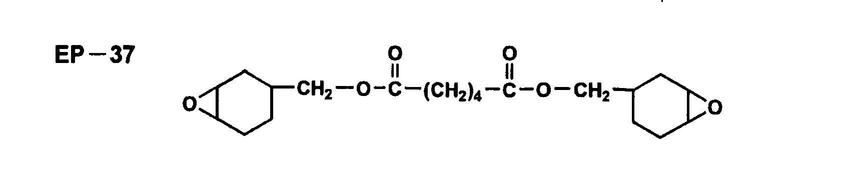

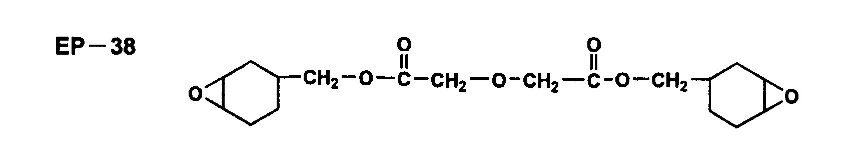

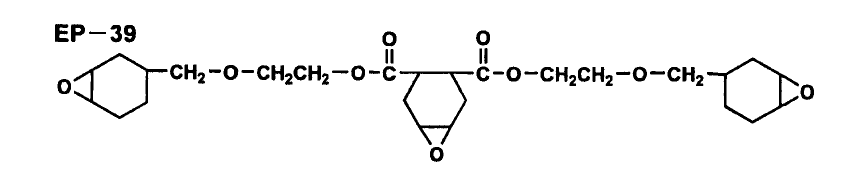

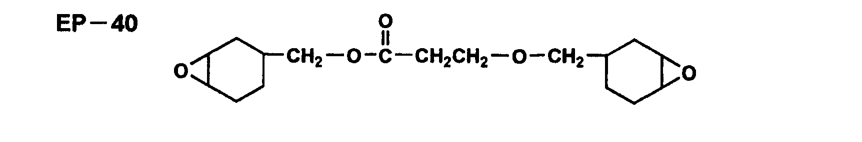

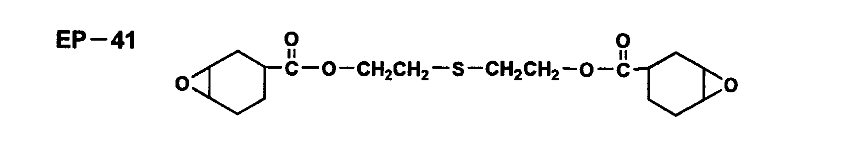

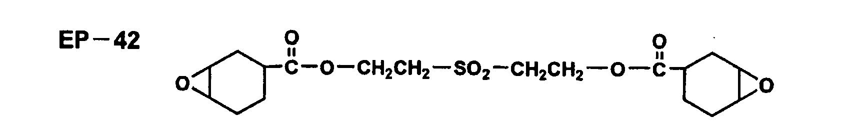

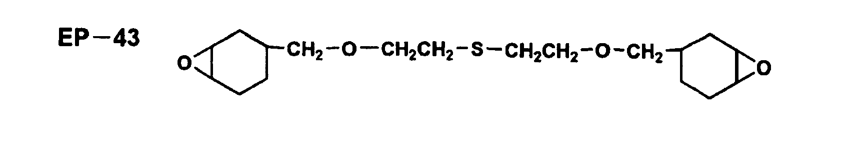

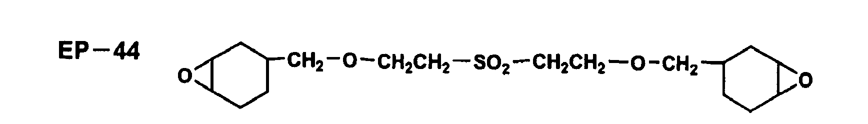

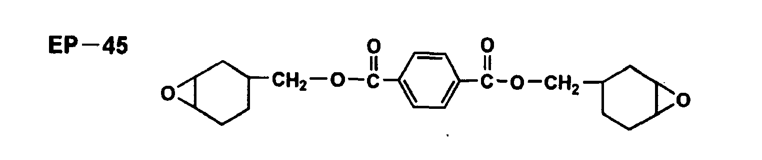

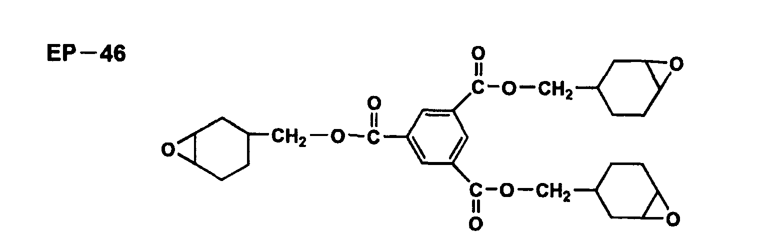

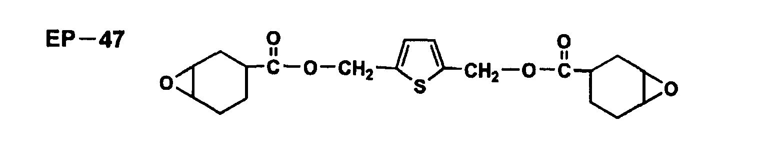

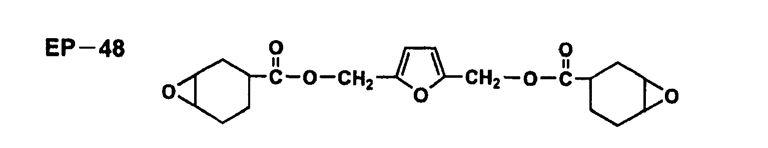

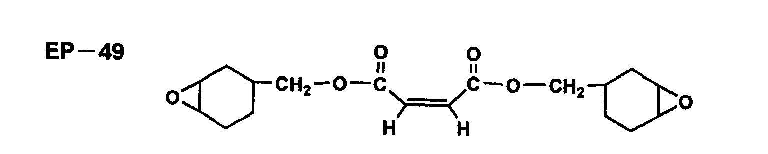

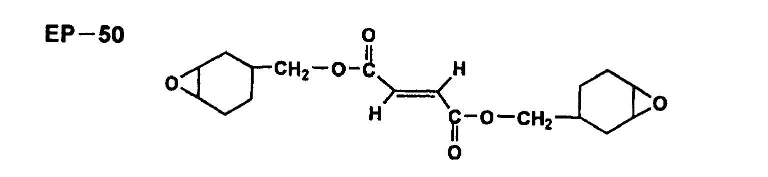

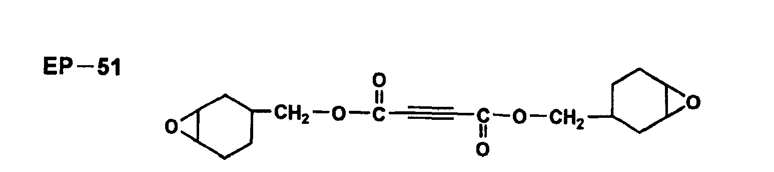

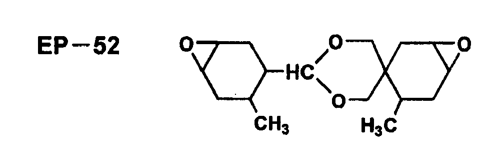

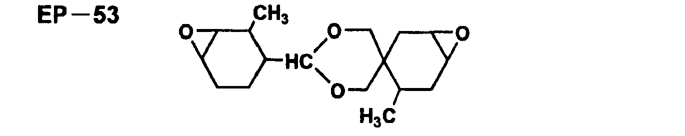

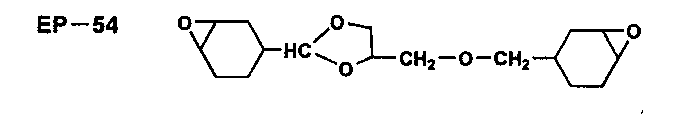

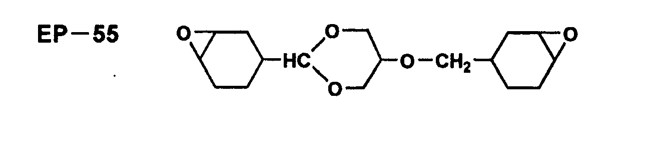

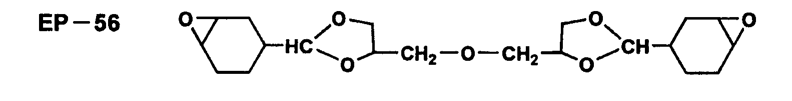

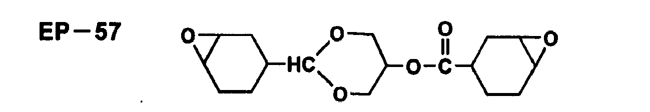

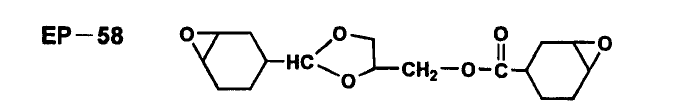

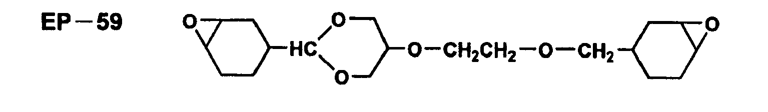

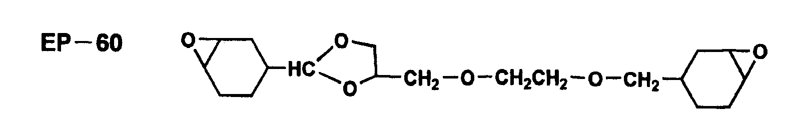

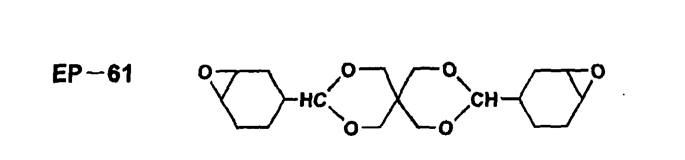

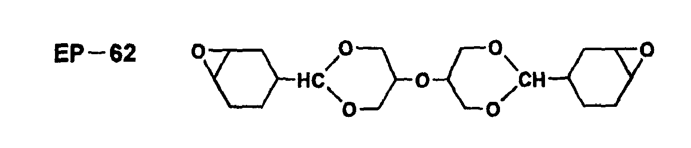

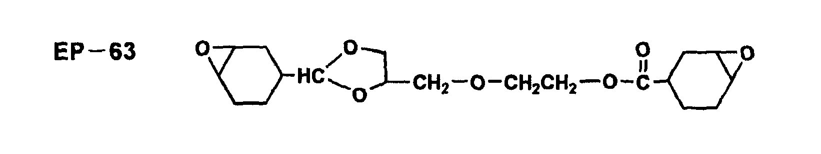

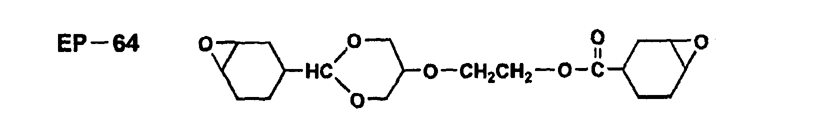

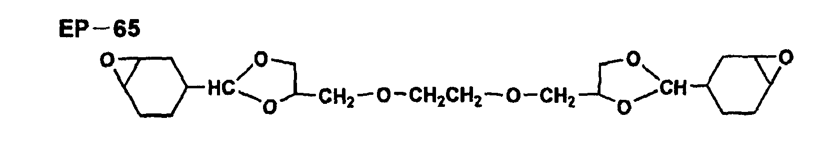

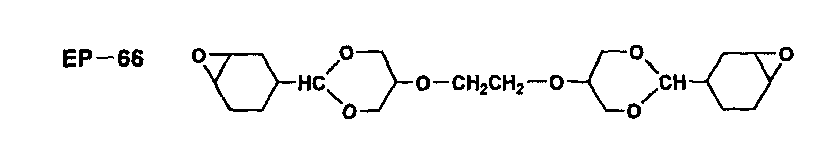

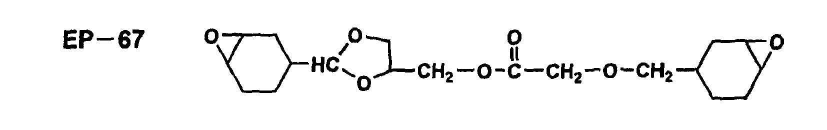

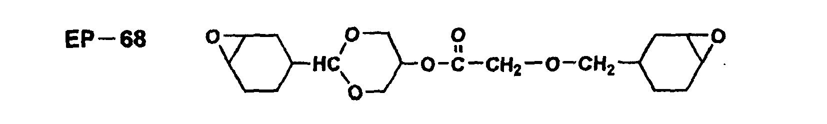

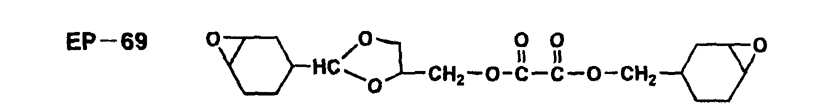

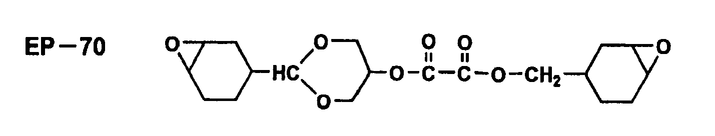

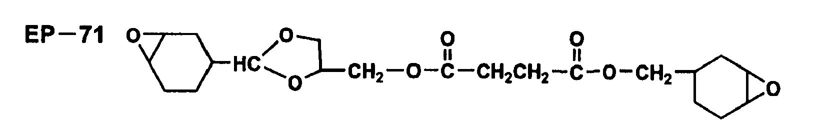

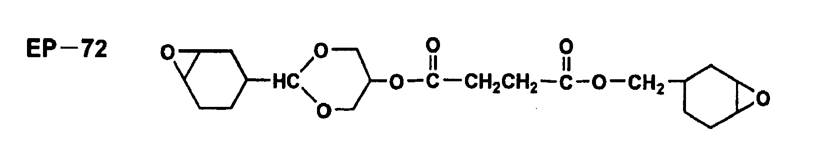

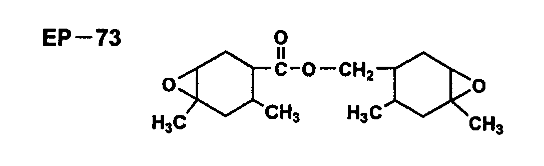

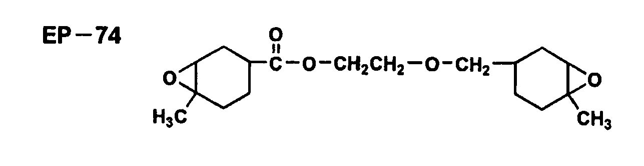

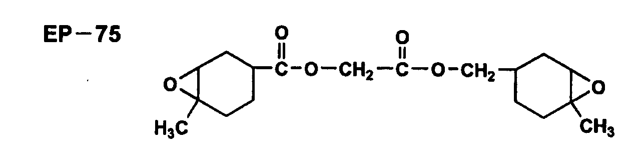

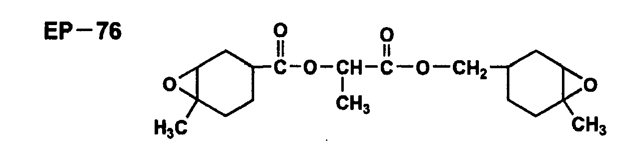

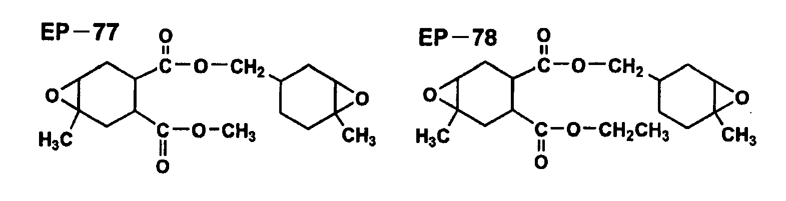

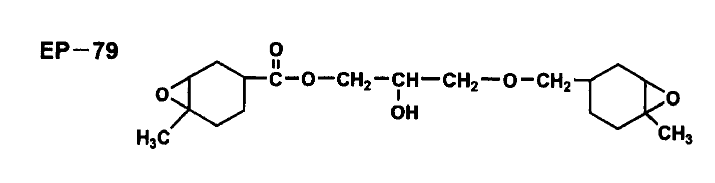

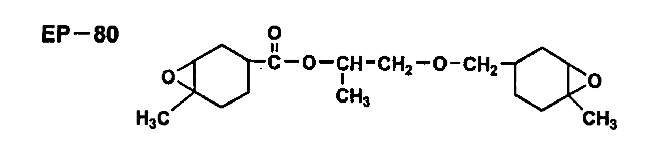

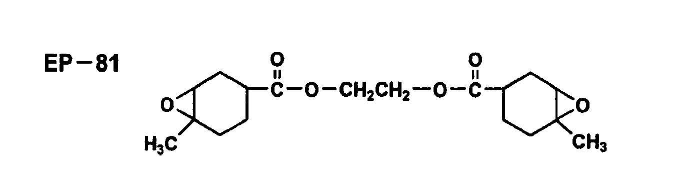

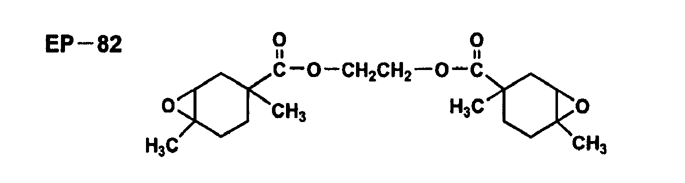

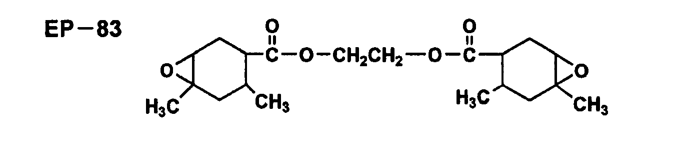

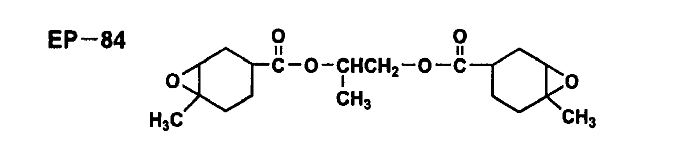

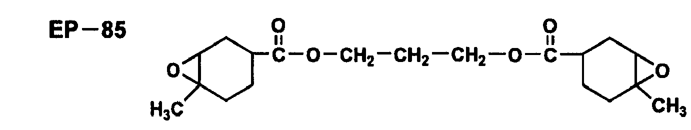

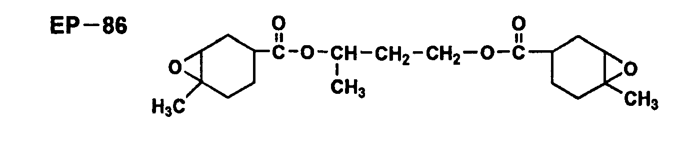

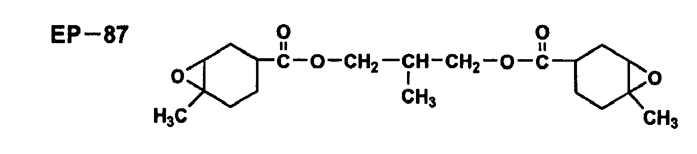

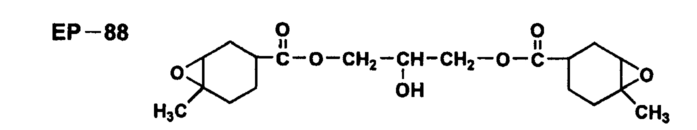

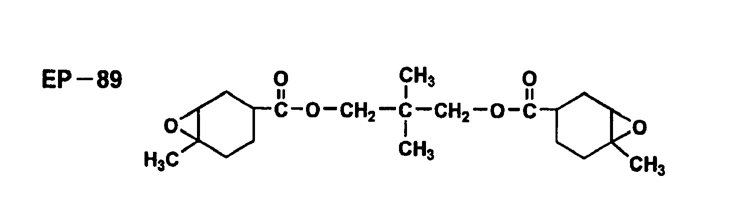

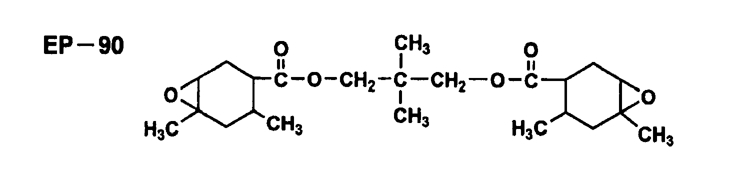

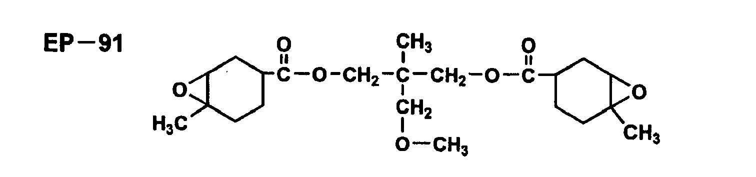

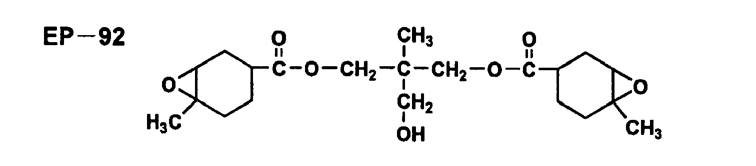

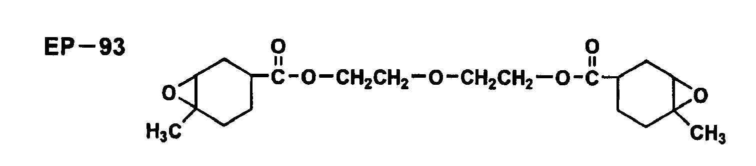

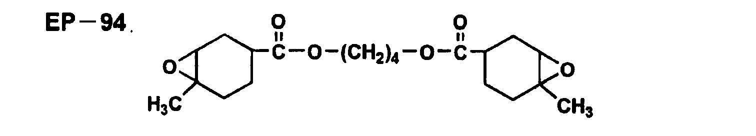

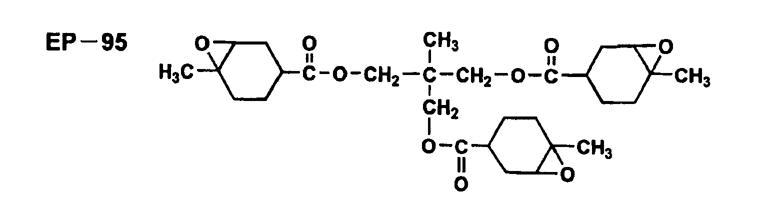

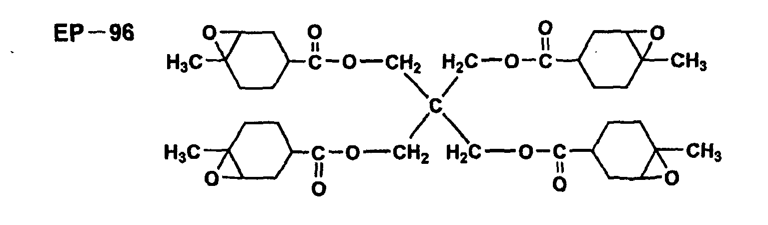

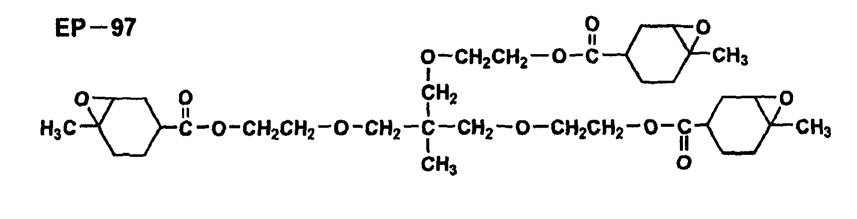

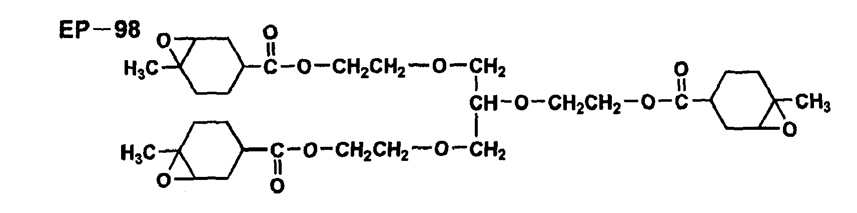

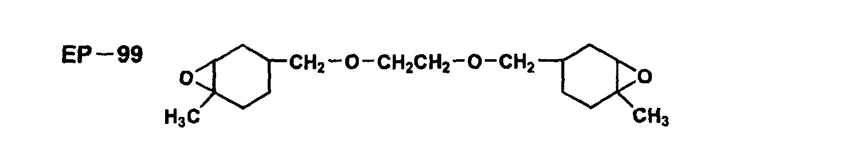

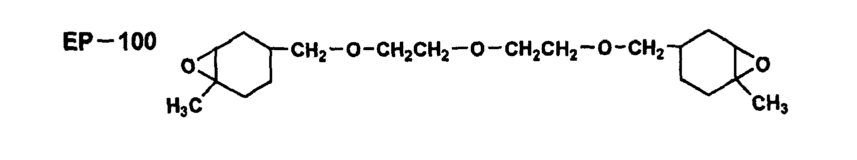

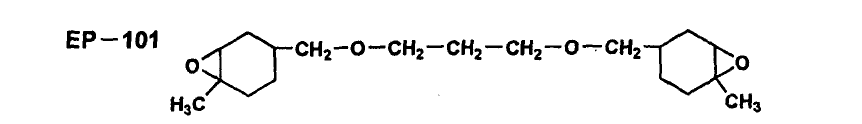

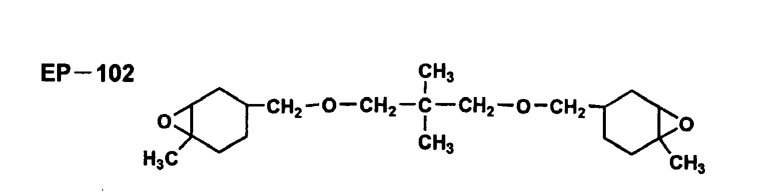

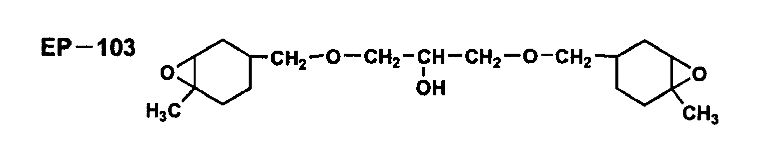

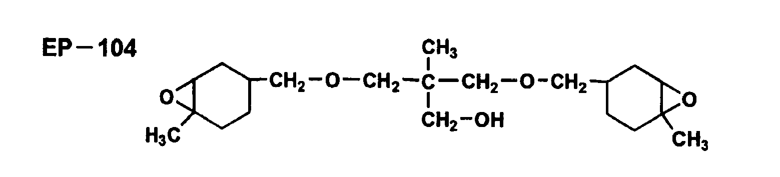

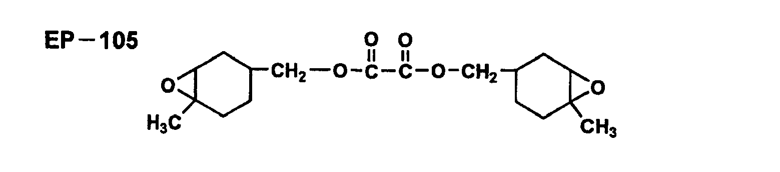

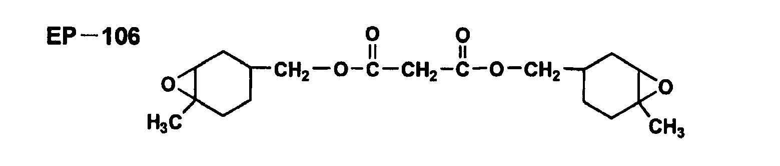

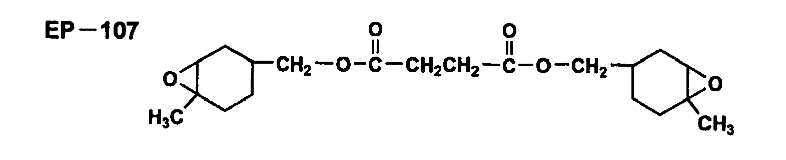

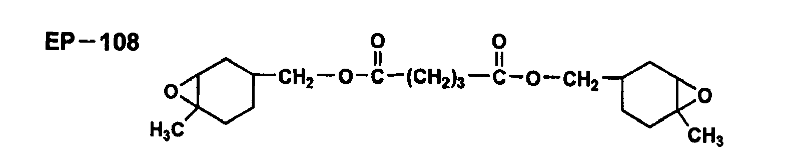

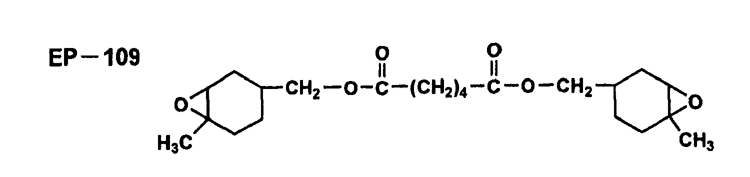

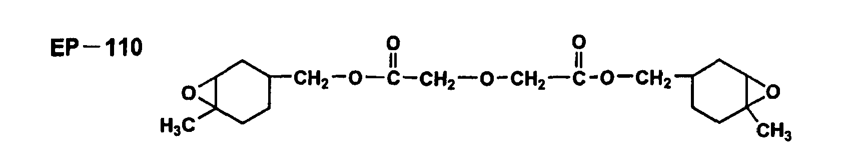

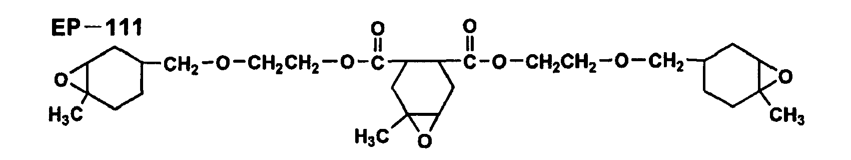

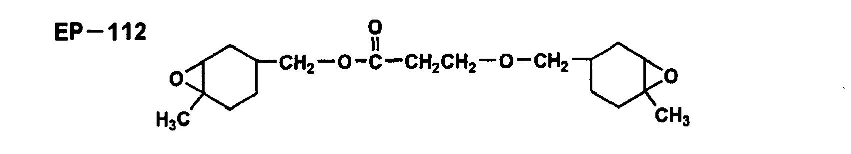

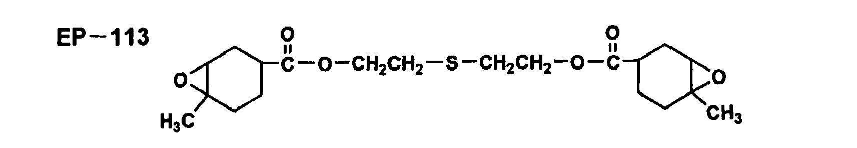

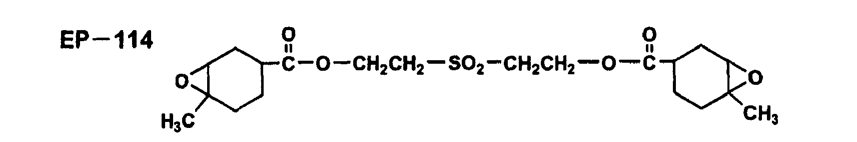

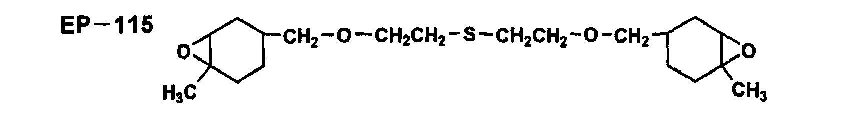

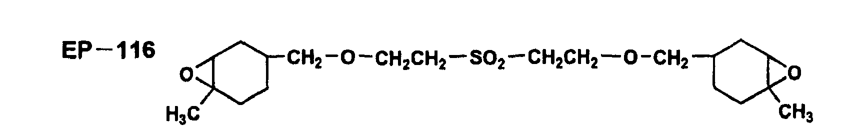

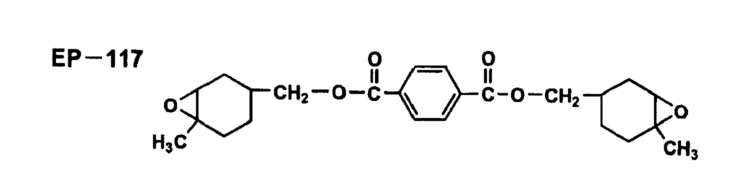

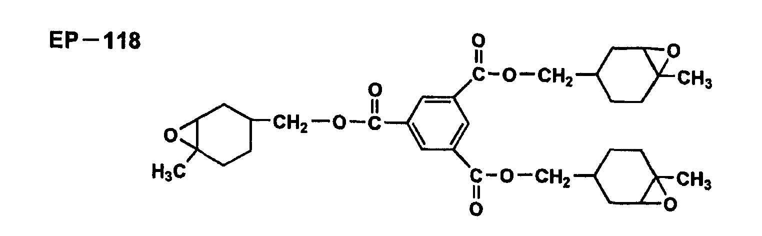

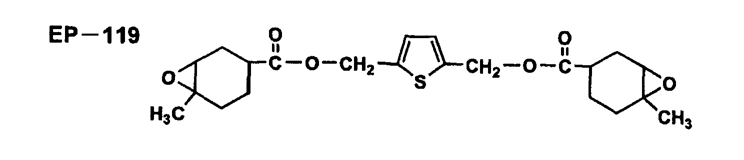

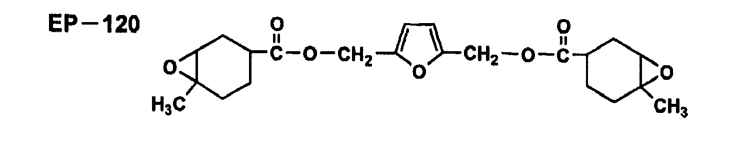

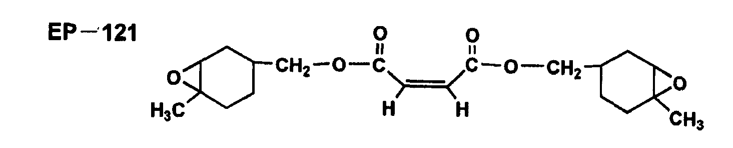

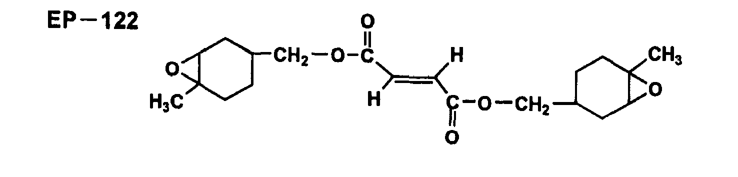

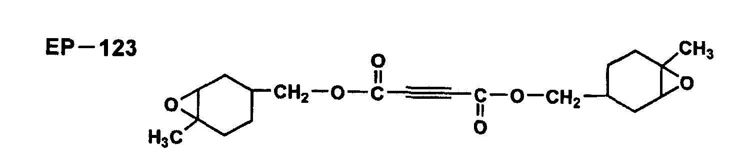

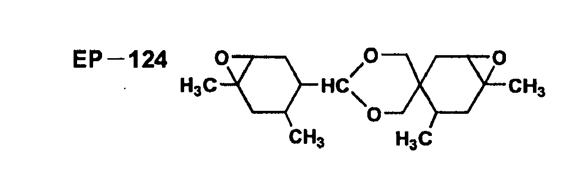

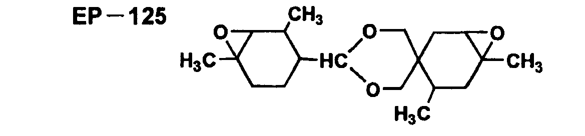

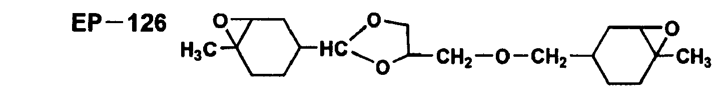

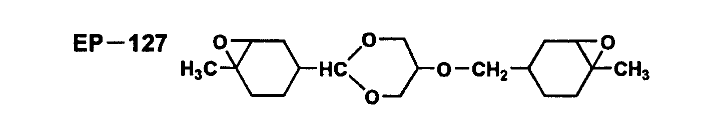

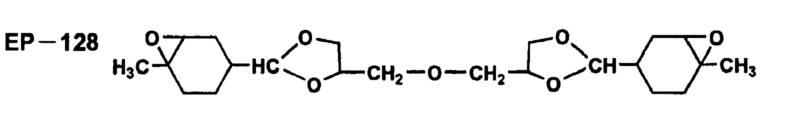

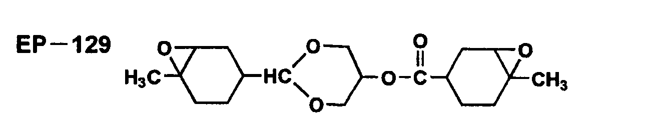

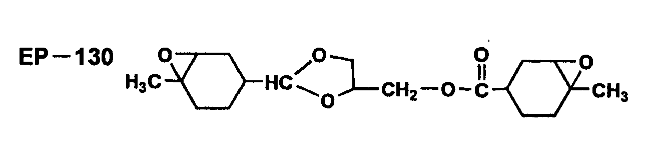

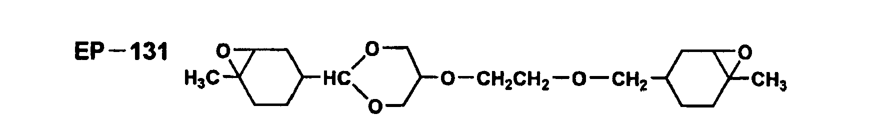

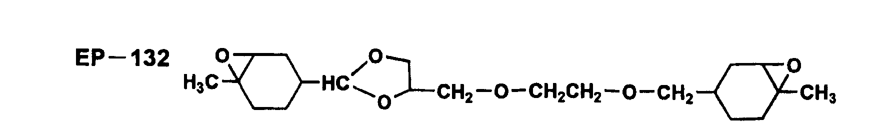

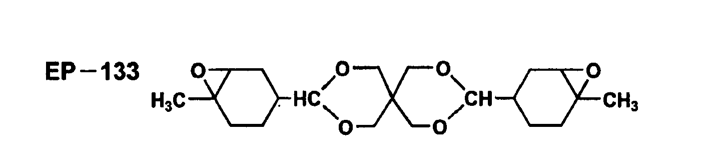

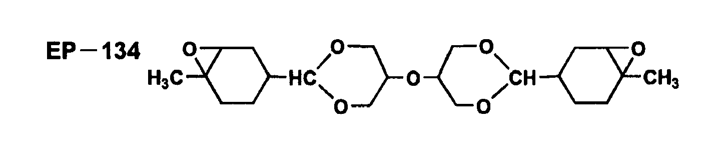

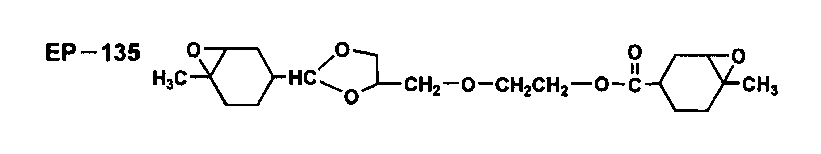

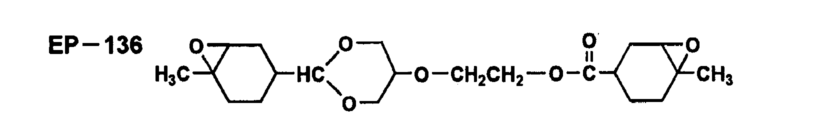

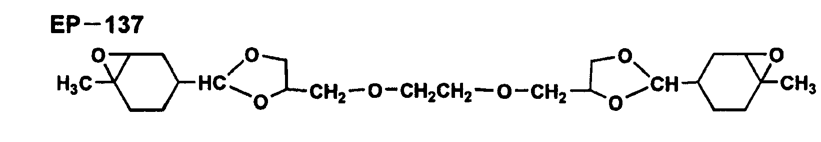

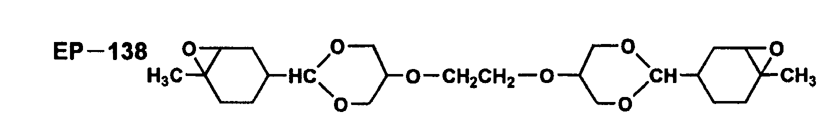

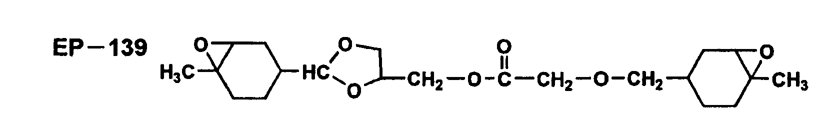

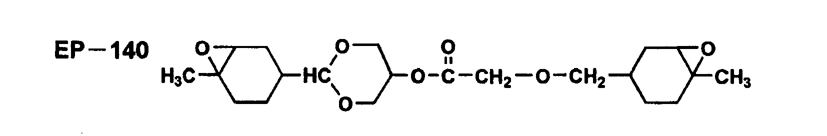

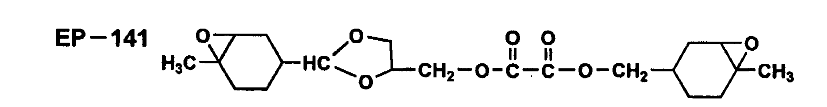

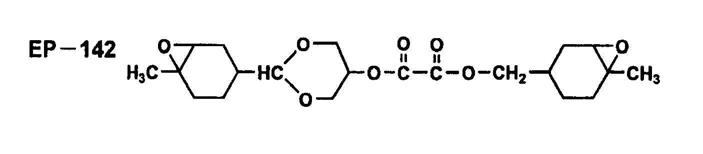

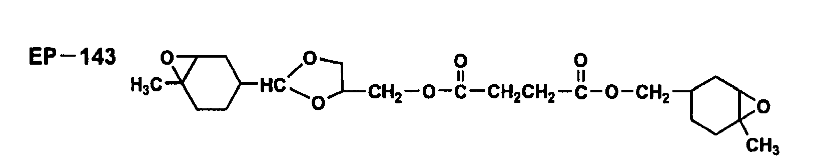

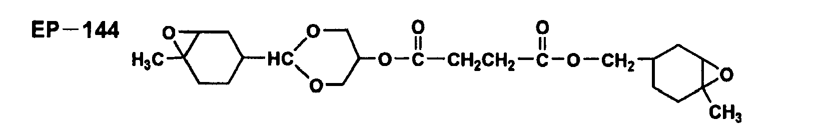

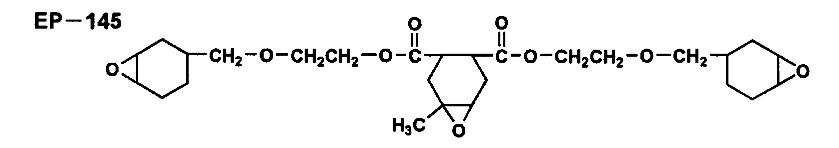

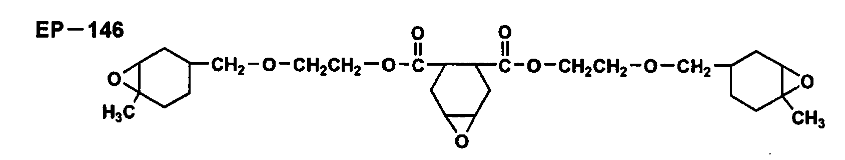

In the invention relating to Claims 12 to 30, the compound represented by the foregoing Formula (B) can be added in an amount of from 10 to 50% by weight when the compound represented by the foregoing Formula (B) is added. When the compound represented by the foregoing Formula (B) is added, the compound may be used singly or in suitable combination of two or more kinds of them.

The production method of the epoxy compound represented by Formula (A) or (B) is not specifically limited. For example, the compound can be synthesized by referring , "Experimental Chemistry Course (Jikken Kagaku Koza) 4th ed.20, Organic Synthesis II" 213, Maryzen KK Shuppan (1982); Ed, by Alfred Hasner, "The Chemistry of Heterocyclic Compounds-Small Ring Heterocycles Part 3 Oxiranes", John & Wiley and Sons, An Interscience Publication New York (1985); Yoshimura, "Secchaku (Adhesion)" vol. 29, No. 42, 32, (1985); "Secchaku (Adhesion)" vol. 30, No. 5, 42, (1986); "Secchaku (Adhesion)" vol. 30, No. 7, 42, (1986); and JP-A 11-100378, 4-36263 and 4-69360.

Cation polymerization initiator/Photo-acid generating agent

In the invention relating to Claims 12 to 30, it is preferable that the polymerizable actinic radiation curable composition contains a photo-acid generating agent capable of forming an acid by irradiation of actinic radiation the same as in the invention relating to Claims 1 toll.

As the photo-acid generating agent to be used in the polymerizable actinic radiation curable composition relating to Claims 12 to 30 or the cation polymerizing type ink using the composition, acid forming agents the same as those cited as to the invention relating to Claims 1 to 11 are usable. For example, a salt of an aromatic onium compound such as a diazonium, an ammonium, an iodonium, a sulfonium and a phosphonium with B(C₆F₅)₄⁻, PF₆⁻, AsF₆⁻, SbF₆⁻ or a sulfonic acid such as p-CH₃C₆H₄SO₃⁻ salt and CF₃SO₃⁻ salt, particularly, ones having a borate compound as the counter ion, a PF₆⁻ salt, a sulfone compound forming a sulfonic, a halide forming a hydrogen halide, an iron arene complex, a photo-cation polymerization initiator of an arylsulfonium salt derivative, an aryliodonium salt derivative, an arene ion complex derivative, a diazonium salt derivative, a triazine type initiator and another halogen compound can be cited.

In the invention relating Claims 12 to 30, these cation polymerization initiators are each preferably contained in a ratio of from 0.2 to 20 parts by weight to 100 parts by weight of the cation polymerizable compound. When the polymerization initiator content is less than 0.2% by weight, any cured matter cannot be obtained, and further curing improving effect cannot be obtained even when the content exceeds 20% by weigh. These photo cation polymerization initiators may be used by selecting one or more of them.

The polymerization accelerating agents cited as to the invention relating Claims 1 to 11 can be also used.

Various additives can be used in any photopolymerizable actinic radiation curable compositions of the invention other than the above-described constituting components.

### Colorant, dye, pigment/another additive

The actinic radiation curable ink containing the polymerizable actinic radiation curable composition is described in detail below. The actinic radiation curable ink of the invention is preferably a mixture of the polymerizable actinic radiation curable composition and a coloring agent (colorant). The mixing method is preferably a method for dissolving or dispersing the coloring agent into the polymerizable actinic radiation curable composition though the mixing method is not specifically limited. The coloring agent is preferably a dye or a pigment, particularly the pigment is preferable from the viewpoint of the durability of the image.

As the coloring agent to be used in the actinic radiation curable ink, hereinafter also referred to as ink, using the polymerizable actinic radiation curable composition of the invention, any colorants capable of being dissolved or dispersed in the principal component of the polymerizable actinic radiation curable composition can be used without any limitation, and an oil-soluble dye or a pigment is preferable and the pigment is preferable from the viewpoint of the weather resistivity and the light fastness.

As the dye, dyes available on the market and known ones for example, those described in " Senryou Benran (Dye Handbook)" edit. by the Society of Synthetic Organic Chemistry, Japan (1960) can be applied. Concretely an azo dye, a metal complex azo dye, a pyrazoloneazo dye, a naphthoquinone dye, an anthraquinone dye, a phthalocyanine dye, a carbonium dye, a quinoneimine dye, a methine dye, and a cyanine (including merocyanine) dye are cited.

In the invention, namely the invention relating to Claims 1 to 11 and Claims 12 to 30, pigments available on the market and those described in Color Index (C. I.), "Saishin Ganryou Benran (Newest Pigment Handbook)", Japan Association of Pigment Technology (1977), "Saishin Ganryou Oyo Gijutsu (Newest Pigment application Technology)", CMC Shuppan (1986), and "Insatsu Ink Gijutu (Printing Ink Technology", CMC Shuppan (1984) are applicable. Kinds of the pigment include black pigment, yellow pigment, orange pigment, brawn pigment, red pigment, purple pigment, blue pigment, green pigment, fluorescent pigment, metal powder pigment and dye bonded with polymer. Concretely, an insoluble azo pigment, an azo-lake pigment, a condensed azo pigment, a chelated azo pigment, a phthalocyanine type pigment, an anthraquinone type pigment, perylene and perynone type pigments, a thioindigo type pigment, a quinacridone type pigment, a dioxazine type pigment, an isoindolinone type pigment, a quinophthalone type pigment, a died lake pigment, an azine type pigment, a nitroso pigment, a nitro pigment, a natural pigment, a fluorescent pigment, inorganic tin oxide, a indium type compound and an inorganic pigment are usable.

Pigments preferably usable in the invention are listed below.
C. I. Pigment Yellow 1, 3, 12, 13, 14, 17, 81, 83, 87, 95, 109 and 42
C. I. Pigment Orange 16, 36 and 38
C. I. Pigment Red 5, 22, 38, 48:1, 48:2, 48:4, 49:1, 53:1, 57:1, 63:1, 144, 146, 185 and 101
C. I. Pigment Violet 19 and 23
C. I. Pigment Blue 15:1, 15:3, 15:4, 18, 60, 27 and 29
C. I. Pigment Green 7 and 36
C. I. Pigment White 6, 18 and 21

### Pigment Black 7

For dispersing the above pigments, for example, a ball mill, a sand mill, an attriter, a roll mill, an agitator, a Henschel mixer, a colloid mill, an ultrasonic homogenizer, a pearl mill, a wet jet mill and a paint shaker are applicable. A dispersing agent can be used on the occasion of dispersing the pigment. A polymer dispersing agent such as Solsperse, manufactured by Avecia Co., Ltd., is preferably used as the dispersing agent. A synergist corresponding to various pigments can be also used as a dispersion assisting agent. These dispersing agents and the dispersing assisting agents are preferably added in an amount of from 1 to 50 parts by weight to 100 parts by weight of the pigment. A solvent or a polymerizable compound is used as the dispersing medium, and the actinic radiation curable ink to be used in the invention preferably contains no solvent for reacting and curing the ink just after landing thereof. When the solvent remains in the cured image problems of degradation in the solvent resistivity and VOC of the remaining solvent are posed. Consequently, the polymerizable compound, not the solvent, particularly the polymerizable compound having lowest viscosity is preferably selected as the dispersing medium from the viewpoint of the dispersion suitability.

The pigment, dispersing agent, dispersing medium, dispersing condition and filtering condition are selected so that the average particle diameter of the pigment preferably becomes from 0.08 to 0.5 µm and the largest particle diameter becomes from 0.3 to 10 µm and preferably from 0.3 to 3 µm. The blocking of the head nozzle can be inhibited and the storage stability, transparency and curing sensitivity of the ink can be maintained by controlling the particle size as above-described.

In the actinic radiation curable ink of the invention, the concentration of the colorant is preferably from 1 to 10% by weight of the entire weight of the ink.

In the invention, namely the invention relating to Claims 1 to 11 and Claims 12 to 30, a thermally base-forming agent also can be used for improving the ejection stability and the storing ability.

As the thermally base-forming agent, for example, a salt of an organic acid and a base capable of decomposing decarbonization by heating, a compound capable of releasing an amine by decomposition by reaction such as intramolecular nucleophilic displacement reaction, Rossen rearrangement or Beckman rearrangement, and a compound capable of releasing a base by any reaction caused by heating, are preferably used. Concretely, a salt of trichloroacetic acid described in British Patent No. 998,949, a slat of α-sulfonylacetic acid described in U. S. Patent No. 4,060,420, a salt of propionic acid described in JP-A 59-157637, a 2-carboxycarboxamide derivative, a thermally decomposable acid salt of an alkali metal or alkali-earth metal additionally an organic base described in JP-A 59-168440, a hydroxamcarbamate utilizing Rossen rearrangement reaction described in JP-A 180537, and a aldoximcarbamate capable of forming a nitrile by heating described in JP-A 59-195237, are cited. Other than the above, the thermally base-forming agent described in British Patent No. 998,945, U. S. Patent No. 3,220,846, British Patent No. 279,480, and JP-A 50-22625, 61-32844, 61-51139, 61-52638, 61-51140, 61-53634 to 61-53640, 61-55644 and 61-55645 are useful. Concrete examples include guanidine trichloroacetate, methylguanidine trichloroacetate, potassium trichloroacetate, guanidine phenylsulfonylacetate, guanidine p-chlorophenylsulfonylacetate, p-methane sulfonylphenylsulfonylacetate, potassium phenylpropyolare, guanidine phenylpropyolate, cesium phenylpropyolate, guanidine p-chlorophenylpropyolate, guanidine p-phenylene-bis-phenylpropyolate, tetramethylammonium phenylsulfonylacetate and tetramethylammonium phenylpropyolate. The above thermally base-forming agents can be widely applied.

The actinic radiation curable ink of the invention can contain a known acid multiplying agent capable of newly forming an acid by the acid formed by irradiation of actinic radiation described in JP-A 8-248561 and 9-34106.

The actinic radiation curable ink of the invention is produced by sufficiently dispersing the pigment together with the polymerizable actinic radiation curable composition and the pigment dispersing agent by a usual dispersing machine such as a sand mill. It is preferable that a concentrated liquid containing the pigment in high concentration is previously prepared and then diluted by the actinic radiation curable composition. The dispersion can be sufficiently carried out by the usual dispersing machine. Therefore, excessive energy and long time are not spent for dispersing so that deterioration of the components of ink is difficultly caused and the ink excellent in the stability can be produced. The ink is preferably filtered by a filter with a pore diameter of not more than 3 µm, and more preferably not more than 1 µm.

### (Viscosity/another physical property)

The viscosity of the actinic radiation curable ink of the invention is preferably controlled within the range of from 1 to 500 mPa at 25 °C and is more preferably controlled relatively high range of from 7 to 40 mPa·s at 25 °C. The ink having a viscosity of from 7 to 40 mPa·s at 25 °C shows stable ejection property on a usual head applied with a frequency of from 4 to 10 KHz through a head applied with a high frequency of from 10 to 50 kHz. When the viscosity is less than 5 mPa·s, degradation in the ejection compliance is observed on the head driven at high frequency and when the viscosity exceeds 40 mPa·s, the ejection suitability is lowered itself and the stability of ejection is degraded even if a viscosity lowering mechanism by heating is built into the head.

It is preferable for a piezo head that the actinic radiation curable ink of the invention has electroconductivity of not more than 10 µS/cm and no electrically corrosion ability to the head. For a continuous type head, controlling the electroconductivity by an electrolytic material is necessary and the electroconductivity has to be controlled at a value of not less than 0.5 mS/cm.

In the invention, the surface tension of the ink at 25 °C is preferably within the range of from 25 to 40 mN/m. When the surface tension at 25 °C is less than 25 mN/m, stable ejection is difficultly carried out and when the surface tension exceeds 40 mN/m, desired dot diameter cannot be obtained. Uniform dots are difficultly obtained on various supports when the surface tension is without the range of from 25 to 40 mN/m even if the ejection and radiation irradiation are carried out while controlling the viscosity and the moisture content of the ink as in the invention.

A surfactant may be added according to necessity for controlling the surface tension. Examples of the surfactant preferably used to the ink of the invention include an anionic surfactant such as a dialkylsulfosuccinate, an alkylnaphthalenesulfonate and a fatty acid salt, a nonion surfactant such as a polyoxyethylenealkyl ether, a plyoxyethylenealkyl allyl ether, an acetylene glycol and a polyoxyethylene·polyoxypropylene copolymer, a cationic surfactant such as an alkylamine salt and a quaternary ammonium salt, and a surface active compound having a polymerizable group. Among them, the surface active compound having a polymerizable group such as a unsaturated bond, an oxirane ring or oxetane ring, for example, a silicone-modified acrylate, a fluorine-modified acrylate, silicone-modified epoxy, a fluorine-modified epoxy, silicone-modified oxetane, a fluorine-modified oxetane is particularly preferable.

In the ink of the invention, various additives other then the above-described can be used. For example, a leveling additive, a matting agent, and a polyester type resin, a polyurethane type resin, a vinyl type resin, an acryl type resin, a rubber type resin and a wax for controlling the physical properties of layer can be added. Addition of small amount of a solvent is useful for improving the contacting ability to the recording medium. In such case, the addition within the range, in which the problems of solvent resistivity and VOC are not caused, is effective and the using amount is within the range of from 0.1 to 5% by weight and preferably from 0.1 to 3% by weight. A radical·cation hybrid type curable ink can be prepared by combining a radical polymerizable monomer and an initiator.

### (Volume of droplet, timing of irradiation and heating of head)

In the image forming method of the invention, the ink composition is ejected onto a recording medium by an ink-jet recording system for forming an image and cured by irradiation actinic radiation such as UV rays.

In the image forming method of the invention, it is preferable to warm the ink together with the ink-jet nozzle on the occasion of ejection of the ink for lowering the viscosity of the ink. The warming temperature is from 30 to 80 °C and preferably from 35 to 60 °C.

In the invention, the entire ink layer thickness after landing and curing by actinic radiation irradiation is preferable from 2 to 20 µm. The ink-jet recording using actinic radiation curable ink in the field of screen printing, the entire ink layer thickness is usually exceeding 20 µm, but such thickness cannot be applied in the field of soft package printing because of not only causing of problems of curling and wrinkling of the recording medium but also variation of the flexibility and quality feeling of the printed material. In the invention, the volume of droplet ejected from each of muzzles is preferably from 2 to 15 pl.

In the invention, the timing of the irradiation is preferably as short as possible for forming a high definition image. It is preferable to begin the irradiation at a time at which the viscosity or moisture content of the ink becomes preferable conditions.

In detail, irradiation of the actinic radiation is preferably begun at a time from 0.001 to 1.0 seconds, and more preferably from 0.001 to 0.4 seconds, after landing of the ink. It is preferable that the irradiation is preferably carried out for 0.1 to 3 seconds, and preferably 0.2 to 1 seconds, until the fluidity of the ink is lost and completed.

The basic method for irradiation of the actinic radiation is disclosed in JP-A 60-132767. According to that, light sources are arranged on both sides of the recording unit and scan between the recording head and the light sources by a shuttle system. The irradiation is carried out after a time lag from landing of the ink. After that, the curing is completed by another not driven light source. An irradiating method using an optical fiber and a method in which collimated UV light is reflected by a mirror arranged on both sides of the recording head unit and introduced to the recording portion are disclosed in U. S. Patent No. 6,145,979. Any of these methods can be applied in the image forming method of the invention.

It is one of preferable embodiments that the irradiation of actinic radiation is separated into two steps and the actinic radiation is irradiated after a time of from 0.001 to 2.0 seconds by the above-mentioned method and actinic radiation is further irradiated after completion of printing the entire image. The shrinkage of the recording material caused on the occasion of curing of the ink can be inhibited by separating the irradiation into the two steps.

As examples of the light source to be used for the actinic radiation irradiation, a mercury arc lamp, a xenon arc lamp, a fluorescent lamp, a carbon arc lamp, a tungsten-halogen lamp for copying, a high pressure mercury lamp, a metal halide lamp, a non-electrode UV lamp, a low pressure mercury lamp, a UV laser, xenon flash lamp, an insect trapping lamp, a black light, a sterilizer lamp, a cold cathode lamp and LED are cited but the light source is not limited to them. Among them the fluorescent lamp is preferable since it is low in the cost. A light source having a light emitting peak within the range of from 250 to 370 nm, and preferably from 270 to 320 nm, is preferably on the point of sensitivity. The illuminance is from 1 to 3,000 mW/cm², and preferably from 1 to 200 mW/cm² . When the curing is carried out by electron ray, electron ray of not more than 300 eV is applied and the curing can be instantaneously performed by an irradiation amount of from 1 to 5 Mrad.

An image is printed on a recording medium, hereinafter also referred to as a substrate, using the actinic radiation curable ink, and synthesized resins used in various uses can be entirely used as the recording medium, and polyester, poly(vinyl chloride), polyethylene, polypropylene, acryl resin, polycarbonate, polystyrene, acrylonitrile-butadienestyrene copolymer, poly(ethylene terephthalate) and poly(butadiene terephthalate) can be concretely exemplified. The thickness and the shape of these synthesized resin substrates are not limited at all.

In the invention, a non-absorbing support can be used additionally to usual uncoated and coated paper. Among them, the non-absorbing support is preferably used.

In the invention, various kinds of plastics and films thereof can be used as the non-absorbing support. As examples of the plastic film, PET film, OPS film, OPP film, ONy film, PVC film, PE film and TAC film are cited. Plastics other than the above, such as poly carbonate, acryl resin, ABS, polyacetal, PVA and rubbers are usable. Metals and glass are also usable. The constitution of the invention is particularly made effective when the image is formed on a shrinkable film such as PET film, OPS film, OPP film, ONy film and PVC film. These substrates are easily curled or deformed by curing and shrinking of the ink and heat generated on the occasion of curing reaction of the ink and the ink layer difficultly follows with the shrinkage of the substrate.

Hitherto, a problem is posed that the diameter of the ink dot is varied after landing because these various kinds of plastic film are largely different from each other in the surface energy. The constitution of the invention include OPP film and OPS film having low surface energy and PET having relatively high surface energy, and one having a wetting index of from 40 to 60 mN/m is preferable.

In the invention, the use of a long length (web) recording medium is advantageous from the viewpoint of the cost of the recording material such as the cost for packaging and production, production efficiency of prints and the corresponding ability to various sizes of print.

The ink-jet recording apparatus of the invention for forming the image by using the actinic radiation curable ink of the invention is described below suitably referring drawings. The recording apparatus shown in the drawings is only an example of embodiment of the recording apparatus of the invention and the recording apparatus of the invention is not limited to the drawings.

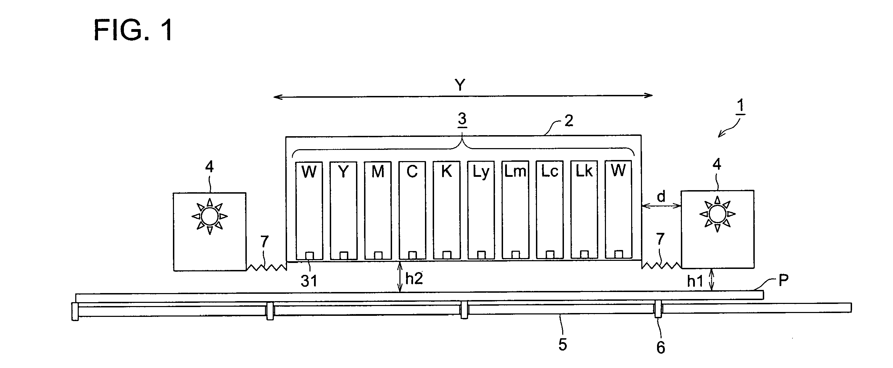

Fig. 1 is a front view displaying the constitution of the principal portion of an ink-jet recording apparatus 1 of the invention. The ink-jet recording apparatus comprises a head carriage 2, a recording head 3, an irradiation means 4 and a platen 5. In the recording apparatus, the platen 5 is provided under a recording material P. The platen 5 has a function of absorbing UV rays and absorbs excessive UV rays passed through the recording material P. As a result of that, a high definition image can be very stably reproduced.

The recording material P is guided by a guiding member 6 and transferred from this side to the inner side in Fig. 1 by the action of a transferring means not shown in the drawing. A head scanning means, not shown in the drawing, gives a reciprocating motion in the direction Y in Fig. 1 to the head carriage so to perform scanning by the recording head 3 held by the head carriage 2.

The head carriage 2 is arrange on the upper side of the recording material P and receives plural recording heads 3 corresponding to number of color to be used for printing image so that the ejecting opening of each of the head is to be on lower side. The head carriage 2 is provided on the main body of the recording apparatus 1 so as to be reciprocally moved in the direction Y in Fig. 1 by driving by the head scanning means.

In Fig. 1, the drawing is made according to a state that the head carriage 2 receives recording heads 3 of white (W), yellow (Y), magenta (M), cyan (C), black (B), light yellow (Ly), light magenta (Lm), light cyan (Lc). light black (Lb) and white (W). In practice , however, the number of color of the recording head 3 to be received in the head carriage 2 is optionally decided.

The recording head 3 ejects actinic radiation curable ink such as a UV curable ink supplied by an ink supplying means, not shown in the drawing, through ejecting openings onto the recording material P by the action of plural ejecting means, not shown in the drawing, provided in the recording head. The UV-ink contains the colorant, polymerizable monomer and initiator and is cured by cross-linking and polymerizing of the monomers accompanied with the catalyst effect of the initiator when irradiated by UV rays.

The recording head 3 ejects the UV-ink in a droplet state to a certain area (landing area) of the recording material P for landing the ink droplet onto the landing area of the recording material during the scanning by the movement of from an end to another end of the recording material P in the direction Y in Fig. 1 by driving by the head scanning means.

The UV-ink is ejected to one landing area by suitable times of the scanning and then the recording material P is suitably moved from this side to the inner sides in Fig. 1 by the transferring means. After that, the ink is ejected to next landing area adjacent to the above landing area in the inner direction in Fig. 1 by the recording head 3 while scanning by the head scanning means.

An image composed of an assembly of UV-ink droplets is formed by repeating the above operation for ejecting the UV-ink from the recording head 3 by interlocking the head scanning means with the transferring means.

The irradiating means comprises a UV lamp emitting UV ray within a specific wavelength range with stable energy for exposing and a filter for passing UV ray having a specific wave length. As the UV ray lamp, a mercury lamp, a metal halide lamp, an exma laser, a UV laser, a cold cathode bulb, a hot cathode bulb, a black light and a light emitting diode (LED) are usable, and the belt-shaped metal halide lamp, cold cathode bulb, hot cathode bulb, mercury lamp and black light are preferable. The cold cathode bulb and black light emitting UV ray of 365 nm and the low pressure mercury lamp, hot cathode bulb, cold cathode bulb and sterilizer lamp each emitting UV ray of 254 nm are preferable since spreading inhibition and dot diameter control can be effectively performed. The irradiating means 4 can be prepared at low cost by using the black light as the radiation source of the irradiating means 4.

The irradiation means 4 has a shape almost the same as or larger than the largest landing area capable of being set by the recording apparatus (UV ink-jet printer among the area on which the ink ejected from the recording head 3 can be landed by once scanning by driving by the driving means.

The irradiating means 4 are fixedly arranged on both sides of the head carriage 2 in almost parallel with the recording material P.

For controlling the illuminance at the ink ejecting portion, wholly shielding the recording head 3 from the light is effective of course, and additionally to that, the method by making larger the distance h2 between the ink ejecting portion 31 of the recording head 3 and the recording material P than that h1 between the irradiating means and the irradiating means (h1 < h2) or increasing the distance d of the recording head 3 and the irradiating means 4 are also effective. It is further preferable to provide a bellows structure 7 between the recording head 3 and the irradiating means 4.

The wavelength of UV ray irradiated by the irradiating means 4 can be suitably varied by changing the UV lamp or the filter provided to the irradiating means.

The ink of the invention is excellent in the ejection stability and particularly useful for forming image by a line head type ink-jet recording head.

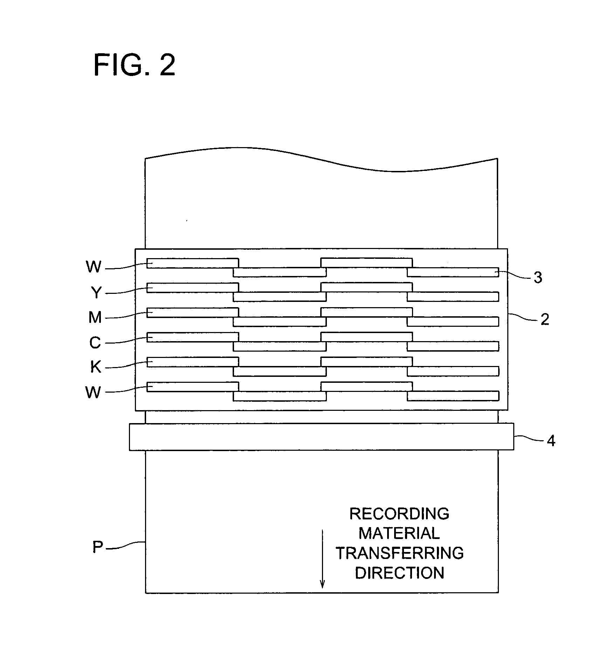

Fig. 2 is an upper view of another example of the principal constitution of the ink-jet recording apparatus.

The ink-jet recording apparatus shown in Fig. 2 is called as line head type, in which plural recording heads of each of the colors are fixedly arranged on the head carriage so as to cover the whole span of the recording material P.

The irradiating means covering the whole image forming area is provided on the down stream side so as to cover the whole span of the recording material. As the UV lamp to be used in the irradiating means 4, the lamp used in the example shown in Fig. 1 can be used.

In the line head system, the head carriage and the irradiating means 4 are fixed and the recording material P is only transferred and subjected to ejection and curing of the ink for forming an image.

### EXAMPLES

The invention is described in detail below referring Examples; the invention is not limited to the examples.

### Example 1: Example relating to the invention of Claims 1 to 11

### (Preparation of actinic radiation curable composition)

Actinic radiation curable compositions were prepared by a adding and dissolving the photopolymerizable compound relating to the invention, photopolymerization initiator (photo-acid generating agent) and a comparative compound as shown in Table 1.

The used compounds are listed below.

Celloxide 2021P: Manufactured by Daicel Kagaku Kogyo CO., Ltd.

Celloxide 3000: Manufactured by Daicel Kagaku Kogyo CO., Ltd.

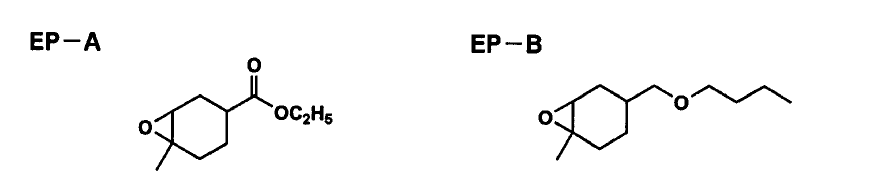

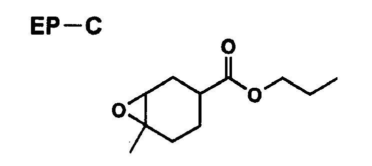

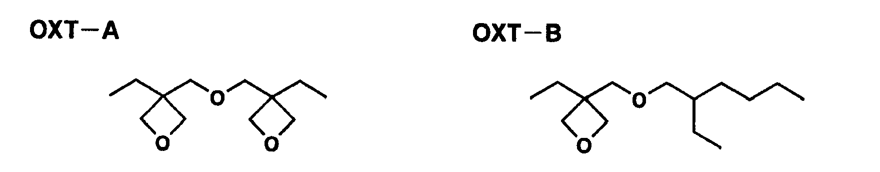

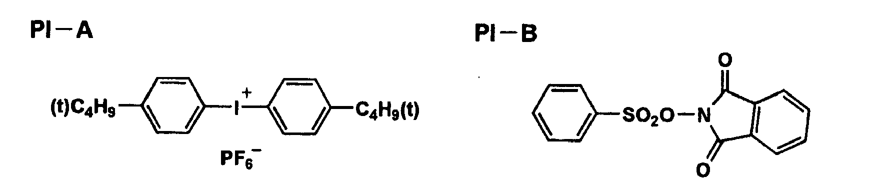

**Table 1**

| Sample No. | Epoxy compound A | | Epoxy compound B | | Oxetane compound | | Photo-acid-forming agent | | Remarks |
|---|---|---|---|---|---|---|---|---|---|
| | Kind | Adding amount (Parts by weight) | Kind | Adding amount (Parts by weight) | Kind | Adding amount (Parts by weight) | Kind | Adding amount (Parts by weight) | |
| 1 | Celloxide 2021P | 30 | EP-A | 20 | OXT-A | 45 | PI-A | 5 | Comparative |
| 2 | Celloxide 3000 | 30 | EP-B | 20 | OXT-B | 45 | PI-3 | 5 | Comparative |
| 3 | EP-4 | 30 | EP-B | 20 | OXT-B | 45 | PI-3 | 5 | Inventive |
| 4 | EP-4 | 35 | EP-11 | 60 | none | - | PI-2 | 5 | Inventive |
| 5 | EP-5 | 35 | EP-18 | 60 | none | - | PI-2 | 5 | Inventive |
| 6 | EP-4 | 50 | none | - | OXT-A | 45 | PI-2 | 5 | Inventive |
| 7 | EP-5 | 50 | none | - | OXT-B | 45 | PI-2 | 5 | Inventive |
| 8 | EP-4 | 30 | EP-11 | 20 | OXT-A | 45 | PI-2 | 5 | Inventive |
| 9 | EP-5 | 30 | EP-18 | 20 | OXT-B | 45 | PI-2 | 5 | Inventive |
| 10 | EP-4 | 30 | EP-11 | 20 | OXT-A | 45 | PI-A | 5 | Inventive |
| 11 | EP-14 | 30 | EP-30 | 20 | OXT-A | 45 | PI-9 | 5 | Inventive |
| 12 | EP-4 | 30 | EP-11 | 20 | OXT-1 | 45 | PI-11 | 5 | Inventive |
| 13 | EP-5 | 30 | EP-18 | 20 | OXT-2 | 45 | PI-2 | 5 | Inventive |
| 14 | EP-4 | 30 | EP-11 | 20 | OXT-2 | 45 | PI-17 | 5 | Inventive |
| 15 | EP-4 | 30 | EP-11 | 20 | OXT-26 | 45 | PI-2 | 5 | Inventive |
| 16 | EP-4 | 30 | EP-11 | 20 | OXT-34 | 45 | PI-29 | 5 | Inventive |

### (Curing of actinic radiation curable composition)

The above obtained actinic radiation curable compositions were each coated on a synthesized paper UPO FSG manufactured by UPO Corporation so that the layer thickness was made to 3 µm, and then the coated layer was irradiated by UV ray of 800 mJ/cm² by a metal halide lamp for not more than 1 second to obtain a cured matter.

### (Evaluation method of cured matter)

The physical properties of the obtained cured matter were evaluated by the following tests.
(1) Pencil scratching test
   The hardness of the cured layer was measured according to JIS K 5400.
   The hardness of the cured layer was tested by a test using a pencil scratching machine according to JIS K 5401. The load was 1,000 g and Mitsubishi Uni Pencil was used. The evaluation was carried out according to occurrence of scratch mark formed on the layer, a pair of the pencils different one step of density code from each other and one of which caused two or more times of scratch marks and another one of which caused less than two times of scratch marks was decided and the pencil scratch strength was represented by the density code of the pencil causing less than two times of the scratch marks.
(2) Cross-cut tape test for measuring adhesion remaining ratio
   Cross cut test according to JIS K 5400 was carried out. The surface of each of the cured layer samples was cut with a right angel by a safety razor blade so that eleven cut-lines were crosswise made at a distance of 1 mm. Thus 100 cross-cut patterns of 1 mm square were prepared. On the cross-cut pattern, an adhesive tape Scotch #250, manufactured by Sumitomo 3M Co., Ltd., was stuck and pressed by a roller of 2 kg for one to-and-fro motion and then the tape was peeled off at one stretch. The number of square of remaining layer or adhesion remaining ratio (%) was determined.
(3) Evaluation of anti-bending ability
   The flexibility was evaluated according to the method for anti-bending ability evaluation of JIS K 5600. The sample was put round on a cylindrical rod and bent at an angle of 120° and then occurrence of cracks was evaluated. The smaller diameter of the rod (φ: mm) corresponds to higher flexibility.
(4) Evaluation of fastness to light
   Each of the samples were irradiated for 7 days in a Xenon weather meter, manufactured by Tsutsunaka Techno Co., Ltd., having a light source of a xenon arc lamp with a radiating illuminance of from 40 to 60 W/m² and set at 40°C and a humidity of 50%; the distance of the light source and the sample was 20 cm. The resultant samples were subjected to the following evaluation of the coloration and the anti-bending ability.

### <Coloration>

The coloration was evaluated according to the following five ranks.
1: The sample was almost not colored.
2: The sample was slightly colored.
3: The sample was colored.
4: The sample was strongly colored.
5: The sample was considerably colored.

### <Anti-bending ability>

### Evaluation was carried out according to the anti-bending ability evaluation method of JIS K 5600

Results of the above evaluations are shown in Table 2.

**Table 2**

| Sample No. | Pencil scratching value (Pencil hardness) | Adhesion remaining ratio (%) | Antibending ability (φ: mm) | Light fastness | | Remarks |
|---|---|---|---|---|---|---|
| | | | | Coloration | Antibending ability | |
| 1 | HB | 60 | 5 | 4 | 8 | Comp. |
| 2 | HB | 55 | 6 | 4 | 10 | Comp. |
| 3 | 3H | 89 | 1 | 1 | 2 | Inv. |
| 4 | 3H | 85 | 2 | 1 | 2 | Inv. |
| 5 | 3H | 85 | 2 | 1 | 2 | Inv. |
| 6 | 4H | 89 | 4 | 1 | 5 | Inv. |
| 7 | 4H | 88 | 4 | 1 | 5 | Inv. |
| 8 | 4H | 89 | 1 | 1 | 2 | Inv. |
| 9 | 4H | 88 | 1 | 1 | 2 | Inv. |
| 10 | 4H | 89 | 1 | 2 | 2 | Inv. |
| 11 | 2H | 80 | 2 | 1 | 2 | Inv. |
| 12 | 3H | 90 | 2 | 1 | 2 | Inv. |
| 13 | 3H | 92 | 1 | 1 | 1 | Inv. |
| 14 | 3H | 85 | 1 | 1 | 1 | Inv. |
| 15 | 4H | 85 | 1 | 1 | 2 | Inv. |
| 16 | 4H | 85 | 1 | 1 | 2 | Inv. |

| | | | | | | |
|---|---|---|---|---|---|---|
| Comp.: Comparative, Inv.: Inventive | | | | | | |

It is understood from Table 2 that the samples relating to the invention of Claims 1 to 11 is superior in the contacting ability to substrate, the harness of layer and the flexibility (ant-bonding ability) and the light fastness of it is also high.

### Example 2: Example relating to the invention of Claims 1 to 11

### (Preparation of actinic radiation curable ink)

Into a stainless steel beaker, 5 parts by weight of dispersing agent (PB822 manufactured by Ajinomoto Finetechno Co., Ltd.) and the photopolymerizable compound listed in Table 3 were charged and stirred for mixing and dissolving spending 1 hour while heating on a hot plate of 65 °C. After that, 3 parts by weight of the following colorant was added and the resultant mixture was put into a polyethylene bottle together with 200 g of zirconia beads having a diameter of 1 mm and closely stopped and dispersed for 2 hours by a paint shaker. Then the zirconia beads were removed, and the additives such as the photopolymerization initiator (photo-acid generating agent), the basic compound and the surfactant were added to the resultant dispersion in the combination described in Table 3. The dispersion was filtered by a membrane filter of 0.8 µm for preventing the blocking in the printer. Thus an actinic radiation curable ink, hereinafter simply referred to as ink, was prepared. Ink-sets 31 to 46 were prepared by using the inks of K, C, M, Y, W, Lk, Lc, Lm and Ly prepared by using each samples listed in table 3. In each of the Lk, Lc, Lm and Ly inks, the pigments that the same as those used in K, C, M and Y inks were used in a 1/5 amount and the reduced amount is compensated by the polymerizable compound in the ink.

Viscosity of each of thus obtained inks was measured at 25 °C and a shear rate of 1,000 (1/s). The viscosities of the inks using the photopolymerizable compounds No.33 to 46 described in Table 3 were within the range of from 12 to 17 mPa·s. Besides, the viscosities of the inks using Sample 31 and 32 were within the range of from 22 to 24 mPa·s.

The used compounds were as follows.
F1405: Megafax F1405 (perfluoroalkyl group-containing ethylene oxide adduct manufactured by Dainihon Ink Co., Ltd.)
F178k: Megafax F178k (perfluoroalkyl group-containing acryl oligomer manufactured by Dainihon Ink Co., Ltd.)
145P: Haritac 145P (Rosin-modified maleic acid resin manufactured by Harima Kagaku Co., Ltd.)
100: Haritac 100 (Rosin-modified maleic acid resin manufactured by Harima Kagaku Co., Ltd.)
K: CI Pigment Black 7
C: CI Pigment Blue 15:3
M: CI Pigment Red 57:1
Y: CI Pigment Yellow 13
W: Titanium oxide (Anatase type, Particle diameter: 0.2 µm)
Lk: CI Pigment Black 7
Kc: CI Pigment Blue 15:3
Km: CI Pigment Red 57:1
Ly: CI Pigment Yellow 13

**Table 3**

| Sample No. | Epoxy compound A | | Epoxy compound B | | Oxetane compound | | Photo-acid-forming agent | | Basic compound | Surfactant | Com patibilizer | Remarks |
|---|---|---|---|---|---|---|---|---|---|---|---|---|
| | Kind | *1 | Kind | *1 | Kind | *1 | Kind | *1 | Adding amount (0.5 parts by weight) | Adding amount (0.5 parts by weight) | Adding amount (0.5 parts by weight) | |
| 31 | Celloxide 2021P | 30 | EP-A | 20 | OXT-A | 45 | PI-A | 5 | B | F178K | R100 | Comp. |
| 32 | Celloxide 3000 | 30 | EP-B | 20 | OXT-B | 45 | PI-3 | 5 | A | F1405 | R100 | Comp. |
| 33 | EP-4 | 30 | EP-B | 20 | OXT-B | 45 | PI-3 | 5 | B | F1405 | 145P | Inv. |
| 34 | EP-4 | 35 | EP-11 | 60 | none | - | PI-2 | 5 | B | F1405 | 145P | Inv. |
| 35 | EP-5 | 35 | EP-18 | 60 | none | - | PI-2 | 5 | A | F1405 | 145P | Inv. |
| 36 | EP-4 | 50 | none | - | OXT-A | 45 | PI-2 | 5 | A | F178K | 145P | Inv. |
| 37 | EP-5 | 50 | none | - | OXT-B | 45 | PI-2 | 5 | A | F178K | R100 | Inv. |
| 38 | EP-4 | 30 | EP-11 | 20 | OXT-A | 45 | PI-2 | 5 | A | F178K | R100 | Inv. |
| 39 | EP-5 | 30 | EP-18 | 20 | OXT-B | 45 | PI-2 | 5 | A | F1405 | R100 | Inv. |
| 40 | EP-4 | 30 | EP-11 | 20 | OXT-A | 45 | PI-A | 5 | A | F1405 | R100 | Inv. |
| 41 | EP-14 | 30 | EP-30 | 20 | OXT-A | 45 | PI-9 | 5 | B | F1405 | 145P | Inv. |
| 42 | EP-4 | 30 | EP-11 | 20 | OXT-1 | 45 | PI-11 | 5 | A | F1405 | 145P | Inv. |
| 43 | EP-5 | 30 | EP-18 | 20 | OXT-2 | 45 | PI-2 | 5 | B | F178K | R100 | Inv. |
| 44 | EP-4 | 30 | EP-11 | 20 | OXT-2 | 45 | PI-17 | 5 | A | F178K | R100 | Inv. |
| 45 | EP-4 | 30 | EP-11 | 20 | OXT-26 | 45 | PI-2 | 5 | A | F178K | R100 | Inv. |
| 46 | EP-4 | 30 | EP-11 | 20 | OXT-34 | 45 | PI-29 | 5 | B | F178K | 145P | Inv. |

| | | | | | | | | | | | | |
|---|---|---|---|---|---|---|---|---|---|---|---|---|
| *1: Adding amount (Parts by weight), Inv.: Inventive, Comp.: Comparative | | | | | | | | | | | | |

### (Ink-jet image forming method)

The above prepared inks were each charged in an ink-jet recording apparatus having the constitution of Fig. 1 which included a piezo type ink-jet nozzle. The following image was continuously printed on a long length recording material having a width of 600 mm and a length of 20 m. The ink supplying system is constituted by an ink tank, a supplying pipe, a previous ink tank provided just before the head, a piping with a filter and a piezo head and the portion of from the previous tank to the head was thermally isolated and heated at 50 °C. The head portion was heated depending on the viscosity of each of the curable ink and driven so that the curable ink was continuously ejected in a state of multisize dots having a volume of from 2 to 15 pl at a resolution of 720 x 720 dpi (dpi was dot number per inch or 2.45 cm). The recording material was heated by 50 °C by a face heater. The ink was instantaneously cured by just after landing (less than 0.5 seconds after landing) by irradiating by an irradiation light source A provided on both sides of the head carriage using a high pressure mercury lamp VZZero 085, manufactured by Integration Technology Co., Ltd., or a irradiation light source B using a metal halide lamp MAL400N (power consumption: 3kW·hr, 120 W/cm, manufactured by Nihon Denchi Co., Ltd.). The total thickness of the ink layer measured after curing was within the range of from 2.3 to 13 µm. The printing of the ink-jet image was carried out under an environmental condition of 25 °C and 20% RH. The printing was also carried out under an environment of 30 °C and 80% RH for evaluating the character quality and color mixing (Results of the ink-sets each prepared by the above actinic radiation curable composition No. 31 to 46 were listed in Table 4 as Sample No. 51 to 66, respectively.).

The integral illuminance of each of the irradiation light sources was measured at 254 nm by UVFP-A1 manufactured by Iwasaki Denki Co., Ltd.

Acronym of each of the recording material was as follows.
UPO FGS: Synthesized paper manufactured by UPO Corporation
PVC: Poly(vinyl chloride)

### (Evaluation of ejection suitability)

The ink was ejected on the PVC after continuous ejection for 30 minutes and the situation of lacking of the ink was visually observed, and evaluated according to the following norms.
A: No lacking of ink was observed; the level was good.
B: The lacking of ink was slightly observed; any problem was not posed at this level.
C: The lacking of ink was observed; the image quality was influence by the lacking at this level.
D: Much lacking occurred; The faults were unacceptable at this level.

### (Evaluation of recorded image)

The images recorded on the PVC and synthesized paper by the foregoing method was subjected to evaluation of character quality and the blur of the images.

### <Character quality>

Characters of six-point MS Mincho font were printed and the roughing of the character images was visually evaluated by enlarging under a loupe and the character quality was evaluated according to the following norms.
A: No roughing was observed.
B: Roughing was slightly observed.
C: Roughing was observed but the character could be distinguished as letter at the lowest level acceptable for practical use.
D: Roughing was serious and the characters were patchy at an unacceptable level.

### <Color mixing (spreading and wrinkling)>

Each one of Y, M, C and K color dots were adjacently printed at 720 dpi and the adjacent color dots were visually observed under a loupe for evaluating the state of spread and winkle at each dots area, and the color mixing was evaluated according the following norms.
A: The shapes of the adjacent dots held true circle without spreading.
B: The shapes of the adjacent dots held almost true circle with almost no spreading.
C: The shapes of the adjacent dots spread a little and the shape of which were deformed some degree, but the states of them were at lowest acceptable level for practical use.
D: The adjacent dots were mixed by spreading and wrinkles occurred at the overlapping portions and the states of them were at unacceptable level.

### (Evaluation of cured layer)

Physical properties of the cured layer formed by ejecting and curing the cyan ink prepared by dispersing the cyan pigment on the PVC by the foregoing image forming method were evaluated by the following methods.
(1) Pencil scratching test
   The hardness of each of the cured sample was measured according to JIS K 5600.
(2) Anti-bending ability test
   The flexibility of each of the samples was evaluated according to the anti-bending evaluation method of JIS K 5600.
(3) Cross-cut tape test for measuring adhesion remaining ratio
   The samples used for the above anti-bending ability test were subjected to the evaluation in the same manner as that in Example 1.
(4) Evaluation of light fastness
   The light fastness of each of the samples used in the above anti-bending ability test was evaluated in the same manner as that in Example 1.

Results of the above evaluations are listed in Table 4.

**Table 4**

| Sample | Ejection suitability | PVC (30 °C· 80%RH) | | UPO FGS (30 °C· 80% RH) | | PVC (25 °C· 20%RH) | | UPO FGS (25 °C· 20% RH) | | *3 | Adhesion remaining ratio (%) | Antibending ability | Lightfastness | | Remarks |
|---|---|---|---|---|---|---|---|---|---|---|---|---|---|---|---|
| | | *1 | *2 | *1 | *2 | *1 | *2 | *1 | *2 | | | | Coloring | Antibending ability | |
| 51 | C | C | C | C | C | C | C | C | C | HB | 60 | 5 | 4 | 8 | Comp. |
| 52 | D | B | B | B | B | B | B | B | B | HB | 55 | 6 | 4 | 10 | Comp. |
| 53 | B | A | B | A | B | A | A | A | A | 3H | 89 | 1 | 1 | 2 | Inv. |
| 54 | B | A | B | A | B | A | A | A | A | 3H | 85 | 2 | 1 | 2 | Inv. |
| 55 | A | A | A | A | A | A | A | A | A | 3H | 85 | 2 | 1 | 2 | Inv. |
| 56 | A | A | A | A | A | A | A | A | A | 4H | 89 | 4 | 1 | 5 | Inv. |
| 57 | A | A | A | A | A | A | A | A | A | 4H | 88 | 4 | 1 | 5 | Inv. |
| 58 | A | A | A | A | A | A | A | A | A | 4H | 89 | 1 | 1 | 2 | Inv. |
| 59 | A | A | A | A | A | A | A | A | A | 4H | 88 | 1 | 1 | 2 | Inv. |
| 60 | A | A | A | A | A | A | A | A | A | 4H | 89 | 1 | 2 | 2 | Inv. |
| 61 | A | A | A | A | A | A | A | A | A | 2H | 80 | 2 | 1 | 2 | Inv. |
| 62 | A | A | A | A | A | A | A | A | A | 3H | 90 | 2 | 1 | 2 | Inv. |
| 63 | A | A | A | A | A | A | A | A | A | 3H | 92 | 1 | 1 | 1 | Inv. |
| 64 | A | A | A | A | A | A | A | A | A | 3H | 85 | 1 | 1 | 1 | Inv. |
| 65 | A | A | A | A | A | A | A | A | A | 4H | 85 | 1 | 1 | 2 | Inv. |
| 66 | A | A | A | A | A | A | A | A | A | 4H | 85 | 1 | 1 | 2 | Inv. |

| | | | | | | | | | | | | | | | |
|---|---|---|---|---|---|---|---|---|---|---|---|---|---|---|---|
| *1: Character quality, *2: Color mixing, *3: Pencil scratching hardness Comp.: Comparative, Inv.: Inventive, | | | | | | | | | | | | | | | |

It is understood from Table 4 that the inventive samples relating Claims 1 to 11 are each low in the viscosity, excellent in the ejection suitability and displays good curing ability with low influence of environmental humidity. Furthermore, it is also understood that the contacting ability to the substrate, hardness of the layer, flexibility and the fastness of the layer to light are high.

### Example 3: Examples relating to Claims 12 to 30

### Preparation of polymerizable actinic radiation curable composition

For preparing polymerizable actinic radiation curable compositions, 10 g of each of polymerizable compounds, 0.5 g of each of the polymerizable initiators and 25 ml of each of solvents were mixed and dissolved as shown in Table 5.

Polymerization of polymerizable actinic radiation curable composition

Polymerization was carried out by the following method. The above prepared polymerizable actinic radiation curable composition was stirred for 20 minutes while heating and refluxing under nitrogen atmosphere and then reaction was stopped by adding 1 g of trimethylamine. After that, 20 ml of methanol added and precipitation was filtered. The precipitation was sufficiently washed by methanol, dried under reduced pressure and weighed.

### Evaluation of polymerizable actinic radiation curable composition

Yields of each of resultant cured polymers were compared. Samples giving yield of less than 20%, 20 to 40%, 40 to 60%, more than 60% and more than 70% were each ranked into A, B, C, D and E, respectively.

Used compounds were as follows.

OXT-221: Manufactured by Toa Gosei Co., Ltd.

OXT-212: Manufactured by Toa Gosei Co., Ltd.

Irgacure-250 (Manufactured by Ciba Specialty Chemicals Co., Ltd.)

**Table 5**

| Sample No. | Polymerizable compound | Polymerization initiator | Solvent | Yield | |
|---|---|---|---|---|---|
| 101 | X-1 | *1 | Dichloroethane | C | Inv. |
| 102 | X-2 | *1 | Dichloroethane | D | Inv. |
| 103 | X-2 | *1 | Tetrachloroethane | E | Inv. |
| 104 | X-3 | *2 | Dichloroethane | D | Inv. |
| 105 | X-3/OXT-212 (Each 5 g) | *2 | Dichloroethane | E | Inv. |
| 106 | X-3 | Trifluloracetic acid | Dichloroethane | E | Inv. |
| 107 | X-4 | *2 | Dichloroethane | C | Inv. |
| 108 | X-4/0XT-212 (Each 5 g) | *2 | Dichloroethane | D | Inv. |
| 108 | X-4 | Trifluloracetic acid | Dichloroethane | C | Inv. |
| 109 | X-5 | Trifluloracetic acid | Dichloroethane | D | Inv. |
| 110 | X-7 | Trifluloracetic acid | Dichloroethane | D | Inv. |
| 112 | X-8 | Trifluloracetic acid | Dichloroethane | D | Inv. |
| 113 | X-10 | Trifluloracetic acid | Dichloroethane | D | Inv. |
| 114 | X-10/OXT-221 (Each 5 g) | Trifluloracetic acid | Dichloroethane | E | Inv. |
| 115 | X-11 | Trifluloracetic acid | Dichloroethane | D | Inv. |
| 116 | X-19 | Trifluloracetic acid | Dichloroethane | D | Inv. |
| 117 | X-20 | Trifluloracetic acid | Dichloroethane | D | Inv. |
| 118 | X-23 | Trifluloracetic acid | Dichloroethane | D | Inv. |
| 119 | X-24 | *2 | Dichloroethane | C | Inv. |
| 120 | X-46 | Trifluloracetic acid | Dichloroethane | E | Inv. |
| 121 | X-53 | Trifluloracetic acid | Dichloroethane | E | Inv. |
| 122 | X-66 | Trifluloracetic acid | Dichloroethane | C | Inv. |
| 123 | X-68 | Trifluloracetic acid | Dichloroethane | D | Inv. |
| 124 | X-73 | Trifluloracetic acid | Dichloroethane | D | Inv. |
| 125 | X-88 | Trifluloracetic acid | Dichloroethane | C | Inv. |
| 126 | X-92 | Trifluloracetic acid | Dichloroethane | D | Inv. |
| 127 | X-97 | Trifluloracetic acid | Dichloroethane | D | Inv. |
| 128 | X-100 | Trifluloracetic acid | Dichloroethane | D | Inv. |
| 129 | X-119 | Trifluloracetic acid | Dichloroethane | C | Inv. |
| 130 | Comparative compound 1 | Trifluloracetic acid | Dichloroethane | A | Comp. |
| 131 | Comparative compound 2 | Trifluloracetic acid | Dichloroethane | B | Comp. |
| 132 | Comparative compound 2 | *2 | Dichloroethane | A | Comp. |
| 133 | Comparative compound 3 | Trifluloracetic acid | Dichloroethane | A | Comp. |
| 134 | Comparative compound 3 | *2 | Dichloroethane | A | Comp. |

| | | | | | |
|---|---|---|---|---|---|
| *1: Trifluoromethanesulfonic acid *2:IRGA CURE 250(by Ciba Specialty Chemicals) Inv.: Inventive, Comp.: Comparative | | | | | |

Comparative compound 1:Terbinolene oxide (manufactured by Atofina Co., Ltd.

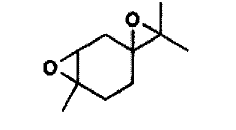

Comparative compound 2: 2,2-bis(3,4-epoxycyclohexyl)-1,1,1,3,3,3-hexafluoropropane (A compound described in JP-A 2004-359869)

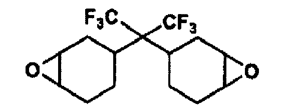

Comparative compound 3: 2,2-(3,4-epoxycyclohexyl)-propane (A compound described in JP-A 2004-359869)

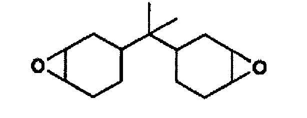

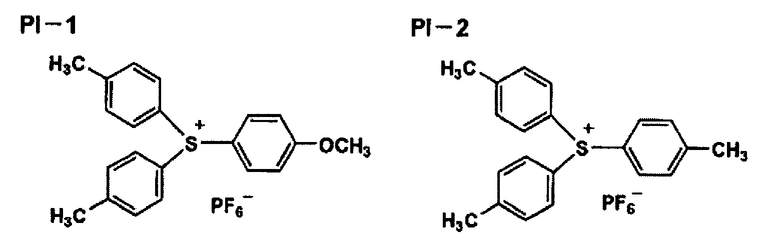

It was understood from Table 5 that the polymerizable actinic radiation curable compositions of the invention were polymerized within relatively short time with high yield compared to the compositions using the comparative compounds. It was confirmed that the polymerization was progressed when Sample 105 was subjected to polymerization reaction while irradiating by a high pressure mercury lamp. It was also confirmed that polymerization was progressed when the polymerization initiators were respectively replaced by PI-1 and PI-2 and subjected to polymerization reaction while irradiating by the high pressure mercury lamp.

### Example 4; Example relating to Claims 12 to 30

Polymerizable actinic radiation curable compositions were prepared by mixing and dissolving the photopolymerizable compounds, photopolymerization initiators, compounds of the invention and the other additive as shown in Table 6. Samples No. 201 to 230 each have no unpleasant or stimulative odor. On the other hand, stimulative odor was felt from Comparative Samples No. 201 to 209.

Used compounds were as follows.
Celloxide 2921P: Manufactured by Daicel Co., Ltd.
Celloxide 3000: Manufactured by Daicel Co., Ltd.
α-pinen oxide: Manufactured by Tokyo Kasei Kogyo Co., Ltd.
Epolead GT301: Manufactured by Daicel Co., Ltd.
SP-152: Adeca Optmer SP-152 manufactured by Asahi Denka Co., Ltd.

UVI-6992: 50% solution of propion carbonate manufactured by Dow Chemical Co., Ltd.
N-ethyldiethanol amine (Basic Compound A)
Triisopropanolamine (Basic Compound B)

**Table 6**

| Sample No. | Compound of Formula (X) | | Oxetane compound | | Another cation polymerizable compound | | Photo-acid-forming compound | | Basic compound | |
|---|---|---|---|---|---|---|---|---|---|---|
| | Kind | *1 | Kind | *1 | Kind | *1 | Kind | *1 | Kind | *1 |
| 201 | X-1 | 30 | OXT-221 | 70 | | | UVI-6992 | 5 | A | 0.5 |
| 202 | X-2 | 30 | OXT-221 | 70 | | | PI-1 | 5 | A | 0.5 |
| 203 | X-3 | 25 | OXT-221 | 75 | | | PI-1 | 5 | A | 0.5 |
| 204 | X-4 | 15 | OXT-221 | 80 | X-7 | 5 | PI-1 | 5 | A | 0.5 |
| 205 | X-5 | 20 | OXT-221 | 65 | X-8 | 15 | PI-1 | 5 | A | 0.5 |
| 206 | X-9 | 10 | OXT-221 | 80 | X-92 | 10 | PI-1 | 5 | A | 0.5 |
| 207 | X-10 | 30 | OXT-221 | 70 | | | PI-1 | 5 | B | 0.5 |
| 208 | X-11 | 55 | OXT-221 | 30 | EP-73 | 15 | SP-152 | 5 | B | 0.5 |
| 209 | X-11 | 20 | OXT-221 | 65 | SEP-150 | 15 | PI-1 | 5 | A | 0.5 |
| 210 | X-12 | 30 | OXT-221 | 70 | | | PI-1 | 5 | A | 0.5 |
| 211 | X-19 | 30 | OXT-221 | 70 | | | PI-1 | 5 | A | 0.5 |
| 212 | X-20 | 30 | OXT-221 | 60 | Celoxide 3000 | 10 | PI-1 | 5 | A | 0.5 |
| 213 | X-21 | 30 | OXT-221 | 60 | OXT-212 | 10 | PI-2 | 5 | A | 0.5 |
| 214 | X-23 | 25 | OXT-221 | 65 | Celoxide 2021P | 10 | UVI-6992 | 5 | A | 0.5 |
| 215 | X-29 | 25 | OXT-221 | 60 | Celoxide 2021P | 15 | UVI-6992 | 5 | B | 0.5 |
| 216 | X-46 | 35 | OXT-221 | 55 | OXT-212 | 10 | PI-2 | 5 | B | 0.5 |
| 217 | X-90 | 25 | OXT-221 | 60 | EP-73 | 15 | PI-1 | 5 | B | 0.5 |
| 218 | X-91 | 25 | OXT-221 | 60 | EP-73 | 15 | PI-1 | 5 | B | 0.5 |
| 219 | X-3 | 25 | OXT-221 | 60 | EP-73 | 15 | PI-1 | 5 | B | 0.5 |
| 220 | X-10 | 20 | OXT-221 | 60 | EP-73 | 20 | PI-1 | 5 | B | 0.5 |
| 221 | X-3 | 15 | OXT-212 | 55 | EP-89 | 30 | PI-1 | 5 | A | 0.5 |
| 222 | X-10 | 15 | OXT-221 | 55 | EP-94 | 30 | PI-1 | 5 | A | 0.5 |
| 223 | X-10 | 20 | OXT-221 | 75 | SEP-150 | 5 | PI-1 | 5 | A | 0.5 |
| 224 | X-3 | 15 | OXT-221 | 70 | EP-89 | 15 | PI-1 | 5 | B | 0.5 |
| 225 | X-10 | 15 | OXT-221 | 70 | EP-94 | 15 | PI-1 | 5 | B | 0.5 |
| 226 | X-3 | 70 | OXT-221 | 20 | SEP-150 | 10 | PI-1 | 5 | A | 0.5 |
| 227 | X-3 | 15 | OXT-221 | 70 | X-24 | 15 | PI-1 | 5 | A | 0.5 |
| 228 | X-46 | 20 | OXT-221 | 70 | SEP-150 | 10 | PI-1 | 5 | B | 0.5 |
| 229 | X-46 | 15 | OXT-221 | 70 | EP-89 | 15 | PI-1 | 5 | B | 0.5 |
| 230 | X-73 | 20 | OXT-221 | 70 | SEP-150 | 10 | PI-1 | 5 | B | 0.5 |
| Comp. 201 | | | OXT-221 | 65 | α-pinen oxide | 35 | UVI-6992 | 5 | A | 0.5 |
| Comp. 202 | | | OXT-221 | 50 | α-pinen oxide | 50 | UVI-6992 | 5 | A | 0.5 |
| Comp. 203 | | | OXT-221 | 65 | Comparative compound 1 | 35 | UVI-6992 | 5 | A | 0.5 |
| Comp. 204 | | | OXT-221 | 50 | Comparative compound 1 | 50 | UVI-6992 | 5 | A | 0.5 |
| Comp. 205 | | | OXT-212 | 50 | Comparative compound 2 | 50 | UVI-6992 | 5 | A | 0.5 |
| Comp. 206 | | | OXT-212 | 75 | Comparative compound 2 | 25 | UVI-6992 | 5 | A | 0.5 |
| Comp. 207 | | | OXT-212 | 50 | Comparative compound 3 | 50 | UVI-6992 | 5 | A | 0.5 |
| Comp. 208 | | | OXT-212 | 75 | Comparative compound 3 | 25 | UVI-6992 | 5 | B | 0.5 |
| Comp. 209 | | | OXT-212 | 45 | Epolead GT301 | 55 | UVI-6992 | 5 | B | 0.5 |

| | | | | | | | | | | |
|---|---|---|---|---|---|---|---|---|---|---|
| *1: Adding amount (Parts by weight), Comp.: Comparative Sample | | | | | | | | | | |

### Curing of polymerizable actinic radiation curable composition

A coating layer was formed and cured by the following procedure. The above obtained polymerizable actinic radiation curable compositions were each coated on TAC film so that the layer thickness is to be 5 µm and irradiated by 800 mJ/cm² of UV rays by a metal halide lamp for a time of less than 2 seconds to obtain a cured layer.

### Evaluation method of cured layer

Physical properties of the cured layer were evaluated by the following tests.
(1) Pencil stretching test: Hardness of each of the cured layer was determined according to JIS K 5400.
   In the ranks of the hardness, 6B was softest and 9H was hardest in the series of (Soft) 6B to B, HB and H to 9H (Hard).
(2) Cross-cut tape test for measuring adhesion remaining ratio: Cross-cut test according to JIS K 5400 was carried out. The surface of each of the cured layer samples was cut with a right angel by a safety razor blade so that eleven cut-lines were crosswise made at a distance of 1 mm. Thus 100 cross-cut patterns of 1 mm square were prepared. On the cross-cut pattern, an adhesive tape Scotch #250, manufactured by Sumitomo 3M Co., Ltd., was stuck and pressed by a roller of 2 kg for one to-and-fro motion and then the tape was peeled off at one stretch. The number of square of remaining layer or adhesion remaining ratio (%) was determined.
(3) Evaluation of anti-bending ability: Flexibility of each of the above obtained cured layers was evaluated according to the anti-bending ability evaluating method of JIS K 5600.

### Evaluation of viscosity

Viscosity of each of the above prepared polymerizable actinic radiation curable compositions was measured by a rheometer MCR 300, manufactured by Physica Co., Ltd., at 25 °C and a shear rate of 1,000 (1/s). A sample having a viscosity at 25 °C of less than 150 mPa·s was ranked as A, and those each having a viscosity of from 150 to 300 mPa·s, from 300 to 500 mPa·s and more than 500 mPa·s were ranked as B, C and D, respectively.

### Evaluation of storage ability of cured layer

The above obtained cured layers were each stored for one month under a high temperature-high humidity condition of 85 °C and 90% RH and then subjected to the pencil stretching test and the flexibility evaluation by methods the same as the foregoing test methods. A sample showing no large difference was ranked as A, that showing some degree of deterioration but no problem was posed in practical use was ranked as B, that showing deterioration was ranked as C and that showing considerable deterioration was ranked as D. Results were listed in Table 7.

**Table 7**

| Sample No. | Pencil scratching test Pencil hardness | Adhesion remaining ratio (%) | Antibending ability φ : mm | Storage ability of cured layer | Viscosity |
|---|---|---|---|---|---|
| 201 | 3H | 75 | *1 | A | A |
| 202 | 3H | 75 | *1 | A | A |
| 203 | 3H | 75 | *1 | A | A |
| 204 | 2H | 80 | *1 | A | A |
| 205 | 3H | 75 | *1 | A | A |
| 206 | 2H | 85 | *1 | A | A |
| 207 | 3H | 85 | *1 | A | A |
| 208 | 3H | 75 | *1 | B | D |
| 209 | 3H | 80 | *1 | A | B |
| 210 | 3H | 75 | *1 | A | A |
| 211 | 3H | 80 | *1 | A | A |
| 212 | 3H | 75 | 3 mmφ | B | A |
| 213 | 2H | 80 | 2 mmφ | B | A |
| 214 | 2H | 75 | 3 mmφ | B | A |
| 215 | 2H | 75 | 3 mmφ | B | A |
| 216 | 2H | 80 | 2 mmφ | B | A |
| 217 | 3H | 75 | * | A | A |
| 218 | 3H | 80 | * | A | A |
| 219 | 3H | 80 | *1 | A | A |
| 220 | 3H | 80 | *1 | A | A |
| 221 | 3H | 80 | *1 | A | A |
| 222 | 3H | 85 | *1 | A | A |
| 223 | 3H | 80 | *1 | A | A |
| 224 | 3H | 80 | * 1 | A | A |
| 225 | 3H | 80 | *1 | A | A |
| 226 | 3H | 80 | *1 | A | C |
| 227 | 3H | 80 | *1 | A | A |
| 228 | 3H | 80 | *1 | A | B |
| 229 | 3H | 80 | *1 | A | A |
| 230 | 3H | 80 | *1 | A | A |
| Comp.201 | HB | 65 | 7 mmφ | D | A |
| Comp.202 | B | 80 | 7 mmφ | D | A |
| Comp.203 | 2H | 55 | *2 | D | A |
| Comp.204 | H | 40 | *2 | D | A |
| Comp.205 | 2H | 60 | 5 mmφ | C | B |
| Comp.206 | H | 75 | 7 mmφ | C | A |
| Comp.207 | 2H | 70 | 3 mmφ | C | B |
| Comp.208 | H | 65 | 5 mmφ | C | A |
| Comp.209 | HB | 60 | 3 mmφ | D | D |

| | | | | | |
|---|---|---|---|---|---|
| Comp.: Comparative Sample, *1: No crack occurred at 1 mmφ *2: crack occurred at 10 mmφ | | | | | |

It was understood from Table 7 that the samples of the invention had sufficient contacting ability and hardness and held the harness and flexibility after the storage for prolonged period without little degradation.

### Example 5: Example relating to Claims 12 to 30 «Composition of ink»

Into a stainless steel beaker, 5 parts by weight of dispersing agent (PB822 manufactured by Ajinomoto Finetechno Co., Ltd.) and the photopolymerizable compound listed in Table 8 were charged and stirred for mixing and dissolving spending 1 hour while heating on a hot plate of 65 °C. After that, 3 parts by weight of the following colorant was added and the resultant mixture was put into a polyethylene bottle together with 200 g of zirconia beads having a diameter of 1 mm and closely stopped and dispersed for 2 hours by a paint shaker. Then the zirconia beads were removed, and the additives such as the photopolymerization initiator, the basic compound and the surfactant were added to the resultant dispersion in the combination described in Table 8. The dispersion was filtered by a membrane filter of 0.8 µm for preventing the blocking in the printer. Actinic radiation curable ink-sets composed of K, C, M, Y, W, Lk, Lc, Lm and Ly were prepared by using. In each of the Lk, Lc, Lm and Ly inks, the pigments that the same as those used in K, C, M and Y inks were used in a 1/5 amount and the reduced amount was compensated by the polymerizable compound in the ink.

Pigments used in the inks were as follows.
K: CI Pigment Black 7
C: CI Pigment Blue 15:3
M: CI Pigment Red 57:1
Y: CI Pigment Yellow 13
W: Titanium oxide (Anatase type, particle diameter 0.2 µm)
Lk: CI Pigment Black 7
Lc: CI Pigment Blue 15:3
Lm: CI Pigment Red 57:1
Ly: CI Pigment Yellow 13

The used compounds are as follows.
F178k: Megafax F178K (Perfluoroalkyl group-containing acryl oligomer (Manufactured by Dainihon Ink Kagaku Kogyo Co., Ltd.)
F1405: Megafax F1405 (Perfluoroalkyl group-containing ethylene oxide adduct, Dainihon Ink Kagaku Kogyo Co., Ltd.)
R100: Haritac R100 (Rosin-modified maleic acid resin manufactured by Harima Kagaku Co., Ltd.)
R100: Haritac R145P (Rosin-modified maleic acid resin manufactured by Harima Kagaku Co., Ltd.)

**Table 8**

| Sample No. | Epoxy compound of Formula (X) | | Oxetane compound | | Another cation polymerizable compound | | Photo-acid-forming agent | | Basic compound Adding amount: 0.5 parts by weight | Surfactant Adding amount: 0.5 parts by weight | Compatibilizing agent Adding amount: 0.5 parts by weight |
|---|---|---|---|---|---|---|---|---|---|---|---|
| | Kind | *1 | Kind | *1 | Kind | *1 | Kind | *1 | Kind | Kind | Kind |
| 401 | X-1 | 20 | OXT-221 | 80 | | | UVI-6992 | 5 | A | F1405 | 145P |
| 402 | X-2 | 20 | OXT-221 | 80 | | | PI-1 | 5 | A | F1405 | 145P |
| 403 | X-3 | 15 | OXT-221 | 85 | | | PI-1 | 5 | A | F1405 | 145P |
| 404 | X-4 | 15 | OXT-221 | 80 | X-7 | 5 | PI-1 | 5 | A | F1405 | 145P |
| 405 | X-5 | 15 | OXT-221 | 70 | X-8 | 15 | PI-1 | 5 | A | F1405 | 145P |
| 406 | X-9 | 10 | OXT-221 | 80 | X-92 | 10 | PI-1 | 5 | A | F1405 | 145P |
| 407 | X-10 | 25 | OXT-221 | 75 | | | PI-2 | 5 | B | F1405 | 145P |
| 408 | X-11 | 15 | OXT-221 | 77 | EP-73 | 8 | SP-152 | 5 | B | F1405 | 145P |
| 409 | X-11 | 15 | OXT-221 | 70 | SEP-150 | 15 | PI-1 | 5 | A | F1405 | 145P |
| 410 | X-12 | 25 | OXT-221 | 75 | | | PI-1 | 5 | A | F1405 | 145P |
| 411 | X-19 | 25 | OXT-221 | 75 | | | PI-1 | 5 | A | F1405 | 145P |
| 412 | X-20 | 30 | OXT-221 | 60 | Celoxide 3000 | 10 | PI-1 | 5 | A | F1405 | 145P |
| 413 | X-21 | 25 | OXT-221 | 65 | OXT-212 | 10 | PI-2 | 5 | A | F178k | R100 |
| 414 | X-23 | 20 | OXT-221 | 70 | Celoxide 2010P | 10 | UVI-6992 | 5 | A | F178k | R100 |
| 415 | X-29 | 20 | OXT-221 | 70 | Celoxide 2010P | 10 | UVI-6992 | 5 | B | F178k | R100 |
| 416 | X-46 | 30 | OXT-221 | 60 | OXT-212 | 10 | PI-2 | 5 | B | F178k | R100 |
| 417 | X-90 | 25 | OXT-221 | 65 | EP-73 | 10 | PI-1 | 5 | B | F178k | R100 |
| 418 | X-91 | 25 | OXT-221 | 65 | EP-73 | 10 | PI-1 | 5 | B | F178k | R100 |
| 419 | X-3 | 25 | OXT-221 | 65 | EP-73 | 10 | PI-1 | 5 | B | F178k | R100 |
| 420 | X-10 | 20 | OXT-221 | 65 | EP-73 | 15 | PI-1 | 5 | B | F178k | R100 |
| 421 | X-3 | 15 | OXT-212 | 70 | EP-89 | 15 | PI-1 | 5 | A | F1405 | 145P |
| 422 | X-10 | 15 | OXT-221 | 70 | EP-94 | 15 | PI-1 | 5 | A | F1405 | 145P |
| 423 | X-10 | 25 | OXT-221 | 65 | SEP-150 | 10 | PI-1 | 5 | A | F1405 | 145P |
| 424 | X-3 | 15 | OXT-221 | 70 | EP-89 | 15 | PI-1 | 5 | B | F1405 | 145P |
| 425 | X-10 | 15 | OXT-221 | 70 | EP-94 | 15 | PI-1 | 5 | B | F1405 | 145P |
| 426 | X-3 | 20 | OXT-221 | 70 | SEP-150 | 10 | PI-1 | 5 | A | F178k | R100 |
| 427 | X-3 | 15 | OXT-221 | 75 | X-24 | 10 | PI-1 | 5 | A | F178k | R100 |
| 428 | X-46 | 20 | OXT-221 | 70 | SEP-150 | 10 | PI-1 | 5 | B | F178k | R100 |
| 429 | X-46 | 15 | OXT-221 | 70 | EP-89 | 15 | PI-1 | 5 | B | F178k | R100 |
| 430 | X-73 | 20 | OXT-221 | 70 | SEP-150 | 10 | PI-1 | 5 | B | F178k | R100 |
| Comp. 401 | | | OXT-221 | 65 | α-pinen oxide | 35 | UVI-6992 | 5 | A | F178k | R100 |
| Comp. 402 | | | OXT-221 | 50 | α-pinen oxide | 50 | UVI-6992 | 5 | A | F178k | R100 |
| Comp. 403 | | | OXT-221 | 65 | Comparative compound 1 | 35 | UVI-6992 | 5 | A | F178k | R100 |
| Comp. 404 | | | OXT-212 | 75 | Comparative compound 2 | 25 | UVI-6992 | 5 | A | F178k | R100 |
| Comp. 405 | | | OXT-212 | 75 | Comparative compound 3 | 25 | UVI-6992 | 5 | A | F178k | R100 |
| Comp.406 | | | OXT-212 | 85 | Epolead GT301 | 15 | UVI-6992 | 5 | A | F178k | R100 |

| | | | | | | | | | | | |
|---|---|---|---|---|---|---|---|---|---|---|---|
| Comp.: Comparative Sample, *1: Adding amount (Parts by weight) | | | | | | | | | | | |

### «Ink-jet image forming method»

The above prepared inks were each charged in an ink-jet recording apparatus having the constitution of Fig. 1 which included a piezo type ink-jet nozzle. The following image was continuously printed on a long length recording material having a width of 600 mm and a length of 20 m. The ink supplying system is constituted by an ink tank, a supplying pipe, previous ink tank provided just before the head, a piping with a filter and a piezo head and the portion of from the previous tank to the head was thermally isolated and heated at 50 °C. The head portion was heated depending on the viscosity of each of the curable ink and driven so that the curable ink was continuously ejected in a state of multi-size dots having a volume of from 2 to 15 pl at a resolution of 720 x 720 dpi (dpi was dot number per inch or 2.45 cm). The recording material was heated by 50 °C by a face heater. The ink was instantaneously cured by just after landing (less than 0.5 seconds after landing) by irradiating by an irradiation light source A provided on both sides of the head carriage using a high pressure mercury lamp VZZero 085, manufactured by Integration Technology Co., Ltd., or a irradiation light source B using a metal halide lamp MAL400N (power consumption: 3kW·hr, 120 W/cm, manufactured by Nihon Denchi Co., Ltd.). The total thickness of the ink layer measured after curing was within the range of from 2.3 to 13 µm. The printing of the ink-jet image was carried out under environmental conditions of 27 °C at 85% RH and 25 °C at 20% RH.

The integral illuminance of each of the irradiation light sources was measured at 254 nm by UVFP-A1 manufactured by Iwasaki Denki Co., Ltd.

Acronym of each of the recording material was as follows.
UPO FGS: Synthesized paper manufactured by UPO Corporation
PVC: Poly(vinyl chloride)

### Evaluation of viscosity

Viscosity of each of the above prepared inks was measured by a rheometer MCR 300, manufactured by Physica Co., Ltd., at 25 °C and a shear rate of 1,000 (1/s). A sample having a viscosity at 25 °C of within the range of from 7 to 40 mPa·s was ranked as A, and those each having a viscosity of 80 or more mPa·s was ranked as D.

Evaluation of background contamination by mist.

Contamination caused by mist adhering on a side of a magenta solid image formed on the PVA recording medium was visually evaluated and classified into four ranks A, B, C and D.
A: Contamination was at a good level with almost no mist.
B: Contamination was at a level causing no problem though the mist was slightly observed.
C: Mist at a level influencing to image quality was observed.
D: Much mist at an unacceptable level was observed.

Ranks A and B were the level where any problem was not caused.

### (Evaluation of ejection suitability)

The ink was ejected on the PVC after continuous ejection for 30 minutes and the situation of lacking of the ink was visually observed, and evaluated according to the following norms.
A: No lacking of ink was observed; the level was good.
B: The lacking of ink was slightly observed; any problem was not posed at this level.
C: The lacking of ink was observed; the image quality was influence by the lacking at this level.
D: Much lacking occurred; the faults were unacceptable at this level.

Ranks A and B were the level where any problem was not caused.

### Evaluation of ink-jet recorded image

Images recorded on the synthesized pare and the PVA were subjected to the following evaluations. Characters of six-point MS Mincho font were printed and the roughing of the character images was evaluated by enlarging under a loupe and the character quality was evaluated according to the following norms.
A: No roughing was observed.
B: Roughing was slightly observed.
C: Roughing was observed but the character could be distinguished as letter at the lowest level acceptable for practical use.
D: Roughing was serious and the characters were patchy at an unacceptable level.

Ranks A and B were the level where any problem was not caused.

### <Color mixing (spreading and wrinkling)>

Each one of Y, M, C and K color dots were adjacently printed at 720 dpi and the adjacent color dots were visually observed under a loupe for evaluating the state of spread and winkle of each dots are, and the color mixing was evaluated according the following norms.
A: The shapes of the adjacent dots held true circle without spreading.
B: The shapes of the adjacent dots held almost true circle with almost no spreading.
C: The shapes of the adjacent dots spread a little and the shape of which were deformed some degree, but the states of them was at lowest acceptable level for practical use.
D: The adjacent dots were mixed by spreading and wrinkles occurred at the overlapping portions and the states of them were at an unacceptable level.

Ranks A and B were the level where any problem was not caused.

Evaluation of hardness and anti-bending ability cured layer

Physical properties of the cured layer prepared by printing an image on the PVA by the foregoing ink-jet image forming method using the magenta ink prepared by dispersing the magenta pigment were evaluated by the following methods.
(1) Pencil stretching test: Hardness of each of the cured layer was determined according to JIS K 5400. In the ranks of the hardness, 6B was softest and 9H was hardest in the series of (Soft) 6B to B, HB and H to 9H (Hard).
(2) Evaluation of anti-bending ability: The ink was coated by ejection on the PVC so that the layer thickness was made to 3 µm and irradiated by UV rays of 800 ml/cm² for not more than 1 second to obtain a cured layer. Flexibility of thus obtained cured layer was evaluated according to the anti-bending ability test method of JIS K 5600.

### Evaluation of storing ability of ink

Each of the above prepared inks was put in a closely stopped bottle and stored for one month in a dark place at room temperature and the subjected to an image forming test the same as the above-described. A samples showing not large difference after the storage of one month were ranked as A, that showing large difference as to any one of the testing item were ranked as B and that increased in the viscosity so that the image could not be printed was ranked as C. The storage stability ranked as A did not cause any problem in practical use.

### Evaluation of storage ability of cured layer

The above obtained cured layers were each stored for one month under a high temperature-high humidity condition of 85 °C and 90% RH and then subjected to the pencil stretching test and the flexibility evaluation by methods the same as the foregoing test methods. A sample showing no large difference was ranked as A, that showing some degree of deterioration but no problem was posed in practical use was ranked as B, that showing deterioration was ranked as C and that showing considerable deterioration was ranked as D. Ranks A and B were the level where any problem was not caused. Test results are listed in Table 9.

**Table 9**

| Sample No. | 27 °C·85%RH | | | | 25 °C·25%RH | | | | Cured layer | Antibending ability | Background contamination by mist | Ejection suitability of ink | Evaluation of storing ability of ink | *5 | *6 |
|---|---|---|---|---|---|---|---|---|---|---|---|---|---|---|---|
| | PVC | | UPO | FGS | PVC | | UPO | FGS | Hardness | φ:mm | | | | | |
| | *3 | *4 | *3 | *4 | *3 | *4 | *3 | *4 | | | | | | | |
| 401 | A | A | A | A | A | A | A | A | 3H | *1 | B | A | A | B | A |
| 402 | A | A | A | A | A | A | A | A | 3H | *1 | A | A | A | A | A |
| 403 | A | A | A | A | A | A | A | A | 3H | *1 | A | A | A | A | A |
| 404 | B | B | B | B | A | B | B | B | 2H | *1 | A | A | A | A | A |
| 405 | A | A | A | A | A | A | A | A | 3H | *1 | B | B | B | A | A |
| 406 | B | B | B | B | B | B | B | B | 2H | *1 | A | A | A | A | A |
| 407 | A | A | A | A | A | A | A | A | 3H | *1 | A | A | A | A | A |
| 408 | A | B | A | B | A | B | A | B | 2H | *1 | B | A | A | B | A |
| 409 | A | A | A | A | A | A | A | A | 2H | *1 | A | A | A | A | A |
| 410 | A | B | A | B | A | B | A | B | 3H | *1 | A | A | A | A | A |
| 411 | A | B | A | B | A | A | A | A | 3H | *1 | A | A | A | A | A |
| 412 | A | B | A | B | A | A | A | B | 3H | 3 mmφ | A | A | A | B | A |
| 413 | A | B | B | B | A | B | A | A | 2H | 2 mmφ | B | B | A | B | A |
| 414 | A | B | B | B | A | B | B | B | 2H | 3 mmφ | A | B | A | B | A |
| 415 | A | B | B | B | A | B | B | B | 2H | 3 nmφ | A | B | A | B | A |
| 416 | A | B | A | B | A | A | A | B | 2H | 2 nmφ | B | B | A | B | A |
| 417 | A | B | A | B | A | B | A | B | 3H | *1 | A | A | A | A | A |
| 418 | A | B | A | B | A | B | A | B | 3H | *1 | A | A | A | A | A |
| 419 | A | B | A | B | A | B | A | B | 3H | *1 | A | A | A | A | A |
| 420 | A | B | A | B | A | B | A | B | 3H | *1 | A | A | A | A | A |
| 421 | A | A | A | A | A | A | A | A | 3H | *1 | A | A | A | A | A |
| 422 | A | B | A | B | A | B | A | A | 3H | *1 | A | A | A | A | A |
| 423 | A | B | A | B | A | B | A | A | 3H | *1 | A | A | A | A | A |
| 424 | A | A | A | A | A | A | A | A | 3H | *1 | B | A | A | A | A |
| 425 | A | A | A | B | A | A | A | B | 3H | *1 | B | A | A | A | A |
| 426 | A | A | A | B | A | A | A | A | 2H | *1 | A | A | A | A | A |
| 427 | A | A | A | A | A | A | A | A | 3H | *1 | A | B | A | A | A |
| 428 | A | A | A | B | A | A | A | A | 2H | *1 | B | B | A | A | A |
| 429 | A | A | A | A | A | A | A | A | 3H | *1 | B | B | A | A | A |
| 430 | A | A | A | A | A | A | A | A | 3H | *1 | B | B | A | A | A |
| Comp.401 | C | B | B | B | B | B | B | B | HB | 7 mmφ | B | B | B | D | A |
| Comp. 402 | C | B | B | B | B | B | B | B | B | 7mmφ | B | B | B | D | A |
| Comp. 403 | D | D | D | D | C | C | C | C | 2H | *2 | B | B | B | D | A |
| Comp. 404 | C | B | B | B | B | B | B | B | H | 5 mmφ | B | B | A | C | A |
| Comp. 405 | C | B | B | B | B | B | B | B | H | 3mmφ | B | A | A | C | A |
| Comp. 406 | C | C | C | C | B | C | B | C | H | 3 mmφ | C | C | A | D | A |

| | | | | | | | | | | | | | | | |
|---|---|---|---|---|---|---|---|---|---|---|---|---|---|---|---|
| Comp.: Comparative Sample, *1: No crack was caused at 1 mmφ *2: Cracks were caused at 10 mmφ or less, *3: Character, *4: Spreading *5: Evaluation of storing ability of cured layer, *6: Evaluation of viscosity of ink | | | | | | | | | | | | | | | |

It is understood from Table 7 that the samples of the invention relating to Claims 12 to 30 have suitable ejection suitability and are improved in the image quality. It is also understood that these samples display good curing ability without environmental conditions. The samples relating to Claims 12 to 30 of the invention hold the characteristics and physical properties for a prolonged duration.

## Claims

1. A polymerizable actinic radiation curable composition containing an epoxy compound represented by the following Formula (1) and a photo-acid generating compound: 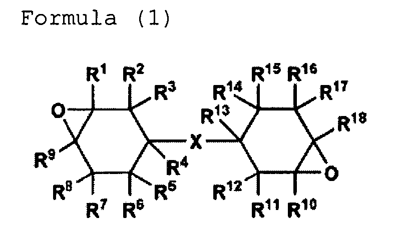 wherein, X is a di-valent group selected from the group consisting of an oxygen atom, a sulfur atom an -SO- group, an -SO₂- group, a -CBr₂- group, a -C(CBr₃)₂- group and a -C(CF₃)₂-group. R¹ to R¹⁸ may be the same or different and represent a hydrogen atom, a halogen atom or a hydrocarbon group having 1 to 8 carbon atoms which may have a oxygen atom or a halogen atom, or an alkoxy group having 1 to 8 carbon atoms which may have a substituent.

2. The polymerizable actinic radiation curable composition described in Claim 1, wherein at least one kind of epoxy compounds represented by the following Formula (2) is contained: 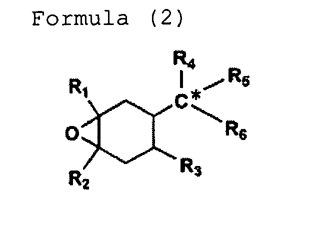 wherein, R₁ and R₂ are each a hydrogen atom or an alkyl group which may be the same or different. R₃ is a hydrogen atom, a halogen atom or a substituent. R₄, R₅ and R₆ are each a hydrogen atom, a halogen atom or a substituent bonded to the carbon atom represented by C* through a carbon atom, a nitrogen atom or a sulfur atom. Provided that at least one of R₄, R₅ and R₆ is a hydrogen atom.

3. The polymerizable actinic radiation curable composition described in Claim 1 or 2, wherein an oxetane compound is contained.

4. The polymerizable actinic radiation curable composition described in any one of Claims 1 to 3, wherein the above photo-acid generating compound is an onium salt compound.

5. The polymerizable actinic radiation curable composition described in any one of Claims 1 to 4, wherein the above photo-acid generating compound is a sulfonium salt compound.

6. The polymerizable actinic radiation curable composition described in any one of Claims 1 to 5, wherein the above photo-acid generating compound is a sulfonium salt compound represented by the following Formula (I-1): 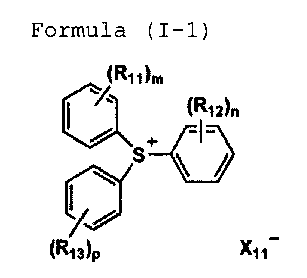 wherein, R₁₁, R₁₂ and R₁₃ are each a substituent and m, n and p are each an integer of 0 to 2. X₁₁⁻ is a counter ion.

7. An actinic radiation curable ink containing the polymerizable actinic radiation curable composition described in any one of Claims 1 to 6.

8. The actinic radiation curable ink described in Claim 7, wherein the viscosity at 25 °C is from 7 to 40 mPa·s.

9. The actinic radiation curable ink described in Claim 7 or 8, wherein a pigment is contained.

10. An image forming method for printing an image on a recording medium by imagewise ejecting the actinic radiation curable ink described in any one of Claims 7 to 9 onto the recording medium from an ink-jet recording head, wherein the actinic radiation curable ink is cured by irradiating actinic radiation at a time within 0.001 to 1.0 seconds after landing the actinic radiation curable ink onto the recording medium.

11. An image forming method for printing an image on a recording medium by imagewise ejecting the actinic radiation curable ink described in any one of Claims 7 to 9 onto the recording medium from an ink-jet recording head, wherein the minimum volume of the ink droplet ejected from each of the nozzles of the ink-jet recording head is from 2 to 15 pl.

12. A polymerizable actinic radiation curable composition containing at least one kind of compound represented by Formula (X): 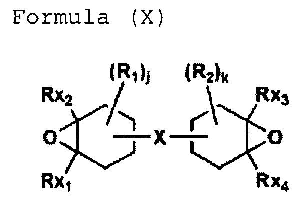 wherein, Rx₁, Rx₂, Rx₃ and R_{X4} are each a hydrogen atom or an alkyl group, R₁ and R₂ are each a substituent, X is an oxygen atom, a sulfur atom, a -CR₃(R₄)- group, an -SO- group, an -SO₂- group, a -CO- group, a -CS- group or a linking group constituted by an optional combination of them, R₃ and R₄ are each a hydrogen atom or a substituent, and j and k are each an integer of from 0 to 3. Provided that Rx₁ and Rx₂ are not hydrogen atoms at the same time and Rx₃ and Rx₄ are not hydrogen atoms at the same time.

13. The polymerizable actinic radiation curable composition described in Claim 12, wherein the viscosity at 25 °C is from 1 to 500 mPa·s.

14. The polymerizable actinic radiation curable compos ition described in Claim 12 or 13, wherein at least one oxetane compound is contained.

15. The polymerizable actinic radiation curable composition described in Claim 14, wherein the oxetane compound is an oxetane compound having no substituent at the 2-posion of the oxetane ring.

16. The polymerizable actinic radiation curable composition described in Claim 14 or 15, wherein the oxetane compound having no substituent at the 2-posion of the oxetane ring is a multi-functional oxetane compound having two or more oxetane rings.

17. The polymerizable actinic radiation curable composition described in any one of Claims 12 to 16, wherein at least one kind of epoxy compound represented the following Formula (A): 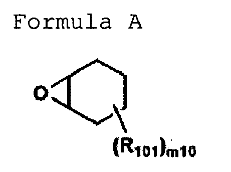 wherein, R₁₀₁ is a substituent not containing any cationic polymerizable or radical polymerizable functional group and m10 is an integer of 1, 2, 3 or 4.

18. The polymerizable actinic radiation curable composition described in Claims 12 to 17, wherein a polymerization initiator is contained.

19. The polymerizable actinic radiation curable composition described in Claim 18, wherein the polymerization initiator is a photo-acid generating compound.

20. The polymerizable actinic radiation curable composition described in Claim 19, wherein the photo-acid generating compound is an onium salt compound.

21. The polymerizable actinic radiation curable composition described in Claim 19 or 20, wherein the photo-acid generating compound is a sulfonium salt compound.

22. A polymerization method wherein the polymerizable
actinic radiation curable composition described in any one of Claims 12 to 21 is polymerized by heating or actinic radiation.

23. An actinic radiation curable ink containing the polymerizable actinic radiation curable composition described in any one of Claims 12 to 21.

24. The actinic radiation curable ink described in Claim 23, wherein the viscosity at 25 °C is from 7 to 40 mPa·s.

25. An image forming method for printing an image on a recording medium by imagewise ejecting the actinic radiation curable ink described in any one of Claim 23 or 24 onto the recording medium from an ink-jet recording head, wherein the actinic radiation curable ink is cured by irradiating actinic radiation at a time within 0.001 to 1.0 seconds after landing the actinic radiation curable ink onto the recording medium.

26. An image forming method for printing an image on a recording medium by imagewise ejecting the actinic radiation curable ink described in Claim 23 or 24 onto the recording medium from an ink-jet recording head, wherein the minimum volume of the ink droplet ejected from each of the nozzles of the ink-jet recording head is from 2 to 15 pl.

27. An ink-jet recording apparatus to be used in the image forming method described in Claim 25 or 26, wherein the ejection is carried out after heating the actinic radiation curable ink and the recording heat at a temperature of from 35 to 100 °C.

28. An ink-jet recording apparatus to be used in the image forming method described in Claim 25 or 26, wherein the recording medium can be heated at a temperature of from 35 to 60 °C on the occasion of ejection.

29. An epoxy compound represented by the following Formula (XX): 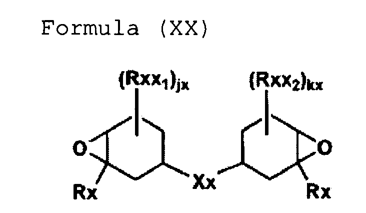 wherein, Rx, Rxx₁ and Rxx₂ are each an alkyl group, Xx is an oxygen atom or a -CRxx₃(Rxx₄)- group, Rxx₃ and Rxx₄ are each a hydrogen atom or an alkyl group, and jx and kx are each an integer of from 0 to 3.

30. An epoxy compound represented by the following Formula XX-2: 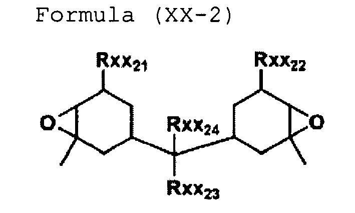 wherein, RXX₂₁ and RXX₂₂ are each a hydrogen atom or an alkyl group having 1 to 4 carbon atoms, and Rxx₂₃ and Rxx₂₄ are each a hydrogen atom or an alkyl group.
